(19) Europäisches Patentamt
European Patent Office
Office européen des brevets

(11) **EP 4 535 485 A1**

(12) **EUROPEAN PATENT APPLICATION**
published in accordance with Art. 153(4) EPC

(43) Date of publication:
**09.04.2025 Bulletin 2025/15**

(21) Application number: **23815966.9**

(22) Date of filing: **26.05.2023**

(51) International Patent Classification (IPC):
***H01M 10/0562*** *(2010.01)* ***C01B 35/12*** *(2006.01)*
***H01B 1/06*** *(2006.01)* ***H01B 13/00*** *(2006.01)*
***H01M 4/13*** *(2010.01)* ***H01M 4/36*** *(2006.01)*
***H01M 4/62*** *(2006.01)* ***H01M 10/052*** *(2010.01)*

(52) Cooperative Patent Classification (CPC):
**C01B 35/12; H01B 1/06; H01B 13/00; H01M 4/13; H01M 4/36; H01M 4/62; H01M 10/052; H01M 10/0562**

(86) International application number:
**PCT/JP2023/019713**

(87) International publication number:
**WO 2023/234209 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.06.2022 JP 2022089890**
**08.11.2022 JP 2022178871**

(71) Applicants:
- **FUJIFILM Corporation**
  **Tokyo 106-8620 (JP)**
- **Institute of Science Tokyo**
  **Tokyo 152-8550 (JP)**

(72) Inventors:
- **SHIRATORI, Yosuke**
  **Ashigarakami-gun, Kanagawa 258-8577 (JP)**
- **YASUI, Shintaro**
  **Tokyo 152-8550 (JP)**
- **OKUNO, Yukihiro**
  **Ashigarakami-gun, Kanagawa 258-8577 (JP)**
- **SAITO, Kengo**
  **Ashigarakami-gun, Kanagawa 258-8577 (JP)**
- **WATANABE, Kenta**
  **Ashigarakami-gun, Kanagawa 258-8577 (JP)**

(74) Representative: **HGF**
**HGF Limited**
**1 City Walk**
**Leeds LS11 9DX (GB)**

# (54) LITHIUM-BASED SOLID ELECTROLYTE, METHOD FOR PRODUCING LITHIUM-BASED SOLID ELECTROLYTE, MODIFIED POSITIVE ELECTRODE ACTIVE MATERIAL, MODIFIED NEGATIVE ELECTRODE ACTIVE MATERIAL, ALL-SOLID-STATE SECONDARY BATTERY, ELECTRODE SHEET FOR ALL-SOLID-STATE SECONDARY BATTERIES, SOLID ELECTROLYTE SHEET, AND ELECTRODE FOR ALL-SOLID-STATE SECONDARY BATTERIES

(57) An object of the present invention is to provide a lithium-based solid electrolyte having excellent ion conductivity, a method for producing a lithium-based solid electrolyte, a modified positive electrode active material, a modified negative electrode active material, an all-solid-state secondary battery, an electrode sheet for an all-solid-state secondary battery, a solid electrolyte sheet, and an electrode for an all-solid-state secondary battery.

The lithium-based solid electrolyte of the present invention contains amorphous lithium tetraborate, water, and a lithium salt, in which a content of the water is 45% by mass or less with respect to a total mass of the lithium-based solid electrolyte.



Processed by Luminess, 75001 PARIS (FR)

(Cont. next page)

FIG. 6

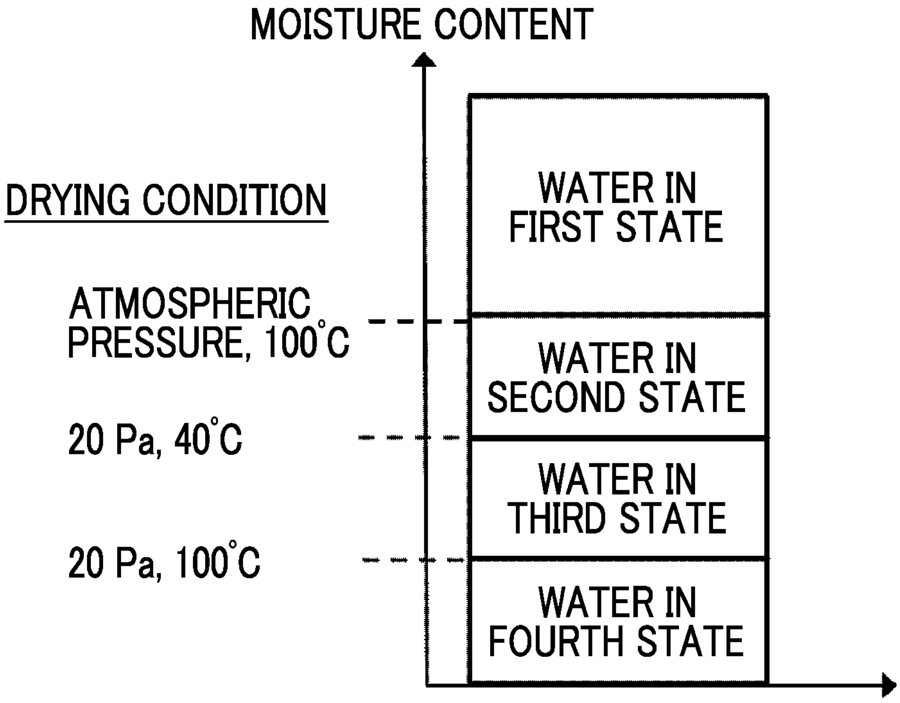
MOISTURE CONTENT
DRYING CONDITION
ATMOSPHERIC PRESSURE, 100°C
20 Pa, 40°C
20 Pa, 100°C
WATER IN FIRST STATE
WATER IN SECOND STATE
WATER IN THIRD STATE
WATER IN FOURTH STATE

## Description

## BACKGROUND OF THE INVENTION

1. Field of the Invention

The present invention relates to a lithium-based solid electrolyte, a method for producing a lithium-based solid electrolyte, a modified positive electrode active material, a modified negative electrode active material, an all-solid-state secondary battery, an electrode sheet for an all-solid-state secondary battery, a solid electrolyte sheet, and an electrode for an all-solid-state secondary battery.

2. Description of the Related Art

In the related art, a liquid electrolyte having high ion conductivity has been used in a lithium ion secondary battery. However, since the liquid electrolyte is flammable, there is a problem in safety. In addition, since the organic solvent is liquid, it is difficult to make the battery compact, and there is also a problem of limitation on capacity in a case where the battery is large.

On the other hand, an all-solid-state lithium ion secondary battery is one of the next-generation batteries which can solve these problems. In the all-solid-state battery, a solid electrolyte having favorable ion conductivity is required in order to obtain desired charging and discharging characteristics. For example, JP2018-052755A discloses a solid electrolyte based on a lithium-containing oxide, which can be used for an all-solid-state lithium ion secondary battery.

## SUMMARY OF THE INVENTION

In JP2018-052755A, it is disclosed that conductivity is approximately $10^{-5}$ $S \cdot cm^{-1}$, but in recent years, there is a demand for further improvement in conductivity.

An object of the present invention is to provide a lithium-based solid electrolyte having excellent ion conductivity.

Another object of the present invention is to provide a method for producing a lithium-based solid electrolyte, a modified positive electrode active material, a modified negative electrode active material, an all-solid-state secondary battery, an electrode sheet for an all-solid-state secondary battery, a solid electrolyte sheet, and an electrode for an all-solid-state secondary battery.

As a result of intensive studies to solve the above-described problems, the present inventors have completed the present invention having the following configurations.

[1] A lithium-based solid electrolyte comprising:

amorphous lithium tetraborate;
water; and
a lithium salt,
in which a content of the water is 45% by mass or less with respect to a total mass of the lithium-based solid electrolyte.

[2] The lithium-based solid electrolyte according to [1],
in which the lithium tetraborate has an O-H structure.

[3] The lithium-based solid electrolyte according to [1] or [2],

in which a molar ratio of a content of the lithium salt to a content of the lithium tetraborate is 0.001 to 1.5, and a molar ratio of the content of the water to the content of the lithium tetraborate is 1 to 12.

[4] The lithium-based solid electrolyte according to any one of [1] to [3],
in which the lithium salt is a compound represented by Formula (1) described later.

[5] The lithium-based solid electrolyte according to any one of [1] to [4],
in which, in a case where a cross section of a molded body obtained by pressurizing the lithium-based solid electrolyte is observed with a scanning electron microscope, a region where the lithium salt is present is in a mesh shape.

[6] A lithium-based solid electrolyte comprising:

amorphous lithium tetraborate; and
a lithium salt,

in which, in a case where a cross section of a molded body obtained by pressurizing the lithium-based solid electrolyte is observed with a scanning electron microscope, a region where the lithium salt is present is in a mesh shape.

[7] The lithium-based solid electrolyte according to [6],
in which the lithium tetraborate has a hydroxyl group.
[8] The lithium-based solid electrolyte according to [6] or [7], in which the lithium salt is a compound represented by Formula (1) described later.
[9] A method for producing the lithium-based solid electrolyte according to any one of [1] to [8], the method comprising:

a step 1 of subjecting a lithium-based oxide containing Li and B to a mechanical milling treatment;
a step 2 of mixing the product obtained in the step 1 with water; and
a step 3 of removing water from the dispersion liquid obtained in the step 2 to obtain the lithium-based solid electrolyte,
in which any one of requirements 1 to 3 described later is satisfied.

[10] The method for producing the lithium-based solid electrolyte according to [9],
in which, in the step 3, the dispersion liquid obtained in the step 2 is dried under a condition of 20 Pa or less and 40°C or lower to obtain the lithium-based solid electrolyte.
[11] The method for producing the lithium-based solid electrolyte according to [9] or [10],

in which the requirement 1 is satisfied, and
the method further includes, before the step 1, a step 0 of subjecting a lithium-based oxide containing Li and B to a mechanical milling treatment in an environment in which the lithium salt is not present.

[12] A modified positive electrode active material comprising:

a positive electrode active material; and
a coating layer disposed on the positive electrode active material,
in which the coating layer contains the lithium-based solid electrolyte according to any one of [1] to [8].

[13] A modified negative electrode active material comprising:

a negative electrode active material; and
a coating layer disposed on the positive electrode active material,
in which the coating layer contains the lithium-based solid electrolyte according to any one of [1] to [8].

[14] An all-solid-state secondary battery comprising, in the following order:

a positive electrode active material layer;
a solid electrolyte layer; and
a negative electrode active material layer,
in which at least one of the positive electrode active material layer, the solid electrolyte layer, or the negative electrode active material layer contains the lithium-based solid electrolyte according to any one of [1] to [8].

[15] An electrode sheet for an all-solid-state secondary battery, comprising:
the lithium-based solid electrolyte according to any one of [1] to [8].
[16] A solid electrolyte sheet comprising:
the lithium-based solid electrolyte according to any one of [1] to [8].
[17] An electrode for an all-solid-state secondary battery, comprising:

an active material layer containing an active material and the lithium-based solid electrolyte according to any one of [1] to [8]; and
a collector.

According to the present invention, it is possible to provide a lithium-based solid electrolyte having excellent ion conductivity.
In addition, according to the present invention, it is possible to provide a method for producing a lithium-based

solid electrolyte, a modified positive electrode active material, a modified negative electrode active material, an all-solid-state secondary battery, an electrode sheet for an all-solid-state secondary battery, a solid electrolyte sheet, and an electrode for an all-solid-state secondary battery.

## BRIEF DESCRIPTION OF THE DRAWINGS

Fig. 1 is a diagram showing an example of an X-ray diffraction pattern for describing a requirement $\alpha$.
Fig. 2 is a diagram showing an example of a reduced pair distribution function G(r) obtained by an X-ray total scattering measurement of a specific lithium tetraborate described later.
Fig. 3 is a diagram showing an example of an X-ray total scattering profile of the specific lithium tetraborate described later.
Fig. 4 is a diagram showing an example of a structural factor S(Q) based on the X-ray total scattering profile obtained in Fig. 3.
Fig. 5 is an example of a Raman spectrum for describing a requirement $\delta$.
Fig. 6 is a conceptual diagram showing a state of water contained in the lithium-based solid electrolyte according to the embodiment of the present invention.
Fig. 7 is a diagram showing an example of a spectrum obtained in a case where a solid $^{7}$Li-nuclear magnetic resonance (NMR) measurement of a first embodiment of the lithium-based solid electrolyte according to the present invention is performed at 20°C or 120°C.
Fig. 8 is a diagram showing an example of a spectrum obtained in a case where a solid $^{7}$Li-NMR measurement of a lithium tetraborate crystal is performed at 20°C or 120°C.
Fig. 9 is a diagram showing an example of a spectrum obtained in a case where the solid $^{7}$Li-NMR measurement of the first embodiment of the lithium-based solid electrolyte according to the present invention is performed at 20°C.
Fig. 10 is a diagram in a case where a peak shown in Fig. 9 is waveform-separated.
Fig. 11 shows an example of a spectrum obtained by a $^{1}$H-NMR measurement of the first embodiment of the lithium-based solid electrolyte according to the present invention.
Fig. 12 is a diagram showing an example of a Raman spectrum of the first embodiment of the lithium-based solid electrolyte according to the present invention.
Fig. 13 is a diagram showing a Raman spectrum of a general lithium tetraborate crystal.
Fig. 14 is a view showing an example of a mapping image obtained by measuring a cross section of a molded body obtained by molding a second embodiment of the lithium-based solid electrolyte according to the present invention with a scanning electron microscope-energy dispersive X-ray analysis (SEM-EDX).
Fig. 15 is a view showing an example of a calculation result of the lithium-based solid electrolyte according to the embodiment of the present invention based on a first-principles molecular dynamics method.
Fig. 16 is a cross-sectional view schematically showing an all-solid-state lithium ion secondary battery according to a preferred embodiment of the present invention.
Fig. 17 shows an example of a chart obtained by thermogravimetry differential thermal analysis (TG-DTA) of the lithium-based solid electrolyte according to the embodiment of the present invention.
Fig. 18 shows an example of a chart obtained by thermogravimetry mass spectrometry (TG-MS) of the lithium-based solid electrolyte according to the embodiment of the present invention.
Fig. 19 shows an example of a spectrum obtained by a $^{19}$F-NMR measurement of the lithium-based solid electrolyte according to the embodiment of the present invention.
Fig. 20 shows a reduced pair distribution function G(r) obtained by an X-ray total scattering measurement of crystal powder of Comparative Example 1.
Fig. 21 shows an X-ray diffraction pattern of the crystal powder of Comparative Example 1.
Fig. 22 shows an X-ray diffraction pattern of a lithium-based solid electrolyte of Example 4.

## DESCRIPTION OF THE PREFERRED EMBODIMENTS

Hereinafter, the present invention will be described in detail.
Any numerical range expressed using "to" in the present specification refers to a range including the numerical values before and after the "to" as a lower limit value and an upper limit value, respectively.
A feature point of a first embodiment of the lithium-based solid electrolyte according to the present invention is that amorphous lithium tetraborate is mixed and used with a predetermined component (a predetermined amount of water and a lithium salt). It is presumed that, in a case where the amorphous lithium tetraborate is used in combination with a predetermined component, a soft hydrated layer is easily formed on a surface of the lithium tetraborate, a large amount of

lithium derived from the lithium salt is contained in the hydrated layer, and as a result, ion conductivity is improved.

A feature point of a second embodiment of the lithium-based solid electrolyte according to the present invention is that, in a molded body obtained by pressurizing the lithium-based solid electrolyte, a region where a lithium salt is present is in a mesh shape. In the above-described molded body, it is presumed that a region where the lithium salt is present (in particular, a region where an anion of the lithium salt is present) forms a network structure surrounding lithium tetraborate particles, the region functions as an excellent ion conduction path, and as a result, the ion conductivity is improved.

Hereinafter, each embodiment of the lithium-based solid electrolyte according to the present invention will be described in detail.

<<First embodiment>>

The first embodiment of the lithium-based solid electrolyte according to the present invention (hereinafter, also referred to as "first lithium-based solid electrolyte") contains amorphous lithium tetraborate, a predetermined amount of water, and a lithium salt.

Hereinafter, each component will be described in detail.

(Amorphous lithium tetraborate)

The lithium tetraborate contained in the first lithium-based solid electrolyte is usually a compound represented by $Li_2B_4O_7$ and is mainly a compound composed of Li, B, and O, but in the present invention, it may deviate from the standard value. More specifically, the lithium tetraborate is preferably a compound represented by $Li_{2+x}B_{4+y}O_{7+z}$ ($-0.3 < x < 0.3$, $-0.3 < y < 0.3$, $-0.3 < z < 0.3$).

In addition, the lithium tetraborate contained in the first lithium-based solid electrolyte is in an amorphous state.

The lithium tetraborate in an amorphous state (hereinafter, also referred to as "specific lithium tetraborate") means lithium tetraborate satisfying the following requirement $\alpha$.

Requirement $\alpha$: in an X-ray diffraction pattern of the amorphous lithium tetraborate obtained from an X-ray diffraction measurement using a CuK$\alpha$ ray, none of a first peak in which a peak top is located in a range of 21.6° to 22.0° and a full-width at half maximum is 0.65° or less, a second peak in which a peak top is located in a range of 25.4° to 25.8° and a full-width at half maximum is 0.65° or less, a third peak in which a peak top is located in a range of 33.4° to 33.8° and a full-width at half maximum is 0.65° or less, and a fourth peak in which a peak top is located in a range of 34.4° to 34.8° and a full-width at half maximum is 0.65° or less are present; alternatively, in the X-ray diffraction pattern, in a case where at least one specific peak selected from the group consisting of the first peak, the second peak, the third peak, and the fourth peak is present, an intensity ratio of the specific peak, which is calculated by the following intensity measuring method, is 5.0 or less.

Intensity measuring method: an average intensity 1 in a range of +0.45° to +0.55° from a diffraction angle 2$\theta$ of the peak top of the specific peak is calculated and an average intensity 2 in a range of -0.55° to -0.45° from the diffraction angle 2$\theta$ of the peak top of the specific peak is calculated; an arithmetic mean value of the average intensity 1 and the average intensity 2 is calculated; and a ratio of a peak intensity at the peak top of the specific peak to the arithmetic mean value is defined as the intensity ratio.

The specific lithium tetraborate may further satisfy the following requirement $\beta$.

Requirement $\beta$: in a reduced pair distribution function G(r) of the specific lithium tetraborate obtained from an X-ray total scattering measurement, a first peak in which a peak top is located in a range where r is 1.43 $\pm$ 0.2 Å and a second peak in which a peak top is located in a range where r is 2.40 $\pm$ 0.2 Å are present, G(r) of the peak top of the first peak is more than 1.0, and G(r) of the peak top of the second peak is 0.8 or more.

The specific lithium tetraborate preferably satisfies the above-described requirement $\beta$. That is, it is preferable that the lithium tetraborate contained in the first lithium-based solid electrolyte satisfies the above-described requirement $\alpha$ and satisfies the above-described requirement $\beta$.

The specific lithium tetraborate may further separately satisfy at least one of the following requirement $\gamma$ or the following requirement $\delta$.

The specific lithium tetraborate preferably satisfies at least one of the requirement $\gamma$ or the requirement $\delta$. That is, it is more preferable that the lithium tetraborate contained in the first lithium-based solid electrolyte satisfies the above-described requirement $\alpha$, satisfies the above-described requirement $\beta$, and satisfies at least one of the requirement $\gamma$ or the requirement $\delta$.

Requirement $\gamma$: in the reduced pair distribution function G(r) of the specific lithium tetraborate obtained from an X-ray total scattering measurement, an absolute value of G(r) in a range where r is more than 5 Å and 10 Å or less is less than 1.0.

Requirement $\delta$: in a Raman spectrum of the amorphous lithium tetraborate, none of a first peak having a peak top at 710 to 730 $cm^{-1}$ and having a full-width at half maximum of 5 $cm^{-1}$ or more, a second peak having a peak top at 770 to 790

$cm^{-1}$ and having a full-width at half maximum of 5 $cm^{-1}$ or more, and a third peak having a peak top at 1,020 to 1,040 $cm^{-1}$ and having a full-width at half maximum of 5 $cm^{-1}$ or more are present; alternatively, in the Raman spectrum, in a case where at least one specific peak selected from the group consisting of the first peak, the second peak, and the third peak is present, an intensity ratio of the specific peak, which is calculated by the following intensity measuring method, is 5.0 or less.

Intensity measuring method: in the above-described Raman spectrum, a point at which a minimum value M1 of a Raman intensity in a wave number range of 400 to 600 $cm^{-1}$ is exhibited and a point at which a minimum value M2 of a Raman intensity in a wave number range of 1,300 to 1,500 $cm^{-1}$ is exhibited are connected to obtain a straight line; in a region from a wave number at which the minimum value M1 is exhibited to a wave number at which the minimum value M2 is exhibited, an average difference value between a Raman intensity of the straight line and a Raman intensity of the Raman spectrum is calculated at each wave number in a region other than regions of 710 to 730 $cm^{-1}$, 770 to 790 $cm^{-1}$, and 1,020 to 1,040 $cm^{-1}$; an absolute value of the difference between the Raman intensity of the peak at a wave number at which the peak top of the specific peak is exhibited and the Raman intensity of the straight line is calculated; and a ratio of the absolute value of the difference to the average difference value is defined as the intensity ratio.

-Requirement $\alpha$-

Hereinafter, the requirement $\alpha$ will be described.

First, in an X-ray diffraction pattern of the specific lithium tetraborate obtained from an X-ray diffraction measurement using a CuK$\alpha$ ray, the requirement $\alpha$ is satisfied in a case where none of a first peak in which a peak top is located in a range of 21.6° to 22.0° and a full-width at half maximum is 0.65° or less, a second peak in which a peak top is located in a range of 25.4° to 25.8° and a full-width at half maximum is 0.65° or less, a third peak in which a peak top is located in a range of 33.4° to 33.8° and a full-width at half maximum is 0.65° or less, and a fourth peak in which a peak top is located in a range of 34.4° to 34.8° and a full-width at half maximum is 0.65° or less are present.

The full-width at half maximum (FWHM) of the peak means a width (°) at a point of 1/2 of the intensity of the peak.

In addition, in the X-ray diffraction pattern of the specific lithium tetraborate obtained from an X-ray diffraction measurement using a CuK$\alpha$ ray, in a case where at least one specific peak selected from the group consisting of the first peak, the second peak, the third peak, and the fourth peak is present, the requirement $\alpha$ is satisfied even in a case where an intensity ratio of at least one specific peak, which is calculated according to an intensity measuring method described later, is 5.0 or less.

Hereinafter, the intensity measuring method will be described with reference to Fig. 1.

Fig. 1 is a diagram showing an example of the specific peak appearing in a diffraction pattern of the specific lithium tetraborate obtained from an X-ray diffraction measurement using a CuK$\alpha$ ray. In the diffraction pattern shown in Fig. 1, a specific peak in which an intensity of a peak top is represented by an intensity 1 is shown. In the intensity measuring method, as shown in Fig. 1, an average intensity 1 in a range of +0.45° to +0.55° from the diffraction angle 2$\theta$ of the peak top of the specific peak is calculated, and an average intensity 2 in a range of -0.55° to -0.45° from the diffraction angle 2$\theta$ of the peak top of the specific peak is calculated. Next, an arithmetic mean value of the average intensity 1 and the average intensity is calculated, and a ratio of the intensity 1 to the arithmetic mean value is obtained as the intensity ratio.

In a case where the above-described requirement $\alpha$ is satisfied, it means that a crystal structure is not present or is almost not present in the specific lithium tetraborate, and the specific lithium tetraborate is in an amorphous state.

That is, the first peak to the fourth peak described in the requirement $\alpha$ are mainly peaks derived from the crystal structure in the specific lithium tetraborate, and in a case where these peaks are not present, it is presumed that the specific lithium tetraborate is in an amorphous state without a predetermined crystal structure, and thus it is easy to form a hydrated layer having excellent ion conductivity as described above. In addition, it is presumed that the fact that the intensity ratio of any one of the existing specific peaks is equal to or smaller than a predetermined value even in a case where at least one of the first peak, the second peak, the third peak, or the fourth peak is present indicates that the specific lithium tetraborate has almost no crystal structure, and thus it is easy to form a hydrated layer having excellent ion conductivity as described above. In the specific lithium tetraborate, in addition to a peak derived from a predetermined regular structure such as the crystal structure of lithium tetraborate, a peak due to other factors may occur. Examples of the other factors include a peak derived from a regular structure in impurities, and such a peak may overlap with the above-described first peak to fourth peak. In a case where an amorphous state in which it is presumed that a hydrated layer having excellent ion conductivity can be formed is achieved, all of the first peak to the fourth peak are often decreased. Even in a case where a large peak appears as one peak due to coincidence of the peak due to other factors with any one of the first peak to the fourth peak as described above, it can be said that the presence of the specific peak in which the intensity ratio is equal to or less than the predetermined value indicates that the specific lithium tetraborate is in an amorphous state in which it is presumed that a hydrated layer having excellent ion conductivity can be formed.

The above-described X-ray diffraction measurement is performed using a CuK$\alpha$ ray under measurement conditions of 0.01 °/step and 3 °/min.

In the X-ray diffraction pattern of the specific lithium tetraborate obtained from an X-ray diffraction measurement using a CuK$\alpha$ ray in the above-described requirement $\alpha$, it is more preferable that none of the first peak, the second peak, the third peak, the fourth peak are present; or in a case where a specific peak selected from the group consisting of the first peak, the second peak, the third peak, and the fourth peak is present, the intensity ratio of at least one specific peak is more preferably 3.0 or less. Among the above, it is still more preferable that none of the first peak, the second peak, the third peak, and the fourth peak are present, or in a case where a specific peak selected from the group consisting of the first peak, the second peak, the third peak, and the fourth peak is present, the intensity ratio of at least one specific peak is still more preferably 2.0 or less.

In the above-described X-ray diffraction pattern of the requirement $\alpha$, in a case where two or more peaks in which a peak top is located in a range of 21.6° to 22.0° and the full-width at half maximum is 0.65° or less are present, a peak having the highest diffracted X-ray intensity is selected as the first peak to determine the above-described requirement $\alpha$.

In addition, in the above-described X-ray diffraction pattern of the requirement $\alpha$, in a case where two or more peaks in which a peak top is located in a range of 25.4° to 25.8° and the full-width at half maximum is 0.65° or less are present, a peak having the highest diffracted X-ray intensity is selected as the second peak to determine the above-described requirement $\alpha$.

In addition, in the above-described X-ray diffraction pattern of the requirement $\alpha$, in a case where two or more peaks in which a peak top is located in a range of 33.4° to 33.8° and the full-width at half maximum is 0.65° or less are present, a peak having the highest diffracted X-ray intensity is selected as the third peak to determine the above-described requirement $\alpha$.

In addition, in the above-described X-ray diffraction pattern of the requirement $\alpha$, in a case where two or more peaks in which a peak top is located in a range of 34.4° to 34.8° and the full-width at half maximum is 0.65° or less are present, a peak having the highest diffracted X-ray intensity is selected as the fourth peak to determine the above-described requirement $\alpha$.

-Requirement $\beta$-

The requirement $\beta$ will be described with reference to Figs. 2 to 4.

Fig. 2 shows an example of a reduced pair distribution function G(r) obtained by an X-ray total scattering measurement of the specific lithium tetraborate. A vertical axis of Fig. 2 is a reduced pair distribution function obtained by subjecting X-ray scattering to Fourier transform, and it indicates the probability that an atom is present at a position of a distance r.

The X-ray total scattering measurement is performed using SPring-8 BL04B2 (acceleration voltage: 61.4 keV, wavelength: 0.2019 Å).

The reduced pair distribution function G(r) is obtained by converting a scattering intensity I which is obtained experimentally according to the following procedure.

First, the scattering intensity $I_{obs}$ is represented by an expression (1). In addition, the structural factor S(Q) is obtained by dividing $I_{coh}$ by a product of the number of atoms N and an atomic scattering factor f.

$$I_{obs} = I_{coh} + I_{incoh} + I_{fluorescence} \quad (1)$$

$$S(Q) = \frac{I_{coh}}{Nf^2} \quad (2)$$

It is necessary to use the structural factor S(Q) for pair distribution function (PDF) analysis. In the above expression (2), a required intensity is solely the coherent scattering $I_{coh}$. The incoherent scattering $I_{incoh}$ and the X-ray fluorescence $I_{fluorescence}$ can be subtracted from the scattering intensity $I_{obs}$ by a blank measurement, subtraction using a theoretical expression, and a discriminator of a detector. Fig. 3 and Fig. 4 show examples of results of a total scattering measurement of the specific lithium tetraborate and the extracted structural factor S(Q), respectively.

The coherent scattering is represented by Debye's scattering expression (3) (N: total number of atoms, f: atomic scattering factor, $r_{ij}$: interatomic distance between i and j).

$$I_{coh} = \sum_{i=1}^{N}\sum_{j=1}^{N} f_i f_j \frac{\sin Qr_{ij}}{Qr_{ij}} \quad (3)$$

Focusing on any atom, in a case where an atomic density at the distance r is denoted by $\rho(r)$, the number of atoms present inside a sphere having a radius of r to r + d(r) is $4\pi r^2\rho(r)dr$, and thus the expression (3) is represented by an expression (4).

$$I_{coh} = Nf^2\left[1 + 4\pi\int_0^{\infty} r^2\rho(r)\frac{\sin Qr}{Qr}dr\right] \qquad (4)$$

In a case where an average density of atoms is denoted by $\rho_0$, the expression (4) is modified to obtain an expression (5).

$$\frac{I_{coh}}{N} = f^2\left[1 + 4\pi\int_0^{\infty} r^2(\rho(r) - \rho_0)\frac{\sin Qr}{Qr}\right] \qquad (5)$$

From the expression (5) and the expression (2), an expression (6) is obtained.

$$4\pi r^2\rho(r) = 4\pi r^2\rho_0 + \frac{2r}{\pi}\int_0^{\infty} Q[S(Q) - 1]\sin QrdQ) \qquad (6)$$

The pair distribution function g(r) is represented by an expression (7).

$$g(r) = \frac{\rho_r}{\rho_0} \qquad (7)$$

From the above expression (6) and the above expression (7), an expression (8) is obtained.

$$g(r) = 1 + \frac{1}{2\pi^2\rho_0 r}\int_0^{\infty} Q[S(Q) - 1]\sin QrdQ \qquad (8)$$

As described above, the pair distribution function can be determined by the Fourier transform of the structural factor S(Q). In order to easily observe medium-range and long-range order, the pair distribution function is converted into $G(r) = 4\pi r(g(r) - 1)$, which is the reduced pair distribution function (Fig. 2). The g(r) which oscillates around 0 represents a density difference from the average density at each interatomic distance, and it is larger than the average density of 1 in a case where there is a correlation at a specific interatomic distance. As a result, it reflects the distance and coordination number of elements corresponding to the local to intermediate distance. In a case where the order is lost, $\rho(r)$ approaches the average density, and thus g(r) approaches 1. Therefore, in the amorphous structure, as r is larger, the order is lost, and thus g(r) is 1, that is, G(r) is 0.

In the requirement $\beta$, as shown in Fig. 2, in the reduced pair distribution function G(r) obtained from an X-ray total scattering measurement, a first peak P1 in which a peak top is located in a range where r is 1.43 $\pm$ 0.2 Å and a second peak P2 in which a peak top is located in a range where r is 2.40 $\pm$ 0.2 Å are present, G(r) of the peak top of the first peak P1 is more than 1.0 (preferably, 1.2 or more), and G(r) of the peak top of the second peak P2 is 0.8 or more (preferably, more than 1.0).

That is, in the reduced pair distribution function G(r) of the specific lithium tetraborate obtained from the X-ray total scattering measurement, the first peak in which G(r) of a peak top (hereinafter, also referred to as "first peak top") indicates more than 1.0 and the first peak top is located in a range of 1.43 $\pm$ 0.2 Å and the second peak in which G(r) of a peak top (hereinafter, also referred to as "second peak top") indicates 0.8 or more and the second peak top is located in a range of 2.40 $\pm$ 0.2 Å are observed.

In Fig. 2, the peak top of the first peak P1 is located at 1.43 Å, and the peak top of the second peak P2 is located at 2.40 Å.

At the position near 1.43 Å, a peak attributed to the interatomic distance of boron (B) - oxygen (O) is present. In addition, at the position of near 2.40 Å, a peak attributed to the interatomic distance of boron (B) - boron (B) and to the interatomic distance of oxygen (O) - oxygen (O) is present. That is, the fact that the above-described two peaks (the first peak and the second peak) are observed means that periodic structures corresponding to the above-described two interatomic distances are present in the specific lithium tetraborate. The above-described interatomic distance of B-O

indicates a distance between B and O which are chemically bonded; the above-described interatomic distance of B-B indicates a distance between B and B which are close to each other; and the above-described interatomic distance of O-O indicates a distance between O and O which are close to each other.

It is considered that the specific lithium tetraborate satisfying the above-described requirement γ has a short-range ordered structure related to the interatomic distances of B-O, B-B, and O-O.

-Requirement γ-

Hereinafter, the above-described requirement γ will be described.

The reduced pair distribution function G(r) of the specific lithium tetraborate in the requirement γ obtained by the X-ray total scattering measurement is the same as the requirement β described above.

In the requirement γ, as shown in Fig. 2, the absolute value of G(r) in a range where r is more than 5 Å and 10 Å or less is less than 1.0 (corresponding to the broken line).

As described above, the fact that the absolute value of G(r) in a range where r is more than 5 Å and 10 Å or less is less than 1.0 means that the long-range ordered structure is hardly present in the specific lithium tetraborate. Therefore, in a case where the specific lithium tetraborate satisfies the requirement β, the specific lithium tetraborate itself exhibits elastic characteristics that is likely to be plastically deformed.

In the reduced pair distribution function G(r) of the specific lithium tetraborate obtained from the X-ray total scattering measurement, peaks other than the first peak and the second peak may be present in a range where r is 5 Å or less.

-Requirement δ-

Hereinafter, the above-described requirement δ will be described.

First, the requirement δ is satisfied in a case where, in the Raman spectrum of the specific lithium tetraborate, none of a first peak having a peak top at 710 to 730 $cm^{-1}$ and having a full-width at half maximum of 5 $cm^{-1}$ or more, a second peak having a peak top at 770 to 790 $cm^{-1}$ and having a full-width at half maximum of 5 $cm^{-1}$ or more, and a third peak having a peak top at 1,020 to 1,040 $cm^{-1}$ and having a full-width at half maximum of 5 $cm^{-1}$ or more are present.

The full-width at half maximum of the peak means a width ($cm^{-1}$) at a point of 1/2 of the height of the peak.

In addition, the requirement T is also satisfied in a case where at least one specific peak selected from the group consisting of the first peak, the second peak, and the third peak is present in the Raman spectrum of the specific lithium tetraborate, an intensity ratio of at least the one of the specific peak, which is calculated according to the intensity measuring method, is 5.0 or less. Among the above, it is preferable that the above-described intensity ratio is satisfied regarding all of the specific peaks.

Hereinafter, the intensity measuring method will be described with reference to Fig. 5.

Fig. 5 is a diagram showing an example of the Raman spectrum of the specific lithium tetraborate, in which a vertical axis is a Raman intensity and a horizontal axis is a Raman shift. In Fig. 5, an example in which one specific peak is present is shown in order to simplify the explanation.

In the intensity measuring method, first, a point at which the minimum value M1 of the Raman intensity of the specific lithium tetraborate in a wave number range of 400 to 600 $cm^{-1}$ of the Raman spectrum is exhibited and a point at which the minimum value M2 of the Raman intensity in a wave number range of 1,300 to 1,500 $cm^{-1}$ of the Raman spectrum is exhibited are connected to obtain a straight line. Specifically, as shown in Fig. 5, a point P1 at which the minimum value M1 is exhibited and a point P2 at which the minimum value M2 is exhibited are connected to obtain a straight line indicated by a broken line.

Next, in a region from a wave number (W1 in Fig. 5) at which the minimum value M1 is exhibited to a wave number (W2 in Fig. 5) at which the minimum value M2 is exhibited, an average difference value between a Raman intensity of the straight line and a Raman intensity of the Raman spectrum is calculated at each wave number in a region other than regions of 710 to 730 $cm^{-1}$, 770 to 790 $cm^{-1}$, and 1,020 to 1,040 $cm^{-1}$ (hereinafter, also referred to as "specific region"). The average difference value is obtained by calculating the absolute value of the difference between the Raman intensity of the straight line and the Raman intensity of the Raman spectrum for every wave number of 2 $cm^{-1}$ from W1 to W2 in the specific region, and taking the arithmetic mean of this absolute value of the difference.

Next, the absolute value of the difference between the Raman intensity of the peak at a wave number at which the peak top of the specific peak is exhibited and the Raman intensity of the straight line is calculated, and the ratio of the absolute value of the difference to the average difference value is calculated as the intensity ratio. More specifically, as shown in Fig. 5, the absolute value (|S1 - S2|) of the difference between a Raman intensity S1 of a peak at a wave number W3 at which the peak top of the peak is exhibited and a Raman intensity S2 of the straight line at a wave number W3 is calculated, and examination is performed on whether or not the obtained absolute value of the difference corresponds to 5.0 times or less with respect to the above-described average difference value.

In a case where the above-described requirement δ is satisfied, it means that a crystal structure is not present or is almost not present in the specific lithium tetraborate, and the specific lithium tetraborate is in an amorphous state.

That is, the first peak to the third peak described in the requirement δ are mainly peaks derived from the crystal structure in the specific lithium tetraborate, and in a case where these peaks are not present, it is presumed that the specific lithium tetraborate is in an amorphous state without a predetermined crystal structure, and thus it is easy to form a hydrated layer having excellent ion conductivity as described above. In addition, it is presumed that the fact that the intensity ratio of any one of the existing specific peaks is equal to or smaller than a predetermined value even in a case where at least one of the first peak, the second peak, or the third peak is present indicates that the specific lithium tetraborate has almost no crystal structure, and thus it is easy to form a hydrated layer having excellent ion conductivity as described above. In the specific lithium tetraborate, in addition to a peak derived from a predetermined regular structure such as the crystal structure of lithium tetraborate, a peak due to other factors may occur. Examples of the other factors include a peak derived from a regular structure in impurities, and such a peak may overlap with the above-described first peak to third peak. In a case where an amorphous state in which it is presumed that a hydrated layer having excellent ion conductivity can be formed is achieved, all of the first peak to the third peak are often decreased. Even in a case where a large peak appears as one peak due to coincidence of the peak due to other factors with any one of the first peak to the third peak as described above, it can be said that the presence of the specific peak in which the intensity ratio is equal to or less than the predetermined value indicates that the specific lithium tetraborate is in an amorphous state in which it is presumed that a hydrated layer having excellent ion conductivity can be formed.

In the above-described Raman spectrum of the specific lithium tetraborate, it is more preferable that none of the first peak, the second peak, and the third peak are present, or in a case where a specific peak selected from the group consisting of the first peak, the second peak, and the third peak is present, the intensity ratio of at least one specific peak is more preferably 3.0 or less. Among the above, it is still more preferable that none of the first peak, the second peak, and the third peak are present, or in a case where a specific peak selected from the group consisting of the first peak, the second peak, and the third peak is present, the intensity ratio of at least one specific peak is still more preferably 2.0 or less. In addition, it is particularly preferable that none of the first peak, the second peak, and the third peak are present.

Raman imaging is performed as the measuring method of the Raman spectrum. The Raman imaging is a microscopic spectroscopy method which combines Raman spectroscopy with a microscopic technique. Specifically, the Raman imaging is a method of scanning a sample with excitation light to detect measurement light including Raman scattered light, and then visualizing distribution or the like of components based on the intensity of the measurement light.

The measurement conditions for the Raman imaging are as follows: an environment of atmospheric air of 27°C, an excitation light of 532 nm, an objective lens of 100 magnifications, a point scanning according to the mapping method, a step of 1 μm, an exposure time per point of 1 second, the number of times of integration of 1, and a measurement range of a range of 70 μm × 50 μm. However, the measurement range may be narrower depending on a film thickness of the sample.

In addition, the Raman spectrum data is subjected to a principal component analysis (PCA) processing to remove noise. Specifically, in the principal component analysis processing, the spectrum is recombined using components having an autocorrelation coefficient of 0.6 or more.

A bulk elastic modulus of the specific lithium tetraborate is not particularly limited, but from the viewpoint that the effect of the present invention is more excellent, it is preferably 45 GPa or less and more preferably 40 GPa or less. The lower limit thereof is not particularly limited, but is preferably 5 GPa or more.

The bulk elastic modulus is measured according to a ultrasonic attenuation method.

Specifically, first, a suspension in which the specific lithium tetraborate is suspended in pure water is produced. A content of the specific lithium tetraborate in the suspension is 1.2% by mass with respect to the total mass of the suspension. Next, the ultrasonic attenuation spectrum of the above-described suspension is measured, and the bulk elastic modulus of the specific lithium tetraborate is determined from the fitting according to the scattering attenuation theoretical expression. In a case of performing the above-described fitting, the particle size distribution, the density (2.3 g/ml), and the Poisson's ratio (0.12) of the specific lithium tetraborate are used.

Regarding the fitting according to the above-described scattering attenuation theoretical expression, the bulk elastic modulus is calculated by using the expressions (7), (12), and (13) described in Kohjiro Kubo et al., Ultrasonics 62 (2015), pp. 186 to 194.

In addition, the particle image of the specific lithium tetraborate is acquired by a flow-type particle image analysis method, and a histogram (particle size distribution) of the particle diameter of the specific lithium tetraborate is obtained. The above-described particle size corresponds to a circle-equivalent diameter.

A median diameter (D50) of the specific lithium tetraborate is not particularly limited, but from the viewpoint that the effect of the present invention is more excellent, it is preferably 0.01 to 20 μm and more preferably 0.1 to 2.0 μm.

The above-described median diameter (D50) is measured by acquiring a particle image by a flow-type particle image analysis method, calculating a particle size distribution of the specific lithium tetraborate, and analyzing the obtained distribution. The above-described particle size corresponds to a circle-equivalent diameter.

In order to further improve the effect of the present invention, it is preferable that the specific lithium tetraborate

has an oxygen (O)-hydrogen (H) structure. The O-H structure is present as a hydroxyl group or a partial structure of a water molecule.

It is considered that the specific lithium tetraborate in an amorphous state maintains a $BO_3$-$BO_4$ linking structure (diborate structure) as shown in the following structural formula, from the measurement result of total X-ray scattering. Therefore, in a case where the specific lithium tetraborate has a hydroxyl group, it is presumed that the hydroxyl group is bonded to any boron atom placed around the following structural formula to form a partial structure "B-OH". In addition, it is also presumed that water molecules are present in the hydrated layer formed on a particle interface of the specific lithium tetraborate. It is presumed that the O-H structure improves the conductivity of Li ions.

The fact that the specific lithium tetraborate has an O-H structure can be confirmed by measuring an infrared absorption spectrum of the first lithium-based solid electrolyte, as will be described later.

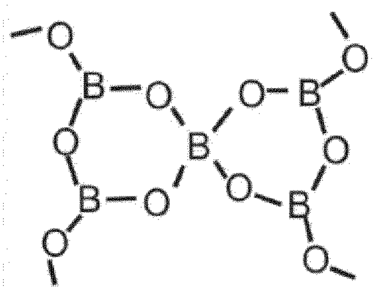

A content of the specific lithium tetraborate in the first lithium-based solid electrolyte is not particularly limited, but is, for example, 80% by mass or less, preferably 45% by mass or less, more preferably 40% by mass or less, still more preferably 35% by mass or less, particularly preferably 30% by mass or less, and most preferably 25% by mass or less with respect to the total mass of the first lithium-based solid electrolyte. In addition, the lower limit value of the content of the specific lithium tetraborate is not particularly limited, but is preferably 5% by mass or more, more preferably 10% by mass or more, still more preferably 15% by mass or more, and particularly preferably 20% by mass or more with respect to the total mass of the lithium-based solid electrolyte.

Although a method for producing the specific lithium tetraborate will be described in detail later, it is preferable that the specific lithium tetraborate is produced by a production method accompanied by a mechanical milling treatment. Examples of the mechanical milling treatment performed on the lithium tetraborate include a mechanical milling treatment performed in a step 1A described later, the details of which will be described later.

It is presumed that, in a case where the lithium tetraborate is subjected to a mechanical milling treatment, the lithium tetraborate can be non-crystalized, and as a result, a hydrated layer having excellent ion conductivity is easily formed.

(Water)

The first lithium-based solid electrolyte contains water.

In addition, the content of the water in the first lithium-based solid electrolyte is 45% by mass or less with respect to the total mass of the lithium-based solid electrolyte. The first lithium-based solid electrolyte containing water at the above-described content is in a solid state, and ions can be moved therein. In addition, it is presumed that, in the first lithium-based solid electrolyte containing water at the above-described content, Li ions and the like are movable, and a hydrated layer which functions as an ion conduction path is formed, whereby excellent ion conductivity is obtained.

In addition, it is presumed that, in a case where the first lithium-based solid electrolyte contains water having high polarity, the water and the lithium salt interact with each other, and Li and an anion are easily dissociated, which improves the conductivity of Li ions. A part of the water may be dissociated and bonded to the surroundings in a form of a hydroxyl group.

The content of the water in the first lithium-based solid electrolyte is preferably 40% by mass or less, more preferably 35% by mass or less, still more preferably 30% by mass or less, and particularly preferably 25% by mass or less with respect to the total mass of the lithium-based solid electrolyte. In addition, the lower limit value of the content of the water is not particularly limited, but is preferably 5% by mass or more, more preferably 10% by mass or more, still more preferably 15% by mass or more, and particularly preferably 20% by mass or more with respect to the total mass of the lithium-based solid electrolyte.

In addition, from the viewpoint that the effect of the present invention is more excellent, a molar ratio of the water to the specific lithium tetraborate (molar amount of water/molar amount of specific lithium tetraborate) in the first lithium-based solid electrolyte is preferably 1 to 12 and more preferably 1 to 10. In some cases, the above-described molar ratio of the water to the specific lithium tetraborate is more preferably 2 to 12. The above-described molar ratio of the water to the

specific lithium tetraborate is still more preferably 2 to 10, even more preferably 2 to 8, particularly preferably 2 to 7, and most preferably 3 to 7.

The content and the molar amount of the water in the first lithium-based solid electrolyte can be determined using a known method. For example, as will be described later, the content of various elements in the first lithium-based solid electrolyte can be specified by a method of element analysis described later, and the content and the molar amount of the water can be determined from a structure of the compound used.

The state of the water contained in the first lithium-based solid electrolyte will be described. The water contained in the first lithium-based solid electrolyte can be classified as follows, depending on whether or not the water is eliminated (vaporized) from the first lithium-based solid electrolyte in a case where the first lithium-based solid electrolyte is dried under predetermined conditions, as shown in a conceptual diagram of Fig. 6.

Water in first state: vaporized in a case of being dried under a condition (first condition) of atmospheric pressure and 100°C

Water in second state: not vaporized under the first condition of drying, but vaporized in a case of being dried under a condition (second condition) of 20 Pa and 40°C

Water in third state: not vaporized under the first condition and second condition of drying, but vaporized in a case of being dried under a condition (third condition) of 20 Pa and 100°C

Water in fourth state: not vaporized under any of the first condition to third condition of drying

The elimination from the first lithium-based solid electrolyte also includes a case in which the water is eliminated from the first lithium-based solid electrolyte in a case where the water is constrained from the surroundings and the constraint condition is loosened.

In a case where the first lithium-based solid electrolyte is used in a battery, from the viewpoint of battery characteristics, it is preferable that the first lithium-based solid electrolyte does not contain the water in the first state and the water in the second state described above. In a case where a molded body obtained by pressurizing the first lithium-based solid electrolyte is used in a battery, the molded body may contain the water in the second state.

In addition, in a case where the first lithium-based solid electrolyte is used in a battery, from the viewpoint that both the ion conductivity and the cycle characteristics are excellent in a well-balanced manner, it is preferable that the first lithium-based solid electrolyte contains the water in the third state.

(Lithium salt)

The first lithium-based solid electrolyte contains a lithium salt.

The type of the lithium salt is not particularly limited, and examples thereof include a lithium salt exemplified in a step 1A described later, the details of which will be described later.

A content of the lithium salt in the first lithium-based solid electrolyte is not particularly limited.

In the first lithium-based solid electrolyte, a mass ratio of the content of the lithium salt to the content of the specific lithium tetraborate (content of lithium salt/content of specific lithium tetraborate) is not particularly limited. Among these, in the first lithium-based solid electrolyte, from the viewpoint that the effect of the present invention is more excellent, a molar ratio of the lithium salt to the specific lithium tetraborate (molar amount of lithium salt/molar amount of specific lithium tetraborate) is preferably 0.001 to 1.5, more preferably 0.001 to 1.2, still more preferably 0.01 to 1.2, even more preferably 0.1 to 1.2, particularly preferably 0.3 to 1.2, extremely preferably 0.5 to 1.2, and most preferably 0.5 to 1.0.

Since the first lithium-based solid electrolyte contains the specific lithium tetraborate, the first lithium-based solid electrolyte contains elements of Li, B, and O.

In addition, the first lithium-based solid electrolyte preferably further contains one or more specific elements selected from the group consisting of an element of Group 4 of the periodic table, an element of Group 15 of the periodic table, an element of Group 16 of the periodic table, an element of Group 17 of the periodic table, Si, C, Sc, and Y; and more preferably further contains two or more specific elements. In addition, from the viewpoint that the effect of the present invention is more excellent, it is preferable that the first lithium-based solid electrolyte contains one or more (more preferably two or more) specific elements selected from the group consisting of F, Cl, Br, I, S, P, Si, Se, Te, C, Sb, As, Sc, Y, Zr, Ti, Hf, and N.

Examples of the element of Group 4 of the periodic table include Ti, Zr, Hr, and Rf.

Examples of the element of Group 15 of the periodic table include N, P, As, Sb, Bi, and Mc.

Examples of the element of Group 16 of the periodic table S, Se, Te, Po, and Lv.

Examples of the element of Group 17 of the periodic table include F, Cl, Br, I, At, and Ts.

The specific element contained in the first lithium-based solid electrolyte may be three or more kinds. Among these, from the viewpoint that the effect of the present invention is more excellent, the number of kinds of the specific elements contained in the lithium-based solid electrolyte is preferably 2 or more, more preferably 2 to 5, and still more

preferably 2 to 4.

The first lithium-based solid electrolyte preferably contains two or more specific elements selected from the group consisting of F, S, N, P, C, Cl, and I; more preferably contains two or more specific elements selected from the group consisting of F, S, C, and N; and still more preferably contains three specific elements of F, S, and N.

The above-described specific element is often, for example, derived from an element contained in the lithium salt.

In the first lithium-based solid electrolyte, in a case where a molar amount of Li in the lithium-based solid electrolyte is represented by setting the molar amount of B to 4.00, the molar amount of Li is preferably 1.58 to 3.49. That is, in a case where the molar content amount of B is set to 4.00, the relative value of the molar content amount of Li is preferably 1.58 to 3.49.

Among these, from the viewpoint that the effect of the present invention is more excellent, in a case where the molar amount of Li in the lithium-based solid electrolyte is represented by setting the molar amount of B to 4.00, the molar amount of Li is more preferably 1.58 to 3.00, still more preferably 1.90 to 3.00, even more preferably 2.00 to 3.00, particularly preferably 2.30 to 3.00, and most preferably 2.50 to 3.00.

In the first lithium-based solid electrolyte, in a case where a molar amount of O in the lithium-based solid electrolyte is represented by setting the molar amount of B to 4.00, the molar amount of O is preferably 6.23 to 25.00. That is, in a case where the molar content amount of B is set to 4.00, the relative value of the molar content amount of O is preferably 6.23 to 25.00.

Among these, from the viewpoint that the effect of the present invention is more excellent, in a case where the molar amount of O in the lithium-based solid electrolyte is represented by setting the molar amount of B to 4.00, the molar amount of O is more preferably 8.00 to 23.00, still more preferably 10.00 to 23.00, and particularly preferably 10.00 to 17.00.

In the first lithium-based solid electrolyte, in a case where a molar amount of the specific elements in the lithium-based solid electrolyte is represented by setting the molar amount of B to 4.00, each molar amount of the specific elements is preferably 0.001 to 10.00. That is, in a case where the molar content amount of B is set to 4.00, the relative value of each molar content amount of the specific elements is preferably 0.001 to 10.00.

Among these, from the viewpoint that the effect of the present invention is more excellent, in a case where each molar amount of the specific elements in the lithium-based solid electrolyte is represented by setting the molar amount of B to 4.00, each molar amount of the specific elements is more preferably 0.001 to 6.0, still more preferably 0.01 to 5.0, even more preferably 0.01 to 4.0, particularly preferably 0.01 to 3.0, and most preferably 0.01 to 2.0.

As described above, it is preferable that the first lithium-based solid electrolyte contains two or more specific elements. Therefore, for example, in a case where the first lithium-based solid electrolyte contains two specific elements of a specific element A and a specific element B which is an element different from the specific element A, assuming that the molar amount of B in the lithium-based solid electrolyte is 4.00, each of the molar amount of the specific element A and the molar amount of the specific element B is 0.001 to 10.00. In addition, for example, in a case where the first lithium-based solid electrolyte contains three specific elements of a specific element A, a specific element B which is an element different from the specific element A, and a specific element C which is an element different from the specific elements A and B, assuming that the molar amount of B in the lithium-based solid electrolyte is 4.00, each of the molar amount of the specific element A, the molar amount of the specific element B, and the molar amount of the specific element C is 0.001 to 10.00.

The molar ratio and content of each component in the first lithium-based solid electrolyte can be determined by a known method. For example, the content of various elements in the first lithium-based solid electrolyte can be specified, and the molar ratio and content of the various elements can be determined from a structure of the compound used. As a method of the element analysis, for example, Na and B are analyzed by inductively coupled plasma optical emission spectrometry (ICP-OES); N and the like are analyzed by an inert gas melting method; and F and S are analyzed by combustion ion chromatography. Regarding O, analyzed masses of elements other than O are added together, and the content of O can be calculated as a difference between the analyzed masses and the total amount of the powder. The method of calculating the content of each element is not limited to those described above, and from an analysis result of a content of one kind of element, a content of another element may be estimated in consideration of the structure of the compound to be used.

(Characteristics of lithium-based solid electrolyte)

· TG-MS measurement

From the viewpoint that the effect of the present invention is more excellent, in a case where the molded body obtained by pressurizing the first lithium-based solid electrolyte is subjected to thermogravimetry mass spectrometry (TG-MS), it is preferable that a component having a molecular weight of 18 is detected in a temperature range of higher than 100°C, and it is more preferable that a component having a molecular weight of 18 is more detected in a temperature range of higher than 120°C.

As a result of TG-MS for the molded body of the lithium-based solid electrolyte, in a case where a component having a molecular weight of 18 is detected in a temperature range of higher than 100°C, it is presumed that water (particularly, the water in the third state and in the fourth state described above) is present in the lithium-based solid electrolyte. It is considered that water (in particular, the water in the third state and in the fourth state described above) present in the lithium-based solid electrolyte contributes to the ion conductivity.

A method of measuring TG-MS of the molded body of the lithium-based solid electrolyte will be described in detail in Examples later.

· $^{7}$Li-NMR measurement

From the viewpoint that the effect of the present invention is more excellent, a proportion of a full-width at half maximum of a peak in which a chemical shift appeared in a range of -100 to +100 ppm in a spectrum obtained in a case where the solid $^{7}$Li-NMR measurement of the first lithium-based solid electrolyte is performed at 120°C with respect to a full-width at half maximum of a peak in which a chemical shift appeared in a range of -100 to +100 ppm in a spectrum obtained in a case where the solid $^{7}$Li-NMR measurement of the first lithium-based solid electrolyte is performed at 20°C is preferably 50% or less, more preferably 40% or less, and still more preferably 35% or less. The lower limit thereof is not particularly limited, but is usually 10% or more.

The full-width at half maximum (FWHM) of the peak means a width (ppm) at a point (H/2) of 1/2 of a height (H) of the peak.

Hereinafter, the above-described characteristic will be described with reference to Fig. 7.

Fig. 7 shows an example of the spectrum obtained in a case where the solid $^{7}$Li-NMR measurement of the first lithium-based solid electrolyte is performed at 20°C or 120°C.

The spectrum shown on the lower side by the solid line in Fig. 7 is a spectrum obtained in a case where the solid $^{7}$Li-NMR measurement is performed at 20°C; and the spectrum shown on the upper side by the broken line in Fig. 7 is a spectrum obtained in a case where the solid $^{7}$Li-NMR measurement is performed at 120°C.

Generally, in the solid $^{7}$Li-NMR measurement, in a case where mobility of $Li^+$ is high, the peak to be obtained is a sharper peak. In the aspect shown in Fig. 7, in a case where the spectrum at 20°C and the spectrum at 120°C are compared, the spectrum at 120°C is sharper. That is, it is shown that the mobility of $Li^+$ is high in the lithium-based solid electrolyte shown in Fig. 7. It is conceived that such a lithium-based solid electrolyte is excellent in the effect of the present invention because the lithium-based solid electrolyte is likely to be plastically deformed due to the amorphous structure, and thus has excellent hopping property of $Li^+$.

For example, in a case where lithium tetraborate crystal is subjected to the solid $^{7}$Li-NMR measurement at 20°C or 120°C, the spectrum measured at 20°C shown by the solid line, shown on the lower side of Fig. 8, and the spectrum measured at 120°C shown by the broken line, shown on the upper side of Fig. 8, tends to have substantially the same shape.

Conditions for the above-described solid $^{7}$Li-NMR measurement are as follows.

Specifically, the measurement is performed by a single pulse method using a 4 mm HX CP-MAS probe, 90° pulse width: 3.2 μs, observation frequency: 155.546 MHz, observation width: 1397.6 ppm, repetition time: 15 sec, integration: 1 time, and MAS rotation speed: 0 Hz.

In addition, from the viewpoint that the effect of the present invention is more excellent, in a case where a first peak appearing in a range of -100 to +100 ppm in the spectrum obtained in a case where the solid $^{7}$Li-NMR measurement of the first lithium-based solid electrolyte is performed at 20°C is waveform-separated, it is preferable that a second peak having a full-width at half maximum of 5 ppm or less appears in a range with a chemical shift of -3 to 3 ppm, and a proportion of an area intensity of the second peak to an area intensity of the first peak is 0.5% or more. The above-described proportion of the area intensity is more preferably 2% or more, and still more preferably 15% or more. The upper limit of the above-described proportion of the area intensity is not particularly limited, but is usually 50% or less.

Hereinafter, the above-described characteristic will be described with reference to Figs. 9 and 10.

Fig. 9 shows an example of the spectrum obtained in a case where the solid $^{7}$Li-NMR measurement of the first lithium-based solid electrolyte is performed at 20°C. As shown in Fig. 9, in the first lithium-based solid electrolyte, a peak (corresponding to the first peak) is observed in a range of -100 to +100 ppm, and a small peak is observed in the vicinity of a chemical shift of 0 ppm, as shown by the broken line at the first peak. As described above, it is considered to be affected the fact that a sharp peak is observed in a case where the mobility of $Li^+$ is high.

Next, Fig. 10 shows a diagram in a case where the first peak is waveform-separated. As shown in Fig. 10, the first peak is waveform-separated into a small peak (corresponding to the second peak) represented by the solid line, and a large peak represented by the broken line. The above-described second peak is a peak which appears in a range with a chemical shift of -3 to 3 ppm, and has a full-width at half maximum of 5 ppm or less.

In the first lithium-based solid electrolyte, the proportion of the area intensity of the second peak shown by the solid line in Fig. 10 to the area intensity of the first peak (peak before the waveform separation) shown in Fig. 9 {(Area

intensity of second peak/Area intensity of first peak) × 100} is within the above-described range.

Examples of the method of waveform separation include a method using a known software, and examples of the software include Igor Pro, which is graph processing software manufactured by WaveMetrics, Inc.

· $^1H$-NMR measurement

From the viewpoint that the effect of the present invention is more excellent, it is preferable that both a sharp peak and a broad peak appear in a range of a chemical shift of -200 to +200 ppm in a spectrum obtained by $^1H$-NMR measurement of the first lithium-based solid electrolyte. The "sharp peak" means a peak having a full-width at half maximum of 50 ppm or less, and the "broad peak" means a peak having a full-width at half maximum of 50 ppm or more.

Hereinafter, the above-described characteristic will be described with reference to Fig. 11.

Fig. 11 shows an example of the spectrum obtained in a case where the $^1H$-NMR of the first lithium-based solid electrolyte is measured at 20°C.

In general, in the $^1H$-NMR measurement, a sharper peak is obtained in a case where the mobility of hydrogen atoms is high. In the spectrum shown in Fig. 11, a peak in which a sharp peak and a broad peak are combined appears. That is, in the lithium-based solid electrolyte shown in Fig. 11, it is shown that there are hydrogen atoms having relatively high mobility corresponding to the sharp peak and hydrogen atoms having relatively low mobility corresponding to the broad peak. It is presumed that the hydrogen atoms having relatively high mobility, which are contained in such a lithium-based solid electrolyte, are contained in the above-described hydrated layer, and related to the conduction of lithium ions.

For example, in a case where the $^1H$-NMR measurement is performed at 20°C for a lithium tetraborate crystal, a sharp peak does not appear in a range of a chemical shift of -200 to +200 ppm, and only a broad peak is likely to appear.

Conditions for the above-described $^1H$-NMR measurement are as follows.

Specifically, the measurement is performed by a composite pulse method using a 4 mm HX CP-MAS probe, measurement temperature: 20°C, 90° pulse width: 2.5 μs, observation frequency: 400.23092 MHz, observation width: 694.043 ppm, repetition time: 20 sec, integration: 16 times, and MAS rotation speed: 0 Hz.

· $^{19}F$-NMR measurement

From the viewpoint that the effect of the present invention is more excellent, in a case where the lithium salt contains a fluorine atom, it is preferable that a sharp peak having a full-width at half maximum of 20 ppm or less appears in a range where a chemical shift is -200 to +300 ppm in a spectrum obtained by $^{19}F$-NMR measurement of the first lithium-based solid electrolyte.

It is considered that the lithium salt or the anion of the lithium salt contributes to the ion conductivity, but in the lithium-based solid electrolyte in which a sharp peak appears in the above-described range, it is suggested that the mobility of the lithium salt or the anion of the lithium salt is relatively high.

Conditions for the above-described $^{19}F$-NMR measurement are as follows.

Specifically, the measurement is performed by a single pulse method using a 4 mm HXCP-MAS probe, 90° pulse width: 3.5 μs, observation frequency: 376.59246 MHz, observation width: 603.497 ppm, repetition time: 10 sec, integration: 1 time, and MAS rotation speed: 0 Hz.

· TG-DTA measurement

From the viewpoint that the effect of the present invention is more excellent, a mass reduction rate in a case where the first lithium-based solid electrolyte is heated to 800°C is preferably 20% to 40% by mass. Among the above, from the viewpoint that the effect of the present invention is more excellent, the mass reduction rate is more preferably 25% to 35% by mass.

It is considered that the mass reduction of the first lithium-based solid electrolyte during the above-described heating is due to removal of a part of moisture contained in the lithium-based solid electrolyte. The fact that a predetermined amount of the mass reduction rate is exhibited as described above indicates that the lithium-based solid electrolyte contains a predetermined amount of moisture, and it is conceived that the presence of such moisture with the predetermined amount improves the conductivity of lithium ions.

In the above-described heating treatment, the heating is performed at a temperature rising rate of 20 °C/sec in a range of 25°C to 800°C. A known thermogravimetry differential thermal analysis (TG-DTA) device can be used for measuring the mass reduction rate.

The above-described mass reduction rate is calculated by {(Mass at 25°C - Mass at 800°C)/Mass at 25°C} × 100.

In addition, in order to perform the above-described heating treatment, the first lithium-based solid electrolyte is vacuum-dried at 40°C for 2 hours, and then the measurement is performed in the air.

· Ion conductivity

From the viewpoint that the effect of the present invention is more excellent, the ion conductivity of the molded body obtained by pressurizing the first lithium-based solid electrolyte at -10°C is preferably $1 \times 10^{-5}$ S/cm or more, and more preferably $1 \times 10^{-4}$ S/cm or more. The upper limit thereof is not particularly limited, but is usually $1 \times 10^{-3}$ S/cm or less.
In a case where the molded body of the lithium-based solid electrolyte exhibits the ion conductivity in the above-described range under the temperature condition of -10°C, it is suggested that a substance contributing to the ion conductivity is present in the lithium-based solid electrolyte, in addition to the water in the first state and in the second state described above, and a favorable ion conduction path is formed. It is considered that such a lithium-based solid electrolyte also has excellent ion conductivity at room temperature (27°C).
A method of measuring the ion conductivity of the molded body obtained by pressurizing the lithium-based solid electrolyte at -10°C will be described in detail in Examples later.

· SEM-EDX analysis

In the first lithium-based solid electrolyte, from the viewpoint that the effect of the present invention is more excellent, it is preferable that, in a case where a cross section of the molded body obtained by pressurizing the first lithium-based solid electrolyte is observed with a scanning electron microscope (SEM), a region where the lithium salt is present is in a mesh shape.
The above-described characteristic and a measuring method will be described in detail in a second embodiment later.

· Infrared absorption spectrum

From the viewpoint that the effect of the present invention is more excellent, in an infrared absorption spectrum of the first lithium-based solid electrolyte, a ratio of the maximum absorption intensity in a wave number range of 3,000 to 3,500 $cm^{-1}$ to the maximum absorption intensity in a wave number range of 800 to 1,600 $cm^{-1}$ is preferably 1/5 or more. Among the above, from the viewpoint that the effect of the present invention is still more excellent, the above-described ratio is preferably 3/10 or more and more preferably 2/5 or more. The upper limit thereof is not particularly limited, but is preferably 1 or less.
In the infrared absorption spectrum, an O-H stretching vibration mode is observed in a wave number range of 3,000 to 3,500 $cm^{-1}$, and a B-O stretching vibration mode is observed in a wave number range of 800 to 1,600 $cm^{-1}$. The absorption intensity derived from the above-described O-H stretching vibration mode is derived from a hydroxyl group or water contained in the lithium-based solid electrolyte; and in particular, in the first lithium-based solid electrolyte, in a case where the absorption intensity derived from the above-described O-H stretching vibration mode is strongly observed, it is considered that the specific lithium tetraborate contained in the first lithium-based solid electrolyte has a large number of O-H structures. It is conceived that, in such a lithium-based solid electrolyte, lithium ions easily migrate, and as a result, the ion conductivity is improved.
In the wave number range of 800 to 1,600 $cm^{-1}$, a vibration mode derived from the lithium salt can also be observed.
Measurement conditions for the above-described infrared absorption spectrum are as follows.
Specifically, the measurement is performed using objective lens: Cassegrain type (NA: 0.65) of 32 magnifications, detector: MCT-A, measurement range: 650 to 4,000 $cm^{-1}$, resolution: 4 $cm^{-1}$, and sample cell: diamond cell.
The obtained infrared absorption spectrum is subjected to correction for removing signals derived from water and $CO_2$ in the air, and the background is further subjected to offset-correction to set the absorption intensity to 0.
In addition, in a case of measuring the infrared absorption spectrum of the first lithium-based solid electrolyte, the measurement is performed in the air, after being vacuum-dried at 40°C for 2 hours.

· Raman spectrum

In addition, from the viewpoint that the effect of the present invention is more excellent, a coefficient of determination obtained by performing linear regression analysis according to a least-squares method in a wave number range of 600 to 850 $cm^{-1}$ in the Raman spectrum of the first lithium-based solid electrolyte is preferably 0.9400 or more.
From the viewpoint that the effect of the present invention is more excellent, the above-described coefficient of determination is more preferably 0.9600 or more. The upper limit thereof is not particularly limited, but may be, for example, 1.0000.
Hereinafter, the above-described characteristic will be described with reference to Fig. 12.
Fig. 12 shows an example of the Raman spectrum of the first lithium-based solid electrolyte. A coefficient of

determination (coefficient of determination $R^2$) obtained by performing linear regression analysis according to a least-squares method is calculated in a wave number range of 600 to 850 $cm^{-1}$ of a Raman spectrum shown in which a vertical axis is a Raman intensity and a horizontal axis is a Raman shift. That is, in a wave number range of 600 to 850 $cm^{-1}$ in the Raman spectrum of Fig. 12, a regression line (the thick broken line in Fig. 12) is determined according to the least-squares method, and the coefficient of determination $R^2$ of the regression line is calculated. As the coefficient of determination, a value between 0 (no linear correlation) and 1 (complete linear correlation of the measured values) is taken according to the linear correlation of the measured values.

In the first lithium-based solid electrolyte, a peak is not substantially observed in the wave number range of 600 to 850 $cm^{-1}$ as shown in Fig. 2, and as a result, a high coefficient of determination is exhibited.

The above-described coefficient of determination $R^2$ corresponds to the square of the correlation coefficient (Pearson's product-moment correlation coefficient). More specifically, in the present specification, the coefficient of determination $R^2$ is calculated according to the following expression. In the expression, $x_1$ and $y_1$ represent a wave number in the Raman spectrum and a Raman intensity corresponding to the wave number; $x_2$ represents the (arithmetic) average of the wave numbers; and $y_2$ represents the (arithmetic) average of the Raman intensities.

$$R^2 = \frac{(\Sigma(x_1 - x_2) \cdot (y_1 - y_2))^2}{\Sigma(x_1 - x_2)^2 \cdot \Sigma(y_1 - y_2)^2}$$

On the other hand, Fig. 13 shows a Raman spectrum of a general lithium tetraborate crystal. As shown in Fig. 13, in a case of a general lithium tetraborate crystal, peaks are observed in a wave number range of 716 to 726 $cm^{-1}$ and a wave number range of 771 to 785 $cm^{-1}$, derived from the structure thereof.

With the peaks, the coefficient of determination thereof is less than 0.9400 in a case where the coefficient of determination is calculated by performing linear regression analysis according to a least-squares method in a wave number range of 600 to 850 $cm^{-1}$.

That is, the fact that the above-described coefficient of determination is 0.9400 or more indicates that the first lithium-based solid electrolyte has almost no crystal structure which may be included in a general lithium tetraborate crystal. Therefore, as a result, it is considered that the first lithium-based solid electrolyte has a characteristic that the hopping property of $Li^+$ is excellent.

· Karl Fischer measurement

From the viewpoint that the effect of the present invention is more excellent, in a case where the molded body obtained by pressurizing the first lithium-based solid electrolyte is dried by a predetermined method, and then an amount of moisture vaporized from the obtained molded body is measured based on a Karl Fischer method, it is preferable that a moisture content B vaporized from the first lithium-based solid electrolyte during heating from room temperature (27°C) to 200°C is larger than a moisture content A vaporized from the first lithium-based solid electrolyte during heating from room temperature to 100°C.

The fact that the above-described moisture content B is larger than the above-described moisture content A indicates that water strongly bound from the surroundings to the first lithium-based solid electrolyte as compared with the water in the first state is present, and it is considered that the presence of such a predetermined amount of water contributes to the conductivity of lithium ions.

A method of drying the molded body obtained by pressurizing the first lithium-based solid electrolyte and a method of measuring the moisture content based on the Karl Fischer method will be described in Examples later.

· Requirement T

From the viewpoint that the effect of the present invention is more excellent, it is preferable that the first lithium-based solid electrolyte satisfies the following requirement T.

Requirement T: in a Raman spectrum of the lithium-based solid electrolyte, none of a first peak having a peak top at 710 to 730 $cm^{-1}$ and having a full-width at half maximum of 5 $cm^{-1}$ or more, a second peak having a peak top at 770 to 790 $cm^{-1}$ and having a full-width at half maximum of 5 $cm^{-1}$ or more, and a third peak having a peak top at 1,020 to 1,040 $cm^{-1}$ and having a full-width at half maximum of 5 $cm^{-1}$ or more are present; alternatively, in the Raman spectrum, in a case where at least one specific peak selected from the group consisting of the first peak, the second peak, and the third peak is present, an intensity ratio of the specific peak, which is calculated by the following intensity measuring method, is 5.0 or less.

Intensity measuring method: in the above-described Raman spectrum, a point at which a minimum value M1 of a Raman intensity in a wave number range of 400 to 600 $cm^{-1}$ is exhibited and a point at which a minimum value M2 of a Raman intensity in a wave number range of 1,300 to 1,500 $cm^{-1}$ is exhibited are connected to obtain a straight line; in a region from a wave number at which the minimum value M1 is exhibited to a wave number at which the minimum value M2 is exhibited, an average difference value between a Raman intensity of the straight line and a Raman intensity of the Raman spectrum is calculated at each wave number in a region other than regions of 710 to 730 $cm^{-1}$, 770 to 790 $cm^{-1}$, and 1,020 to 1,040 $cm^{-1}$; an absolute value of the difference between the Raman intensity of the peak at a wave number at which the peak top of the specific peak is exhibited and the Raman intensity of the straight line is calculated; and a ratio of the absolute value of the difference to the average difference value is defined as the intensity ratio.

The requirement T is a requirement evaluated by the same procedure as described above, except that the first lithium-based solid electrolyte is used as the measurement object in the requirement $\delta$ described above, and the evaluation method thereof is as described above.

In the above-described Raman spectrum of the lithium-based solid electrolyte, it is more preferable that none of the first peak, the second peak, and the third peak are present, or in a case where a specific peak selected from the group consisting of the first peak, the second peak, and the third peak is present, the intensity ratio of at least one specific peak is more preferably 3.0 or less. Among the above, it is still more preferable that none of the first peak, the second peak, and the third peak are present, or in a case where a specific peak selected from the group consisting of the first peak, the second peak, and the third peak is present, the intensity ratio of at least one specific peak is still more preferably 2.0 or less. In addition, it is particularly preferable that none of the first peak, the second peak, and the third peak are present.

· Requirement X

From the viewpoint that the effect of the present invention is more excellent, it is preferable that the first lithium-based solid electrolyte satisfies the following requirement X.

Requirement X: in the reduced pair distribution function G(r) obtained from an X-ray total scattering measurement of the lithium-based solid electrolyte, a first peak in which a peak top is located in a range where r is 1.43 $\pm$ 0.2 Å and a second peak in which a peak top is located in a range where r is 2.40 $\pm$ 0.2 Å are present, G(r) of the peak top of the first peak is more than 1.0 (preferably, 1.2 or more), and G(r) of the peak top of the second peak is 0.8 or more (preferably, more than 1.0).

The requirement X corresponds to the above-described requirement $\beta$, and the technical meaning thereof includes that a periodic structure corresponding to the interatomic distance of B (boron)-O (oxygen), the interatomic distance of B (boron)-B (boron), and the interatomic distance of O (oxygen)-O (oxygen) is present in the lithium-based solid electrolyte, as described above.

In the requirement X, as described above, it is preferable that G(r) of the peak top of the first peak is 1.2 or more, and G(r) of the peak top of the second peak is more than 1.0.

A method of measuring the requirement X is as described in the requirement $\beta$ above.

· Requirement Y

From the viewpoint that the effect of the present invention is more excellent, it is preferable that the first lithium-based solid electrolyte satisfies the following requirement Y.

Requirement Y: in the X-ray diffraction pattern of the lithium-based solid electrolyte obtained from an X-ray diffraction measurement using a CuK$\alpha$ ray, none of a first peak in which a peak top is located in a range of 21.6° to 22.0° and a full-width at half maximum is 0.65° or less, a second peak in which a peak top is located in a range of 25.4° to 25.8° and a full-width at half maximum is 0.65° or less, a third peak in which a peak top is located in a range of 33.4° to 33.8° and a full-width at half maximum is 0.65° or less, and a fourth peak in which a peak top is located in a range of 34.4° to 34.8° and a full-width at half maximum is 0.65° or less are present; alternatively, in the X-ray diffraction pattern, in a case where at least one specific peak selected from the group consisting of the first peak, the second peak, the third peak, and the fourth peak is present, an intensity ratio of the specific peak, which is calculated by the following intensity measuring method, is 5.0 or less.

Intensity measuring method: an average intensity 1 in a range of +0.45° to +0.55° from a diffraction angle 2$\theta$ of the peak top of the specific peak is calculated and an average intensity 2 in a range of -0.55° to -0.45° from the diffraction angle 2$\theta$ of the peak top of the specific peak is calculated; an arithmetic mean value of the average intensity 1 and the average intensity 2 is calculated; and a ratio of a peak intensity at the peak top of the specific peak to the arithmetic mean value is defined as the intensity ratio.

The requirement Y is a requirement evaluated by the same procedure as described above, except that the first lithium-based solid electrolyte is used as the measurement object in the requirement $\alpha$ described above, and the evaluation method thereof is as described above.

In the X-ray diffraction pattern of the first embodiment of the lithium-based solid electrolyte described above, obtained from an X-ray diffraction measurement using a CuKα ray, it is more preferable that none of the first peak, the second peak, the third peak, and the fourth peak are present; or in a case where a specific peak selected from the group consisting of the first peak, the second peak, the third peak, and the fourth peak is present, the intensity ratio of at least one specific peak is more preferably 3.0 or less. Among the above, it is still more preferable that none of the first peak, the second peak, the third peak, and the fourth peak are present, or in a case where a specific peak selected from the group consisting of the first peak, the second peak, the third peak, and the fourth peak is present, the intensity ratio of at least one specific peak is still more preferably 2.0 or less.

<<Second embodiment>>

A second embodiment of the lithium-based solid electrolyte according to the present invention (hereinafter, also referred to as "second lithium-based solid electrolyte") contains amorphous lithium tetraborate and a lithium salt.
In addition, in the second lithium-based solid electrolyte, in a case where a cross section of a molded body obtained by pressurizing the lithium-based solid electrolyte is observed with a scanning electron microscope (SEM), a region where the lithium salt is present is in a mesh shape.
Examples of a method of observing the cross section of the molded body of the second lithium-based solid electrolyte with SEM include a method of detecting an element derived from the lithium salt, such as the specific element, by energy dispersive X-ray spectrometry (EDX) and acquiring a mapping image showing a composition distribution in the cross section. The element to be detected may be appropriately selected depending on the kind of the lithium salt; but sulfur, nitrogen, or a halogen atom is preferable, and sulfur is more preferable.
A method of forming the cross section of the molded body of the second lithium-based solid electrolyte is not particularly limited, but it is preferable to form the cross section using a cross section polisher (CCP) device.
Hereinafter, the above-described characteristic will be described with reference to Fig. 14.
Fig. 14 shows an example of a mapping image showing the cross section of the molded body of the second lithium-based solid electrolyte obtained by the SEM-EDX analysis. In the mapping image shown in Fig. 14, a region where the lithium salt is present is represented by a bright portion and a region where the lithium salt is not present (region where the specific lithium tetraborate is present) is represented by a dark portion; and the bright portion forms a mesh-like continuous phase surrounding the dark portion. In the molded body of the lithium-based solid electrolyte, it is considered that the lithium salt contributing to ion conduction forms a mesh-like structure, whereby a favorable ion conduction path connecting electrodes is formed, and thus the effect of the present invention is obtained.
A method of analyzing the cross section of the molded body of the lithium-based solid electrolyte by SEM-EDX and a method of producing the cross section of the molded body of the lithium-based solid electrolyte will be described in detail in Examples later.
The second lithium-based solid electrolyte contains amorphous lithium tetraborate (specific lithium tetraborate).
The type, characteristics, content, and the like of the specific lithium tetraborate contained in the second lithium-based solid electrolyte are as described in the first embodiment, including preferred aspects thereof.
The second lithium-based solid electrolyte contains a lithium salt.
The type, characteristics, content, and the like of the lithium salt contained in the second lithium-based solid electrolyte are as described in the first embodiment, including preferred aspects thereof.
Since the second lithium-based solid electrolyte contains the specific lithium tetraborate, the second lithium-based solid electrolyte contains elements of Li, B, and O.
In addition, the second lithium-based solid electrolyte preferably further contains a specific element selected from the group consisting of an element of Group 4 of the periodic table, an element of Group 15 of the periodic table, an element of Group 16 of the periodic table, an element of Group 17 of the periodic table, Si, C, Sc, and Y.
The kind of the specific element contained in the second lithium-based solid electrolyte, the molar amounts of Li, B, O, and the specific elements contained in the second lithium-based solid electrolyte, and the like are as described in the first embodiment, including preferred aspects thereof.
The second lithium-based solid electrolyte may contain water, and it is preferable that the second lithium-based solid electrolyte contains water.
A content of water contained in the second lithium-based solid electrolyte is preferably 45% by mass or less, more preferably 40% by mass or less, still more preferably 35% by mass or less, particularly preferably 30% by mass or less, and most preferably 25% by mass or less with respect to the total mass of the lithium-based solid electrolyte. In addition, the lower limit value of the content of the water is not particularly limited, but is preferably 5% by mass or more, more preferably 10% by mass or more, still more preferably 15% by mass or more, and particularly preferably 20% by mass or more with respect to the total mass of the lithium-based solid electrolyte.
The above-described content of the water is as described in the first embodiment, and the measuring method thereof is also as described in the first embodiment.

The molar ratio and content of each component in the second lithium-based solid electrolyte can be determined by a known method. For example, the content of various elements in the second lithium-based solid electrolyte can be specified, and the molar ratio and content of the various elements can be determined from a structure of the compound used. As a method of the element analysis, for example, Na and B are analyzed by inductively coupled plasma optical emission spectrometry (ICP-OES); N and the like are analyzed by an inert gas melting method; and F and S are analyzed by combustion ion chromatography. Regarding O, analyzed masses of elements other than O are added together, and the content of O can be calculated as a difference between the analyzed masses and the total amount of the powder. The method of calculating the content of each element is not limited to those described above, and from an analysis result of a content of one kind of element, a content of another element may be estimated in consideration of the structure of the compound to be used.

(Characteristics of lithium-based solid electrolyte)

· TG-MS measurement

From the viewpoint that the effect of the present invention is more excellent, in a case where the molded body obtained by pressurizing the second lithium-based solid electrolyte is subjected to thermogravimetry mass spectrometry (TG-MS), it is preferable that a component having a molecular weight of 18 is detected in a temperature range of higher than 100°C, and it is more preferable that a component having a molecular weight of 18 is more detected in a temperature range of higher than 120°C.

The above-described characteristic is as described in the first embodiment, and the measuring method thereof is also as described in the first embodiment.

· $^{7}$Li-NMR measurement

From the viewpoint that the effect of the present invention is more excellent, a proportion of a full-width at half maximum of a peak in which a chemical shift appeared in a range of -100 to +100 ppm in a spectrum obtained in a case where the solid $^{7}$Li-NMR measurement of the second lithium-based solid electrolyte is performed at 120°C with respect to a full-width at half maximum of a peak in which a chemical shift appeared in a range of -100 to +100 ppm in a spectrum obtained in a case where the solid $^{7}$Li-NMR measurement of the second lithium-based solid electrolyte is performed at 20°C is preferably 50% or less, more preferably 40% or less, and still more preferably 35% or less. The lower limit thereof is not particularly limited, but is usually 10% or more.

The full-width at half maximum (FWHM) of the peak means a width (ppm) at a point (H/2) of 1/2 of a height (H) of the peak.

In addition, from the viewpoint that the effect of the present invention is more excellent, in a case where a first peak appearing in a range of -100 to +100 ppm in the spectrum obtained in a case where the solid $^{7}$Li-NMR measurement of the second lithium-based solid electrolyte is performed at 20°C is waveform-separated, it is preferable that a second peak having a full-width at half maximum of 5 ppm or less appears in a range with a chemical shift of -3 to 3 ppm, and a proportion of an area intensity of the second peak to an area intensity of the first peak is 0.5% or more. The above-described proportion of the area intensity is more preferably 2% or more, and still more preferably 15% or more. The upper limit of the above-described proportion of the area intensity is not particularly limited, but is usually 50% or less.

The above-described characteristic is as described in the first embodiment, and the measuring method thereof is also as described in the first embodiment.

· $^{1}$H-NMR measurement

From the viewpoint that the effect of the present invention is more excellent, it is preferable that both a sharp peak and a broad peak appear in a range of a chemical shift of -200 to +200 ppm in a spectrum obtained by $^{1}$H-NMR measurement of the second lithium-based solid electrolyte.

The above-described characteristic is as described in the first embodiment, and the measuring method thereof is also as described in the first embodiment.

· $^{19}$F-NMR measurement

From the viewpoint that the effect of the present invention is more excellent, in a case where the lithium salt contains a fluorine atom, it is preferable that a sharp peak appears in a range where a chemical shift is -200 to +300 ppm in a spectrum obtained by $^{19}$F-NMR measurement of the second lithium-based solid electrolyte.

The above-described characteristic is as described in the first embodiment, and the measuring method thereof is

also as described in the first embodiment.

· TG-DTA measurement

In addition, from the viewpoint that the effect of the present invention is more excellent, a mass reduction rate in a case where the second lithium-based solid electrolyte is heated to 800°C is preferably 20% to 40% by mass. Among the above, from the viewpoint that the effect of the present invention is more excellent, the mass reduction rate is more preferably 25% to 35% by mass.

The above-described characteristic is as described in the first embodiment, and the measuring method thereof is also as described in the first embodiment.

· Ion conductivity

From the viewpoint that the effect of the present invention is more excellent, the ion conductivity of the molded body obtained by pressurizing the second lithium-based solid electrolyte at -10°C is preferably $1 \times 10^{-5}$ S/cm or more, and more preferably $1 \times 10^{-4}$ S/cm or more. The upper limit thereof is not particularly limited, but is usually $1 \times 10^{-3}$ S/cm or less.

The above-described characteristic is as described in the first embodiment, and the measuring method thereof is also as described in the first embodiment.

· Infrared absorption spectrum

In addition, from the viewpoint that the effect of the present invention is more excellent, in an infrared absorption spectrum of the second lithium-based solid electrolyte, a ratio of the maximum absorption intensity in a wave number range of 3,000 to 3,500 $cm^{-1}$ to the maximum absorption intensity in a wave number range of 800 to 1,600 $cm^{-1}$ is preferably 1/5 or more. Among the above, from the viewpoint that the effect of the present invention is more excellent, the above-described ratio is preferably 3/10 or more and more preferably 2/5 or more. The upper limit thereof is not particularly limited, but is preferably 1 or less.

The above-described characteristic is as described in the first embodiment, and the measuring method thereof is also as described in the first embodiment.

· Raman spectrum

In addition, from the viewpoint that the effect of the present invention is more excellent, a coefficient of determination obtained by performing linear regression analysis according to a least-squares method in a wave number range of 600 to 850 $cm^{-1}$ in the Raman spectrum of the second lithium-based solid electrolyte is preferably 0.9400 or more.

From the viewpoint that the effect of the present invention is more excellent, the above-described coefficient of determination is more preferably 0.9600 or more. The upper limit thereof is not particularly limited, but may be, for example, 1.0000.

The above-described characteristic is as described in the first embodiment, and the measuring method thereof is also as described in the first embodiment.

· Karl Fischer measurement

From the viewpoint that the effect of the present invention is more excellent, in a case where the molded body obtained by pressurizing the second lithium-based solid electrolyte is dried by a predetermined method, and then an amount of moisture vaporized from the obtained molded body is measured based on a Karl Fischer method, it is preferable that a moisture content B vaporized from the first lithium-based solid electrolyte during heating from room temperature (27°C) to 200°C is larger than a moisture content A vaporized from the first lithium-based solid electrolyte during heating from room temperature to 100°C.

The above-described characteristic is as described in the first embodiment, and the measuring method thereof is also as described in the first embodiment.

· Requirement T

In addition, from the viewpoint that the effect of the present invention is more excellent, it is preferable that the second lithium-based solid electrolyte satisfies the following requirement T. The following requirement T is the same as the requirement T defined in the first embodiment described above, and the measuring method thereof is also as described in the first embodiment.

Requirement T: in a Raman spectrum of the lithium-based solid electrolyte, none of a first peak having a peak top at 710 to 730 $cm^{-1}$ and having a full-width at half maximum of 5 $cm^{-1}$ or more, a second peak having a peak top at 770 to 790 $cm^{-1}$ and having a full-width at half maximum of 5 $cm^{-1}$ or more, and a third peak having a peak top at 1,020 to 1,040 $cm^{-1}$ and having a full-width at half maximum of 5 $cm^{-1}$ or more are present; alternatively, in the Raman spectrum, in a case where at least one specific peak selected from the group consisting of the first peak, the second peak, and the third peak is present, an intensity ratio of the specific peak, which is calculated by the following intensity measuring method, is 5.0 or less.

Intensity measuring method: in the above-described Raman spectrum, a point at which a minimum value M1 of a Raman intensity in a wave number range of 400 to 600 $cm^{-1}$ is exhibited and a point at which a minimum value M2 of a Raman intensity in a wave number range of 1,300 to 1,500 $cm^{-1}$ is exhibited are connected to obtain a straight line; in a region from a wave number at which the minimum value M1 is exhibited to a wave number at which the minimum value M2 is exhibited, an average difference value between a Raman intensity of the straight line and a Raman intensity of the Raman spectrum is calculated at each wave number in a region other than regions of 710 to 730 $cm^{-1}$, 770 to 790 $cm^{-1}$, and 1,020 to 1,040 $cm^{-1}$; an absolute value of the difference between the Raman intensity of the peak at a wave number at which the peak top of the specific peak is exhibited and the Raman intensity of the straight line is calculated; and a ratio of the absolute value of the difference to the average difference value is defined as the intensity ratio.

In the above-described Raman spectrum of the lithium-based solid electrolyte, it is more preferable that none of the first peak, the second peak, and the third peak are present, or in a case where a specific peak selected from the group consisting of the first peak, the second peak, and the third peak is present, the intensity ratio of at least one specific peak is more preferably 3.0 or less. Among the above, it is still more preferable that none of the first peak, the second peak, and the third peak are present, or in a case where a specific peak selected from the group consisting of the first peak, the second peak, and the third peak is present, the intensity ratio of at least one specific peak is still more preferably 2.0 or less. In addition, it is particularly preferable that none of the first peak, the second peak, and the third peak are present.

· Requirement X

From the viewpoint that the effect of the present invention is more excellent, it is preferable that the second lithium-based solid electrolyte satisfies the following requirement X. The following requirement X is the same as the requirement X defined in the first embodiment described above, and the measuring method thereof is also as described in the first embodiment.

Requirement X: in the reduced pair distribution function G(r) obtained from an X-ray total scattering measurement of the lithium-based solid electrolyte, a first peak in which a peak top is located in a range where r is 1.43 $\pm$ 0.2 Å and a second peak in which a peak top is located in a range where r is 2.40 $\pm$ 0.2 Å are present, G(r) of the peak top of the first peak is more than 1.0 (preferably, 1.2 or more), and G(r) of the peak top of the second peak is 0.8 or more (preferably, more than 1.0).

· Requirement Y

From the viewpoint that the effect of the present invention is more excellent, it is preferable that the second lithium-based solid electrolyte satisfies the following requirement Y. The following requirement Y is the same as the requirement Y defined in the first embodiment described above, and the measuring method thereof is also as described in the first embodiment.

Requirement Y: in the X-ray diffraction pattern of the lithium-based solid electrolyte obtained from an X-ray diffraction measurement using a CuK$\alpha$ ray, none of a first peak in which a peak top is located in a range of 21.6° to 22.0° and a full-width at half maximum is 0.65° or less, a second peak in which a peak top is located in a range of 25.4° to 25.8° and a full-width at half maximum is 0.65° or less, a third peak in which a peak top is located in a range of 33.4° to 33.8° and a full-width at half maximum is 0.65° or less, and a fourth peak in which a peak top is located in a range of 34.4° to 34.8° and a full-width at half maximum is 0.65° or less are present; alternatively, in the X-ray diffraction pattern, in a case where at least one specific peak selected from the group consisting of the first peak, the second peak, the third peak, and the fourth peak is present, an intensity ratio of the specific peak, which is calculated by the following intensity measuring method, is 5.0 or less.

Intensity measuring method: an average intensity 1 in a range of +0.45° to +0.55° from a diffraction angle 2$\theta$ of the peak top of the specific peak is calculated and an average intensity 2 in a range of -0.55° to -0.45° from the diffraction angle 2$\theta$ of the peak top of the specific peak is calculated; an arithmetic mean value of the average intensity 1 and the average intensity 2 is calculated; and a ratio of a peak intensity at the peak top of the specific peak to the arithmetic mean value is defined as the intensity ratio.

In the X-ray diffraction pattern of the second embodiment of the lithium-based solid electrolyte described above, obtained from an X-ray diffraction measurement using a CuK$\alpha$ ray, it is more preferable that none of the first peak, the

second peak, the third peak, and the fourth peak are present; or in a case where a specific peak selected from the group consisting of the first peak, the second peak, the third peak, and the fourth peak is present, the intensity ratio of at least one specific peak is more preferably 3.0 or less. Among the above, it is still more preferable that none of the first peak, the second peak, the third peak, and the fourth peak are present, or in a case where a specific peak selected from the group consisting of the first peak, the second peak, the third peak, and the fourth peak is present, the intensity ratio of at least one specific peak is still more preferably 2.0 or less.

Fig. 15 shows an example of a calculation result of the lithium-based solid electrolyte included in the present invention, obtained by a first-principles molecular dynamics (MD) method. Fig. 15 shows arrangement of each atom of Li, S, F, H, B, O, and N, which is contained in the lithium-based solid electrolyte (the first embodiment and the second embodiment) according to the embodiment of the present invention in which $Li(FSO_2)_2N$ (hereinafter, also referred to as "LiFSI") is used as the lithium salt. In addition, the broken line in the drawing indicates a hydrogen bond, a Coulomb force, and the like.

As shown in Fig. 15, in the lithium-based solid electrolyte according to the embodiment of the present invention, it is considered that an ion conduction path (region shown by A2 in the drawing) containing water ($H_2O$) and an anion contained in LiSFI is formed between specific lithium tetraborate particles (region shown by A1 in the drawing). In addition, as shown in Fig. 15, it is considered that a part of a $BO_3$ structure and a $BO_4$ structure present on the particle surface in a $BO_3$-$BO_4$ linking structure constituting the specific lithium tetraborate particles interacts with $H_2O$ as a part of the ion conduction path.

The part of the $BO_3$ structure and the $BO_4$ structure present on the particle surface may have, for example, a dangling bond due to element defect.

In addition, a B-OH partial structure may be formed by an interaction between the part of the $BO_3$ structure and the $BO_4$ structure present on the particle surface, and $H_2O$. It is considered that the B-OH partial structure is responsible for a part of the ion conduction path. In addition, it is considered that the B-OH partial structure improves dispersibility in water in a step 2, a step 2A, a step 2B, and a step 2C in a method for producing the lithium-based solid electrolyte described later.

In addition, it is also considered that Li and water ($H_2O$) strongly interact with each other (bonding distance of Li-O is calculated to be approximately 1.8 Å), and the Coulomb force strongly acts to bind water, which is considered to contribute to solidification.

The structure and the number of water ($H_2O$) and LiSFI present in the region represented by A2 are calculated by being virtually set, but the present invention is not limited thereto.

The above-described ion conduction path may also contain other components in addition to $H_2O$ and the anion of LiSFI. The other components may be, for example, a $BO_3$-$BO_4$ linking structure contained in the specific lithium tetraborate particles or a molecule having a structure different from the $BO_3$-$BO_4$ linking structure. As the above-described molecule having different structure, for example, $B(OH)_3$, $B(OH)_4^-$, and $BO_3$-$BO_4$ structures different in structure or the number of linkages from the $BO_3$-$BO_4$ linking structure present in the lithium tetraborate crystal are considered as candidates. As described above, a part of $H_2O$ contained in the above-described ion conduction path may be in a dissociated state.

In the above-described ion conduction path, it is considered that $H_2O$, the anion of LiSFI, and the above-described other components (in a case of being present) form a pseudo-crosslinking structure or a three-dimensional structure through a hydrogen bond or the like; and as a result, the lithium-based solid electrolyte proceeds in a direction of being pseudo-solidified or solidified.

It is considered that the presence of $BO_4$ is desirable for the formation of the pseudo-crosslinking structure or the three-dimensional structure as described above.

The above description is based on the estimation from the calculation results of the specific lithium-based solid electrolyte contained in the present invention, and the present invention is not limited to the above-described contents.

<<Method for producing lithium-based solid electrolyte>>

The method for producing the lithium-based solid electrolyte (the first embodiment and the second embodiment) according to the embodiment of the present invention is not particularly limited, but from the viewpoint that the lithium-based solid electrolyte according to the embodiment of the present invention can be produced with high productivity, a production method including the following steps 1A to 3A is preferable.

Step 1A: step of subjecting a lithium-based oxide containing Li and B (preferably, lithium tetraborate) to a mechanical milling treatment in the presence of a lithium salt

Step 2A: step of mixing the product obtained in the step 1A with water

Step 3A: step of removing water from the dispersion liquid obtained in the step 2A to obtain a lithium-based solid electrolyte

Hereinafter, the procedure of the above-described production method will be described in detail.

The step 1A is a step of subjecting the above-described lithium-based oxide (preferably, lithium tetraborate) to a mechanical milling treatment in the presence of a lithium salt.

Hereinafter, a material used in the present step 1A will be described in detail, and then the procedure will be described in detail.

Examples of the lithium salt include a lithium salt containing one or more of the above-described specific elements; and a lithium salt containing two or more of the specific elements is preferable and a compound represented by Formula (1) is more preferable.

Formula (1) $LiN(R_{f1}SO_2)(R_{f2}SO_2)$

$R_{f1}$ and $R_{f2}$ each independently represent a halogen atom or a perfluoroalkyl group.

In a case where $R_{f1}$ and $R_{f2}$ are a perfluoroalkyl group, the number of carbon atoms in the perfluoroalkyl group is not particularly limited.

$R_{f1}$ and $R_{f2}$ are preferably a halogen atom or a perfluoroalkyl group having 1 to 6 carbon atoms, more preferably a halogen atom or a perfluoroalkyl group having 1 or 2 carbon atoms, and still more preferably a halogen atom. As the volume of the terminal group increases, the steric hindrance increases, which is a factor that hinders ion conduction. Therefore, in a case where $R_{f1}$ and $R_{f2}$ are a perfluoroalkyl group, the perfluoroalkyl group preferably has a small number of carbon atoms.

Hereinafter, the lithium salt will be exemplified.

(L-1) Inorganic lithium salt: inorganic fluoride salt such as $LiPF_6$, $LiBF_4$, $LiAsF_6$, and $LiSbF_6$; perhalogenate such as $LiClO_4$, $LiBrO_4$, and $LiIO_4$; and an inorganic chloride salt such as $LiAlCl_4$

(L-2) Fluorine-containing organic lithium salt: perfluoroalkane sulfonate such as $LiCF_3SO_3$; perfluoroalkanesulfonylimide salt such as $LiN(CF_3SO_2)_2$, $LiN(CF_3CF_2SO_2)_2$, lithium 1,1,2,2,3,3-hexafluoropropane-1,3-disulfonimide, $LiN(FSO_2)_2$, and $LiN(CF_3SO_2)(C_4F_9SO_2)$; perfluoroalkane sulfonylmethide salt such as $LiC(CF_3SO_2)_3$; and fluoroalkyl fluorophosphate such as $Li[PF_5(CF_2CF_2CF_3)]$, $Li[PF_4(CF_2CF_2CF_3)_2]$, $Li[PF_3(CF_2CF_2CF_3)_3]$, $Li[PF_5(CF_2CF_2CF_2CF_3)]$, $Li[PF_4(CF_2CF_2CF_2CF_3)_2]$, and $Li[PF_3(CF_2CF_2CF_2CF_3)_3]$

(L-3) Oxalatoborate salt: lithium bis(oxalato)borate and lithium difluorooxalatoborate

In addition to the above, examples thereof include LiF, LiCl, LiBr, LiI, $Li_2SO_4$, $LiNO_3$, $Li_2CO_3$, $CH_3COOLi$, $LiAsF_6$, $LiSbF_6$, $LiAlCl_4$, and $LiB(C_6H_5)_4$.

Among these, $LiPF_6$, $LiBF_4$, $LiAsF_6$, $LiSbF_6$, $LiClO_4$, $Li(R^{f1}SO_3)$, $LiN(R_{f1}SO_2)_2$, $LiN(FSO_2)_2$, $LiN(R^{f1}SO_2)(R^{f2}SO_2)$, LiCl, LiB, or LiI is preferable; and $LiPF_6$, $LiBF_4$, $LiN(R^{f1}SO_2)_2$, $LiN(FSO_2)_2$, or $LiN(R^{f1}SO_2)(R^{f2}SO_2)$ is more preferable.

Here, $R^{f1}$ and $R^{f2}$ each independently represent a perfluoroalkyl group.

An amount of the lithium salt used is not particularly limited, and is appropriately adjusted such that the above-described lithium-based solid electrolyte according to the embodiment of the present invention is obtained.

Among these, the amount of the lithium salt used is preferably 1 to 300 parts by mass and more preferably 100 to 200 parts by mass with respect to 100 parts by mass of the lithium-based oxide.

Examples of the lithium-based oxide containing Li and B include $Li_2B_4O_7$, $LiBO_5$, $LiB_3O_5$, $Li_3B_{11}O_{18}$, $Li_2B_7O_{12}$, $LiB_2O_3(OH)H_2O$, $Li_4B_8O_{13}(OH)_2(H_2O)_3$, $Li_4B_7O_{12}Cl$, and $Li_3B_7O_{12}$. Among these, $Li_2B_4O_7$ (lithium tetraborate) is preferable.

In order to expand a potential window in a case where the lithium solid electrolyte is used in a battery, a liquid selected from the group consisting of an organic solvent and an ionic liquid may be used in addition to the water and the Li salt.

Examples of the organic solvent include acetamide, acetonitrile, ethylene carbonate, vinylene carbonate, propylene carbonate, dimethyl carbonate, diethyl carbonate, 1,2-dimethoxyethane, tetrahydrofuran, $\gamma$-butyrolactone, fluoroethylene carbonate, and 1,3-propanesultone.

Examples of the ionic liquid include imidazolium, pyrrolidinium, piperidinium, ammonium, 1-ethyl-3-methylimidazolium, diethylmethyl-2-methoxyethylammonium, N-methyl-N-propylpiperidinium, N-methyl-N-propylpyridinium, 1-butyl 1-2,3-dimethylimidazolium, 1-methyltetrahydrothiophenium, 1-ethyltetrahydrothiophenium, ethylmethylpropylsulfonium, butyldimethylsulfonium, 1-propyltetrahydrothiophenium, 1-methyl[1,4]-thioxonium, 1-butyltetrahydrothiophenium, diethylethylsulfonium, 1-propyl-2,3,5-trimethylpyrazolium, bistrifluoromethanesulfonamide, dicyanamide, hexafluorophosphate, and tetracloraluminate.

The mechanical milling treatment is a treatment of pulverizing a sample while applying mechanical energy.

Examples of the mechanical milling treatment include a ball mill, a vibration mill, a turbo mill, and a disc mill, and from the viewpoint that the lithium-based solid electrolyte according to the embodiment of the present invention can be produced with high productivity, a ball mill is preferable. Examples of the ball milling include vibration ball milling, rotary ball milling, and planetary ball milling, and planetary ball milling is more preferable.

As conditions for the ball mill treatment, the optimum conditions are selected depending on raw materials to be used.

A material of pulverization balls (media) to be used at the time of ball milling is not particularly limited; and examples thereof include agate, silicon nitride, stabilized zirconia (YSZ), alumina, and an iron-based alloy; and stabilized zirconia (YSZ) is preferable from the viewpoint that the lithium-based solid electrolyte according to the embodiment of the present invention can be produced with high productivity.

An average particle diameter of the pulverization balls is not particularly limited, but from the viewpoint that the lithium-based solid electrolyte according to the embodiment of the present invention can be produced with high productivity, it is preferably 1 to 10 mm and more preferably 3 to 7 mm. The above-described average particle diameter is obtained by randomly measuring diameters of 50 pulverization balls and arithmetically averaging the measured values. In a case where the pulverization balls are not spherical, a major axis is taken as the diameter.

The number of pulverization balls used at the time of ball milling is not particularly limited, but from the viewpoint that the lithium-based solid electrolyte according to the embodiment of the present invention can be produced with high productivity, it is preferably 10 to 100 and more preferably 40 to 60.

A material of a pulverization pot to be used at the time of ball milling is not particularly limited; and examples thereof include agate, silicon nitride, stabilized zirconia (YSZ), alumina, and an iron-based alloy; and stabilized zirconia (YSZ) is preferable from the viewpoint that the lithium-based solid electrolyte according to the embodiment of the present invention can be produced with high productivity.

A rotation speed at the time of ball milling is not particularly limited, but from the viewpoint that the lithium-based solid electrolyte according to the embodiment of the present invention can be produced with high productivity, it is preferably 200 to 700 rpm and more preferably 350 to 550 rpm.

A treatment time of the ball milling is not particularly limited, but from the viewpoint that the lithium-based solid electrolyte according to the embodiment of the present invention can be produced with high productivity, it is preferably 10 to 200 hours and more preferably 20 to 140 hours.

The atmosphere during the ball milling may be an atmosphere of atmospheric air, or may be an atmosphere of an inert gas (for example, argon, helium, or nitrogen).

The step 2A is a step of mixing the product obtained in the step 1A with water. In a case of performing the present step, water is mixed with the lithium-based oxide containing Li and B, which is obtained in the step 1A by being subjected to the mechanical milling treatment, and the lithium-based solid electrolyte according to the embodiment of the present invention, which contains a large amount of O (oxygen element), is generated.

It is considered that, in the step 2A, a composition having favorable production suitability is obtained by preparing a mixed solution containing the lithium-based oxide subjected to the mechanical milling treatment and water, and the content of the water is increased by forcibly adsorbing the water to the lithium-based oxide subjected to the mechanical milling treatment, whereby the ion conductivity is improved.

An amount of water used is not particularly limited, but from the viewpoint that the effect of the present invention is more excellent, it is preferably 10 to 200 parts by mass and more preferably 50 to 150 parts by mass with respect to 100 parts by mass of the product obtained in the step 1A.

The method of mixing the product obtained in the step 1A with the water is not particularly limited, and the mixing may be performed in a batchwise manner or may be performed such that the water is added stepwise to the product obtained in the step 1A.

In the mixing, an ultrasonic treatment may be performed as necessary.

A time of the ultrasonic treatment is not particularly limited, but from the viewpoint that the effect of the present invention is more excellent, it is preferably 10 minutes to 5 hours.

The step 3A is a step of removing water from the dispersion liquid obtained in the step 2A to obtain a lithium-based solid electrolyte.

In the present step, the water contained in the dispersion liquid is removed to obtain a lithium-based solid electrolyte containing water. In the present step, water may be removed from the dispersion liquid such that the lithium-based solid electrolyte is formed and water remains in the lithium-based solid electrolyte. Specifically, the water may be removed so that at least the water in the first state to the fourth state described above remains in the lithium-based solid electrolyte. Further, the water may be removed so that at least the water in the second state to the fourth state remains in the lithium-based solid electrolyte; the water may be removed so that at least the water in the third state or the fourth state remains in the lithium-based solid electrolyte; or the water may be removed so that at least the water in the fourth state remains in the lithium-based solid electrolyte.

That is, in the above-described step 3A, a step of removing a part of the water in the dispersion liquid to obtain a predetermined lithium-based solid electrolyte may be performed so that the above-described lithium-based solid electrolyte containing water is obtained.

The method of removing the water from the dispersion liquid obtained in the step 2A is not particularly limited, and the water may be evaporated by a heating treatment or may be evaporated by a vacuum drying treatment. By adjusting the

amount of water removed within the above-described range, the content of water contained in the lithium-based solid electrolyte can be appropriately adjusted.

In the present step, it is preferable to dry the above-described dispersion liquid under a vacuum condition to obtain the lithium-based solid electrolyte containing water. The vacuum condition means that a drying treatment is performed at a predetermined temperature under a predetermined decompression environment. More specific examples of the vacuum conditions include 2,000 Pa or less (preferably 200 Pa or less and more preferably 20 Pa or less) and 60°C or lower (preferably 40°C or lower). The lower limit value of the above-described pressure is not particularly limited, and is, for example, 10 Pa or more. In addition, the lower limit value of the above-described temperature is not particularly limited, and is, for example, 0°C or higher.

The treatment time of the vacuum drying treatment may be appropriately selected depending on the pressure and the temperature described above, the amount of water contained in the dispersion liquid, the target moisture content of the lithium-based solid electrolyte, and the like; and is, for example, 120 to 1,080 minutes, preferably 300 to 900 minutes.

Before the above-described step 1A, a step 0 of subjecting the lithium-based oxide (preferably, lithium tetraborate) to a mechanical milling treatment in an environment in which the lithium salt is not present may be performed.

A suitable aspect of the mechanical milling treatment performed in the step 0 is the same as the suitable aspect of the mechanical milling treatment performed in the step 1A described above.

Another suitable aspect of the method for producing the lithium-based solid electrolyte according to the embodiment of the present invention is preferably a production method including the following steps 1B to 3B.

Step 1B: step of subjecting a lithium-based oxide (preferably, lithium tetraborate) to a mechanical milling treatment
Step 2B: step of mixing the product obtained in the step 1B with water and a lithium salt
Step 3B: step of removing water from the dispersion liquid obtained in the step 2B to obtain a lithium-based solid electrolyte

The difference between the step 1B and the step 1A is exemplified that the mechanical milling treatment is performed in the presence of the lithium salt in the step 1A, whereas the mechanical milling treatment is performed without using the lithium salt in the step 1B.

A suitable aspect of the mechanical milling treatment performed in the step 1B is the same as the suitable aspect of the mechanical milling treatment performed in the step 1A.

The difference between the step 2B and the step 2A is exemplified that, in the step 2B, the product obtained in the step 1B, water, and the lithium salt are mixed with each other.

The lithium salt used in the step 2B is the same as the lithium salt used in the step 1A.

An amount of the lithium salt used in the step 2B is preferably 1 to 300 parts by mass and more preferably 100 to 200 parts by mass with respect to 100 parts by mass of the product obtained in the step 1B.

A procedure of the step 2B is not particularly limited, and may be a method (method 1) of collectively mixing the product obtained in the step 1B, water, and a lithium salt; a method (method 2) of producing a dispersion liquid by mixing the product obtained in the step 1B with water, and then mixing the obtained dispersion liquid with a lithium salt; or a method (method 3) of preparing a dispersion liquid 1 by mixing the product obtained in the step 1B with water, preparing a solution 2 by mixing a lithium salt with water, and then mixing the dispersion liquid 1 with the solution 2. In a case where the product obtained in the step 1B is mixed with water, a dispersion treatment such as an ultrasonic treatment may be appropriately performed.

Among the above, the method 3 is preferable from the viewpoint that the effect of the present invention is more excellent.

In the method 2, in a case where the dispersion liquid obtained by mixing the product obtained in the step 1B with water is mixed with a lithium salt, the obtained solution is likely to be gelated in a case where the amount of the lithium salt is too large, so that it is difficult to increase the mixing amount of the lithium salt. On the other hand, in the method 3, even in a case where the product obtained in the step 1B and the lithium salt are mixed in an equimolar amount, the gelation of the solution is less likely to occur, so that it is easy to increase the mixing amount of the lithium salt.

The procedures of the step 3B and the step 3A are the same.

Another suitable aspect of the method for producing the lithium-based solid electrolyte according to the embodiment of the present invention is preferably a production method including the following steps 1C to 3C.

Step 1C: step of subjecting a lithium-based oxide (preferably, lithium tetraborate) to a mechanical milling treatment
Step 2C: step of mixing the product obtained in the step 1C with water
Step 3C: step of mixing a product obtained by removing water from the dispersion liquid obtained in the step 2C with a lithium salt to obtain a lithium-based solid electrolyte

The procedures of the step 1C and the step 1B are the same.

The procedures of the step 2C and the step 2A are the same.

The difference between the step 3C and the step 3A is exemplified that the product obtained by removing water from the dispersion liquid obtained in the step 2C and the lithium salt are mixed with each other. In the step 3C, the method of removing water from the dispersion liquid obtained in the step 2C is the same as that in the step 3A, including the preferred aspect.

The lithium salt used in the step 3C is the same as the lithium salt used in the step 1A.

An amount of the lithium salt used in the step 3C is preferably 1 to 300 parts by mass and more preferably 100 to 200 parts by mass with respect to 100 parts by mass of the product obtained by removing water from the dispersion liquid obtained in the step 2C.

The method of mixing the product obtained by removing water from the dispersion liquid obtained in the step 2C with a lithium salt is not particularly limited, and a method of infusing the product with a solution obtained by dissolving the lithium salt in water to mix the two may be adopted.

That is, examples of a suitable aspect of the method for producing the lithium-based solid electrolyte according to the embodiment of the present invention include a production method including a step 1 of subjecting a lithium-based oxide (more preferably, lithium tetraborate) to a mechanical milling treatment a step 2 of mixing the product obtained in the step 1 with water, and a step 3 of removing water from the dispersion liquid obtained in the step 2 to obtain a lithium-based solid electrolyte, in which any one of the following requirements 1 to 3 is satisfied.

Requirement 1: the mechanical milling treatment of the step 1 is performed in the presence of a lithium salt containing one or more kinds of the specific element described above.

Requirement 2: in the step 2, the product, water, and a lithium salt containing one or more kinds of the specific element described above are mixed with each other.

Requirement 3: in the step 3, the product obtained by removing water from the dispersion liquid obtained in the step 2 is mixed with a lithium salt containing one or more kinds of the specific element described above to obtain the lithium-based solid electrolyte

Preferred aspects of the treatment performed in each step, the components used, and the like are as described above.

<Dispersion liquid>

The dispersion liquid according to the present invention contains the above-described lithium-based solid electrolyte according to the embodiment of the present invention, and a solvent (for example, an organic solvent or water). The dispersion liquid according to the present invention is liquid, can be applied onto various objects to be coated, and is useful for producing a solid electrolyte layer.

In the present specification, the dispersion liquid according to the present invention means an aspect in which a content of the solvent in the dispersion liquid is 80% by mass or more.

The dispersion liquid according to the present invention may contain a component other than the lithium-based solid electrolyte according to the embodiment of the present invention and the solvent.

Examples of other components include a binder.

Examples of the binder include various organic polymeric compounds (polymers).

The organic polymeric compound constituting the binder may be in a particle shape or may be in a non-particle shape.

In addition, examples of the other components include a solid electrolyte other than the lithium-based solid electrolyte according to the embodiment of the present invention. The other solid electrolyte means a solid electrolyte in which ions can be moved therein. The solid electrolyte is preferably an inorganic solid electrolyte.

Examples of the other solid electrolytes include a sulfide-based inorganic solid electrolyte solid electrolyte, an oxide-based inorganic solid electrolyte, a halide-based inorganic solid electrolyte, and a hydride-based solid electrolyte.

A method for producing the dispersion liquid according to the present invention is not particularly limited, and examples thereof include a production method including the step 1A and the step 2A described above, and a production method including the step 1B and the step 2B.

<Applications>

The lithium-based solid electrolyte according to the embodiment of the present invention exhibits excellent ion conductivity, and thus can be applied to various applications. The lithium-based solid electrolyte according to the embodiment of the present invention can be used for, for example, various batteries (for example, an all-solid-state secondary battery, a solid-state oxide fuel cell, and solid oxide steam electrolysis). Among these, the lithium-based solid electrolyte according to the embodiment of the present invention is preferably used for an all-solid-state lithium ion secondary battery.

More specifically, the lithium-based solid electrolyte according to the embodiment of the present invention is preferably used for forming a solid electrolyte contained in at least any one of a positive electrode active material layer, a solid electrolyte layer, or a negative electrode active material layer in an all-solid-state secondary battery. Among these, the lithium-based solid electrolyte according to the embodiment of the present invention is preferably used for forming a solid electrolyte contained in a positive electrode active material layer, a solid electrolyte layer, a negative electrode active material layer, or the like in an all-solid-state lithium ion secondary battery. In addition, the lithium-based solid electrolyte according to the embodiment of the present invention is preferably used as a solid electrolyte contained in any one of a positive electrode active material layer, a solid electrolyte layer, or a negative electrode active material layer in an all-solid-state lithium ion secondary battery.

In addition, the lithium-based solid electrolyte according to the embodiment of the present invention is suitably used as a coating material which coats a surface of the positive electrode active material. That is, examples of one suitable aspect of the present invention include a modified positive electrode active material which includes a positive electrode active material and a coating layer disposed on the positive electrode active material, in which the coating layer contains the lithium-based solid electrolyte according to the embodiment of the present invention.

Furthermore, the lithium-based solid electrolyte according to the embodiment of the present invention is suitably used as a coating material which coats a surface of the negative electrode active material. That is, examples of one suitable aspect of the present invention include a modified negative electrode active material which includes a negative electrode active material and a coating layer disposed on the negative electrode active material, in which the coating layer contains the lithium-based solid electrolyte according to the embodiment of the present invention.

In a case of using the lithium-based solid electrolyte according to the embodiment of the present invention, it is preferable to subject the lithium-based solid electrolyte according to the embodiment of the present invention to a pressurization treatment, and mold the lithium-based solid electrolyte into a predetermined shape for use.

A method of the pressurization treatment is not particularly limited, and examples thereof include a method using a known press device.

A pressurizing force at the time of the pressurization treatment is not particularly limited, and the optimum pressure is appropriately selected; but from the viewpoint that the effect of the present invention is more excellent, it is preferably 5 to 1,500 MPa and more preferably 10 to 600 MPa.

A time of the pressurization treatment is not particularly limited, but from the viewpoint that the effect of the present invention is more excellent and the viewpoint of productivity, it is preferably 1 second to 0.5 hours and more preferably 2 seconds to 0.2 hours.

In addition, a heating treatment may be performed at the time of the pressurization treatment. A heating temperature at the time of the heating treatment is not particularly limited, but it is preferably 40°C to 400°C and more preferably 50°C to 350°C. A heating time at the time of the heating treatment is preferably 1 minute to 6 hours.

The atmosphere during the pressurization is not particularly limited, and examples thereof include an atmosphere of atmospheric air, an atmosphere of dried air (dew point: -20°C or lower), and an atmosphere of inert gas (for example, argon, helium, or nitrogen).

The ion conductivity (27°C) of the lithium-based solid electrolyte according to the embodiment of the present invention is not particularly limited, and from the viewpoint of application to various applications, it is preferably $1.0 \times 10^{-5}$ S/cm or more, and more preferably $1.0 \times 10^{-4}$ S/cm or more. The upper limit thereof is not particularly limited, but is usually $1.0 \times 10^{-2}$ S/cm or less.

The dispersion liquid according to the present invention, containing the lithium-based solid electrolyte according to the embodiment of the present invention, can be suitably used as a dispersion liquid for forming a solid electrolyte layer.

A method of forming a solid electrolyte layer using the above-described dispersion liquid for forming a solid electrolyte layer is not particularly limited, and examples thereof include a method of applying the dispersion liquid for forming a solid electrolyte layer onto a target object to form a solid electrolyte layer. As necessary, the formed coating film may be subjected to a pressurization treatment.

A coating method of the dispersion liquid for forming a solid electrolyte layer is not particularly limited, and examples thereof include spray coating, spin coating, dip coating, slit coating, stripe coating, an aerosol deposition method, thermal spraying, and bar coating.

After applying the dispersion liquid for forming a solid electrolyte layer, the obtained coating film may be subjected to a drying treatment as necessary. A drying temperature is not particularly limited, and the lower limit thereof is preferably 30°C or higher, more preferably 60°C or higher, and still more preferably 80°C or higher. The upper limit of the drying temperature is preferably 300°C or lower and more preferably 250°C or lower.

A method of subjecting the coating film to a pressurization treatment is not particularly limited, and examples thereof include a method using a known press device (for example, a hydraulic cylinder pressing machine).

A pressurizing force at the time of the pressurization treatment is not particularly limited, but from the viewpoint that the ion conductivity of the solid electrolyte layer to be formed is more excellent, it is preferably 5 to 1,500 MPa and more preferably 300 to 600 MPa.

A time of the pressurization treatment is not particularly limited, but from the viewpoint that the ion conductivity of the solid electrolyte layer to be formed is more excellent and the viewpoint of productivity, it is preferably 1 minute to 6 hours and more preferably 1 to 20 minutes.

In addition, a heating treatment may be performed at the time of the pressurization treatment. A heating temperature at the time of the heating treatment is not particularly limited, but it is preferably 30 to 300°C; and a heating time is more preferably 1 minute to 6 hours.

The atmosphere during the pressurization is not particularly limited, and examples thereof include an atmosphere of atmospheric air, an atmosphere of dried air (dew point: -20°C or lower), and an atmosphere of inert gas (for example, argon, helium, or nitrogen).

The lithium-based solid electrolyte according to the embodiment of the present invention is also preferably used as a component of a composition for forming an electrode. That is, the composition for forming an electrode according to the embodiment of the present invention is preferably a composition containing the above-described lithium-based solid electrolyte according to the embodiment of the present invention, and an active material.

A mixing proportion of the lithium-based solid electrolyte and the active material in the composition for forming an electrode is not particularly limited, but a content ratio of the lithium-based solid electrolyte to the active material (mass of lithium-based solid electrolyte/mass of active material) is preferably 0.01 to 50 and more preferably 0.05 to 20, which is not particularly limited.

The lithium-based solid electrolyte contained in the composition for forming an electrode is as described above.

Examples of the active material include a positive electrode active material and a negative electrode active material. Hereinafter, the active material will be described in detail.

(Negative electrode active material)

As the negative electrode active material, a negative electrode active material capable of reversibly intercalating and deintercalating lithium ions is preferable. The negative electrode active material is not particularly limited, and examples thereof include a carbonaceous material, an oxide of a metal or a metalloid element, a lithium single substance, a lithium alloy, and a negative electrode active material capable of forming an alloy with lithium.

The carbonaceous material used as the negative electrode active material is a material substantially consisting of carbon. Examples thereof include petroleum pitch; carbon black such as acetylene black (AB); graphite (natural graphite and artificial graphite such as vapor-grown graphite); and carbonaceous material obtained by baking various synthetic resins such as a polyacrylonitrile (PAN)-based resin and a furfuryl alcohol resin.

Furthermore, examples thereof also include various carbon fibers such as PAN-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber; mesophase microspheres, graphite whisker, and tabular graphite.

These carbonaceous materials can be classified into non-graphitizable carbonaceous materials (also referred to as "hard carbon") and graphitizable carbonaceous materials, based on the graphitization degree.

In addition, it is preferable that the carbonaceous material has a surface spacing, density, or crystallite size described in JP1987-022066A (JP-S62-022066A), JP1990-006856A (JP-H2-006856A), and JP1991-045473A (JP-H3-045473A). The carbonaceous material is not necessarily a single material, and for example, may be a mixture of natural graphite and artificial graphite described in JP1993-090844A (JP-H5-090844A) or graphite having a coating layer described in JP1994-004516A (JP-H6-004516A).

The carbonaceous material is preferably hard carbon or graphite, and more preferably graphite.

The oxide of a metal element or a metalloid element, which can be used as the negative electrode active material, is not particularly limited as long as it is an oxide capable of intercalating and deintercalating lithium; and examples thereof include an oxide of a metal element (metal oxide), a composite oxide of a metal element, a composite oxide of a metal element and a metalloid element, and an oxide of a metalloid element (a metalloid oxide). The composite oxide of a metal element and the composite oxide of a metal element and a metalloid element are also collectively referred to as a metal composite oxide.

These oxides are preferably a noncrystalline oxide, and also preferably a chalcogenide which is a reaction product between a metal element and an element of Group 16 of the periodic table.

In the present invention, the metalloid element refers to an element having intermediate properties between those of a metal element and a non-semimetalloid element, and typically, the metalloid element includes six elements including boron, silicon, germanium, arsenic, antimony, and tellurium, and further includes three elements including selenium, polonium, and astatine.

In addition, the "noncrystalline" means an oxide having a broad scattering band with an apex in a range of 20° to 40° in terms of the 2θ value in case of being measured by an X-ray diffraction method using a CuKα ray, and the oxide may have a crystalline diffraction line. The highest intensity in a crystalline diffraction line observed in a range of 40° to 70° in

terms of the 2θ value is preferably 100 times or less and more preferably 5 times or less with respect to the intensity of a diffraction line at the apex in a broad scattering band observed in a range of 20° to 40° in terms of the 2θ value, and it is still more preferable that the oxide does not have a crystalline diffraction line.

In the compound group consisting of the noncrystalline oxides and the chalcogenides described above, the noncrystalline oxide of a metalloid element or the above-described chalcogenide is more preferable; and a (composite) oxide consisting of one element or a combination of two or more elements selected from elements (for example, Al, Ga, Si, Sn, Ge, Pb, Sb, and Bi) of Group 13 (IIIB) to Group 15 (VB) of the periodic table or the chalcogenide is particularly preferable.

The noncrystalline oxide and the chalcogenide are preferably $Ga_2O_3$, GeO, PbO, $PbO_2$, $Pb_2O_3$, $Pb_2O_4$, $Pb_3O_4$, $Sb_2O_3$, $Sb_2O_4$, $Sb_2O_8Bi_2O_3$, $Sb_2O_8Si_2O_3$, $Sb_2O_5$, $Bi_2O_3$, $Bi_2O_4$, GeS, PbS, $PbS_2$, $Sb_2S_3$, or $Sb_2S_5$.

As a negative electrode active material which can be used in combination with the noncrystalline oxide negative electrode active material mainly using Sn, Si, or Ge, a carbonaceous material capable of intercalating and deintercalating lithium ions or lithium metal, a lithium single substance, a lithium alloy, or a negative electrode active material capable of forming an alloy with lithium is preferable.

From the viewpoint of high current density charging and discharging characteristics, it is preferable that the oxide of a metal element or a metalloid element (particularly, the metal (composite) oxide) and the above-described chalcogenide contains at least one of titanium or lithium as a constitutional component.

Examples of the metal composite oxide containing lithium (lithium composite metal oxide) include a composite oxide of lithium oxide and the above-described metal composite oxide or the above-described chalcogenide. More specific examples thereof include $Li_2SnO_2$.

It is also preferable that the negative electrode active material (for example, the metal oxide) contains a titanium element (a titanium oxide). Specifically, $Li_4Ti_5O_{12}$ (lithium titanium oxide [LTO]) is preferable from the viewpoint that the volume variation during the intercalation and deintercalation of lithium ions is small, and thus high-speed charging and discharging characteristics are excellent, and deterioration of electrodes is suppressed, whereby it is possible to improve life of the all-solid-state lithium ion secondary battery. In addition, examples of the preferred negative electrode active material containing a titanium element also include $TiNb_2O_7$ (titanium-niobium oxide [TNO]).

The lithium alloy as the negative electrode active material is not particularly limited as long as it is typically used as a negative electrode active material for an all-solid-state lithium ion secondary battery, and examples thereof include a lithium aluminum alloy.

The negative electrode active material capable of forming an alloy with lithium is not particularly limited as long as it is typically used as a negative electrode active material for an all-solid-state lithium ion secondary battery. Examples of the above-described negative electrode active material include a negative electrode active material (alloy) containing a silicon element or a tin element and a metal such as Al and In; and a negative electrode active material containing a silicon element (silicon element-containing active material) capable of exhibiting high battery capacity is preferable, and a silicon element-containing active material in which a content of the silicon element is 50 mol% or more with respect to all constitutional elements is more preferable.

In general, a negative electrode containing the negative electrode active material (for example, an Si negative electrode containing the silicon element-containing active material or an Sn negative electrode containing an active material containing a tin element) can intercalate a larger amount of Li ions than a carbon negative electrode (for example, graphite or acetylene black). That is, the amount of Li ions intercalated per unit mass increases. Therefore, it is possible to increase the battery capacity. As a result, there is an advantage in that the battery driving duration can be further extended.

Examples of the silicon element-containing active material include a silicon-containing alloy (for example, $LaSi_2$, $VSi_2$, La-Si, Gd-Si, or Ni-Si) containing a silicon material such as Si and SiOx ($0 < x \leq 1$) and further containing titanium, vanadium, chromium, manganese, nickel, copper, or lanthanum; and a structured active material thereof (for example, $LaSi_2$/Si). In addition, examples thereof include an active material containing a silicon element and a tin element, such as $SnSiO_3$ and $SnSiS_3$. Since SiOx itself can be used as the negative electrode active material (the metalloid oxide) and Si is produced along with the operation of the all-solid-state lithium ion secondary battery, $SiO_x$ can be used as a negative electrode active material (or a precursor material thereof) capable of forming an alloy with lithium.

Examples of the negative electrode active material containing a tin element include Sn, SnO, $SnO_2$, SnS, $SnS_2$, and the above-described active material containing a silicon element and a tin element.

From the viewpoint of battery capacity, the negative electrode active material is preferably the negative electrode active material capable of forming an alloy with lithium, more preferably the above-described silicon material or the above-described silicon-containing alloy (alloy containing a silicon element), and still more preferably silicon (Si) or a silicon-containing alloy.

A shape of the negative electrode active material is not particularly limited, but is preferably a particle shape. A volume average particle size of the negative electrode active material is not particularly limited, and it is preferably 0.1 to 60 μm, more preferably 0.5 to 20 μm, and still more preferably 1.0 to 15 μm.

The volume average particle size is measured according to the following procedure.

Using water (in a case of being unstable in water, heptane), the negative electrode active material is diluted in a 20 mL sample bottle to prepare a 1% by mass dispersion liquid. The diluted dispersion liquid sample is irradiated with 1 kHz ultrasonic waves for 10 minutes, and then immediately used for test. Data collection is performed 50 times with the dispersion liquid sample using a laser diffraction/scattering-type particle size distribution analyzer and a quartz cell for measurement at a temperature of 25°C, thereby obtaining the volume average particle size. Other detailed conditions and the like can be found in JIS Z8828: 2013 "Particle Diameter Analysis-Dynamic Light Scattering", as necessary. Five samples are produced for each level, and the average value thereof is adopted.

One kind of the negative electrode active material may be used alone, or two or more kinds thereof may be used in combination.

The surface of the negative electrode active material may be subjected to surface coating with another metal oxide.

Examples of the surface coating agent include a metal oxide containing Ti, Nb, Ta, W, Zr, Al, Si, or Li. Examples thereof include titanium oxide spinel, tantalum-based oxides, niobium-based oxides, and lithium niobate-based compounds; and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, and $B_2O_3$.

In addition, the surface of the electrode containing the negative electrode active material may be subjected to a surface treatment with sulfur or phosphorus.

Furthermore, the particle surface of the negative electrode active material may be subjected to a surface treatment with an actinic ray or an active gas (for example, plasma) before or after the above-described surface coating.

(Positive electrode active material)

As the positive electrode active material, a positive electrode active material capable of reversibly intercalating and/or deintercalating lithium ions is preferable. The positive electrode active material is not particularly limited, and is preferably a transition metal oxide and more preferably a transition metal oxide containing a transition metal element $M^a$ (one or more kinds of elements selected from Co, Ni, Fe, Mn, Cu, and V). In addition, an element $M^b$ (an element of Group 1 (Ia) of the periodic table other than lithium, an element of Group 2 (IIa), or an element such as Al, Ga, In, Ge, Sn, Pb, Sb, Bi, Si, P, or B) may be mixed into the transition metal oxide. The mixed amount is preferably 0 to 30 mol% with respect to the amount (100 mol%) of the transition metal element $M^a$. It is more preferable that the transition metal oxide is synthesized by mixing the above-described components such that a molar ratio $Li/M^a$ is 0.3 to 2.2.

Specific examples of the transition metal oxide include (MA) transition metal oxides having a bedded salt-type structure, (MB) transition metal oxides having a spinel-type structure, (MC) lithium-containing transition metal phosphoric acid compounds, (MD) lithium-containing transition metal halogenated phosphoric acid compounds, and (ME) lithium-containing transition metal silicate compounds. Among them, the transition metal oxide having a bedded salt-type structure (MA) is preferable, and $LiCoO_2$ or $LiNi_{1/3}Co_{1/3}Mn_{1/3}O_2$ is more preferable.

Examples of the transition metal oxide having a bedded salt-type structure (MA) include $LiCoO_2$ (lithium cobalt oxide [LCO]), $LiNi_2O_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickelate).

Examples of the transition metal oxide having a spinel-type structure (MB) include $LiMn_2O_4$ (LMO), $LiCoMnO_4$, $Li_2FeMn_3O_8$, $Li_2CuMn_3O_8$, $Li_2CrMn_3O_8$, and $LiNi_{0.5}Mn_{1.5}O_4$ (LNMO).

Examples of the lithium-containing transition metal phosphoric acid compound (MC) include olivine-type iron phosphate salts such as $LiFePO_4$ and $Li_3Fe_2(PO_4)_3$; cobalt phosphates such as $LiCoPO_4$; iron pyrophosphates such as $LiFeP_2O_7$; and monoclinic NASICON-type vanadium phosphate salts such as $Li_3V_2(PO_4)_3$ (lithium vanadium phosphate).

Examples of the lithium-containing transition metal halogenated phosphoric acid compound (MD) include iron fluorophosphates such as $Li_2FePO_4F$, manganese fluorophosphates such as $Li_2MnPO_4F$, and cobalt fluorophosphates such as $Li_2CoPO_4F$.

Examples of the lithium-containing transition metal silicate compound (ME) include $Li_2FeSiO_4$, $Li_2MnSiO_4$, and $Li_2CoSiO_4$.

A shape of the positive electrode active material is not particularly limited, but is preferably a particle shape. A volume average particle size of the positive electrode active material is not particularly limited, but is preferably 0.1 to 50 μm. The volume average particle size of the positive electrode active material particles can be measured in the same manner as the volume average particle diameter of the negative electrode active material described above.

A positive electrode active material obtained using a baking method may be used after being washed with water, an acidic aqueous solution, an alkaline aqueous solution, or an organic solvent.

The positive electrode active material may be surface-coated with the surface coating agent, sulfur, or phosphorus, and further with actinic ray, same as the negative electrode active material.

One kind of the positive electrode active material may be used alone, or two or more kinds thereof may be used in combination.

The composition for forming an electrode may contain a component other than the lithium-based solid electrolyte and the active materials.

The composition for forming an electrode may contain a conductive auxiliary agent.

As the conductive auxiliary agent, a conductive auxiliary agent which is known as a general conductive auxiliary agent can be used. Examples of the conductive auxiliary agent include graphite such as natural graphite and artificial graphite, carbon black such as acetylene black, Ketjen black, and furnace black, amorphous carbon such as needle cokes, carbon fiber such as vapor-grown carbon fiber and carbon nanotube, and a carbonaceous material such as graphene and fullerene, which are electron-conductive materials. Furthermore, a conductive polymer such as polyaniline, polypyrrole, polythiophene, polyacetylene, and a polyphenylene derivative may also be used.

In addition to the above-described conductive auxiliary agent, a general conductive auxiliary agent containing no carbon atom, such as metal powder and metal fiber, may be used.

The conductive auxiliary agent refers to a conductive auxiliary agent which does not cause the intercalation and deintercalation of Li at the time of charging and discharging of the battery, and does not function as an active material. As a result, among conductive auxiliary agents, a conductive auxiliary agent which can function as the active material in the active material layer at the time of charging and discharging of the battery is classified as the active material, not as the conductive auxiliary agent. Whether or not the conductive auxiliary agent functions as the active material at the time of charging and discharging of the battery is not unambiguously determined, and determined by a combination with the active material.

In addition, examples of the other components also include the above-described binder and lithium salt.

The composition for forming an electrode may contain a dispersion medium.

Examples of the dispersion medium include water and various organic solvents.

The composition for forming an electrode may contain, as a component other than the above-described respective components, an ionic liquid, a thickener, a crosslinking agent (a crosslinking agent that undergoes a crosslinking reaction by radical polymerization, condensation polymerization, or ring-opening polymerization), a polymerization initiator (a polymerization initiator that generates an acid or a radical by heat or light), an antifoaming agent, a leveling agent, a dehydrating agent, or an antioxidant.

The method of forming an electrode (a negative electrode active material layer and a positive electrode active material layer) using the above-described composition for forming an electrode is not particularly limited, and examples thereof include a method of applying the composition for forming an electrode to form an electrode. As necessary, the formed coating film may be subjected to a pressurization treatment.

A coating method of the composition for forming an electrode is not particularly limited, and examples thereof include spray coating, spin coating, dip coating, slit coating, stripe coating, an aerosol deposition method, thermal spraying, and bar coating.

After applying the composition for forming an electrode, the obtained coating film may be subjected to a drying treatment as necessary. A drying temperature is not particularly limited, and the lower limit thereof is preferably 30°C or higher, more preferably 60°C or higher, and still more preferably 80°C or higher. The upper limit of the drying temperature is preferably 300°C or lower and more preferably 250°C or lower.

A method of subjecting the coating film to a pressurization treatment is not particularly limited, and examples thereof include a method using a known press device (for example, a hydraulic cylinder pressing machine).

A pressurizing force at the time of the pressurization treatment is not particularly limited, but it is preferably 5 to 1,500 MPa and more preferably 300 to 600 MPa.

A time of the pressurization treatment is not particularly limited, but from the viewpoint of productivity, it is preferably 1 minute to 6 hours and more preferably 1 to 20 minutes.

In addition, a heating treatment may be performed at the time of the pressurization treatment. A heating temperature at the time of the heating treatment is not particularly limited, but it is preferably 30 to 300°C; and a heating time is preferably 1 minute to 6 hours.

The atmosphere during the pressurization is not particularly limited, and examples thereof include an atmosphere of atmospheric air, an atmosphere of dried air (dew point: -20°C or lower), and an atmosphere of inert gas (for example, argon, helium, or nitrogen).

<Solid electrolyte sheet>

The lithium-based solid electrolyte according to the embodiment of the present invention may be contained in a solid electrolyte sheet.

The solid electrolyte sheet is preferably used as a solid electrolyte sheet for an all-solid-state battery.

The solid electrolyte sheet can be formed by molding the lithium-based solid electrolyte according to the embodiment of the present invention into a sheet shape. The molding method is not particularly limited, and for example, a dispersion liquid containing the lithium-based solid electrolyte according to the embodiment of the present invention may

be subjected to press molding to form a sheet.

<Electrode sheet for all-solid-state secondary battery>

The lithium-based solid electrolyte according to the embodiment of the present invention may be contained in an electrode sheet for an all-solid-state secondary battery. In particular, the lithium-based solid electrolyte according to the embodiment of the present invention may be contained in an electrode sheet for an all-solid-state lithium ion secondary battery.

Hereinafter, the electrode sheet for an all-solid-state lithium ion secondary battery will be described in detail.

The electrode sheet for an all-solid-state lithium ion secondary battery according to the embodiment of the present invention is a sheet-shaped molded body capable of forming an electrode active material layer of an all-solid-state lithium ion secondary battery, and is preferably used for an electrode or a laminate of an electrode and a solid electrolyte layer.

It is sufficient that the electrode sheet for an all-solid-state lithium ion secondary battery according to the embodiment of the present invention (also simply referred to as "electrode sheet") is an electrode sheet including an active material electrode layer (hereinafter, simply also referred to as "active material electrode layer") selected from the group consisting of a negative electrode active material layer and a positive electrode active material layer, and it may be a sheet in which the active material electrode layer is formed on a substrate (collector) or may be a sheet which is formed from the active material electrode layer without including the substrate. The electrode sheet is typically a sheet including the collector and the active material electrode layer, and examples thereof include an aspect including the collector, the active material electrode layer, and the solid electrolyte layer in this order, and an aspect including the collector, the active material electrode layer, the solid electrolyte layer, and the active material electrode layer in this order.

The electrode sheet according to the embodiment of the present invention may include the above-described other layers. A layer thickness of each of the layers constituting the electrode sheet according to the embodiment of the present invention is the same as a layer thickness of each of the layers described later regarding the all-solid-state lithium ion secondary battery.

In the sheet for an all-solid-state lithium ion secondary battery according to the embodiment of the present invention, at least one of the active material electrode layers contains the lithium-based solid electrolyte according to the embodiment of the present invention.

A manufacturing method of the electrode sheet for an all-solid-state lithium ion secondary battery according to the embodiment of the present invention is not particularly limited, and for example, the electrode sheet for an all-solid-state lithium ion secondary battery according to the embodiment of the present invention can be manufactured by forming the active material electrode layer using the composition for forming an electrode according to the embodiment of the present invention.

Examples thereof include a method of applying the composition for forming an electrode onto a collector (another layer may be interposed therebetween) to form a coating film, and subjecting the coating film to a pressurization treatment.

Examples of the method of applying the composition for forming an electrode and the method of subjecting the coating film to a pressurization treatment include the methods described in the composition for forming an electrode.

<All-solid-state secondary battery>

The all-solid-state secondary battery according to the embodiment of the present invention includes a positive electrode active material layer, a negative electrode active material layer facing the positive electrode active material layer, and a solid electrolyte layer disposed between the positive electrode active material layer and the negative electrode active material layer. The positive electrode active material layer is preferably formed on a positive electrode collector to constitute a positive electrode. The negative electrode active material layer is preferably formed on a negative electrode collector to constitute a negative electrode.

It is preferable that at least one layer of the negative electrode active material layer, the positive electrode active material layer, or the solid electrolyte layer contains the lithium-based solid electrolyte according to the embodiment of the present invention.

That is, the present invention also relates to an electrode for an all-solid-state secondary battery, including an active material layer containing the lithium-based solid electrolyte according to the embodiment of the present invention, and a collector.

Hereinafter, the all-solid-state lithium ion secondary battery according to the embodiment of the present invention will be described in detail.

The all-solid-state lithium ion secondary battery according to the embodiment of the present invention includes a positive electrode active material layer, a negative electrode active material layer facing the positive electrode active material layer, and a solid electrolyte layer disposed between the positive electrode active material layer and the negative

electrode active material layer. The positive electrode active material layer is preferably formed on a positive electrode collector to constitute a positive electrode. The negative electrode active material layer is preferably formed on a negative electrode collector to constitute a negative electrode.

At least one layer of the negative electrode active material layer, the positive electrode active material layer, or the solid electrolyte layer contains the lithium-based solid electrolyte according to the embodiment of the present invention.

A thickness of each of the negative electrode active material layer, the solid electrolyte layer, and the positive electrode active material layer is not particularly limited. In consideration of a dimension of a general all-solid-state lithium ion secondary battery, the thickness of each of the layers is preferably 10 to 1,000 μm, and more preferably 20 μm or more and less than 500 μm.

The thickness of at least one of the positive electrode active material layer or the negative electrode active material layer is still more preferably 50 μm or more and less than 500 μm.

Each of the positive electrode active material layer and the negative electrode active material layer may include a collector on a side opposite to the solid electrolyte layer.

Depending on applications, the solid-state lithium ion secondary battery according to the embodiment of the present invention may be used as an all-solid-state lithium ion secondary battery in the above-described structure, but it is preferable to be used by being enclosed in a more appropriate housing in order to be in a form of a dry cell. The housing may be a metallic housing or a resin (plastic) housing. Examples of the metallic housing include a housing of an aluminum alloy and a housing made of stainless steel. It is preferable that the metallic housing is classified into a positive electrode-side housing and a negative electrode-side housing and that the positive electrode-side housing and the negative electrode-side housing are electrically connected to the positive electrode collector and the negative electrode collector, respectively. The positive electrode-side housing and the negative electrode-side housing are preferably integrated by being joined together through a gasket for short circuit prevention.

Hereinafter, an all-solid-state lithium ion secondary battery according to an example of a preferred embodiment of the present invention will be described with reference to Fig. 16, but the present invention is not limited thereto.

Fig. 16 is a cross-sectional view schematically showing an all-solid-state lithium ion secondary battery according to a preferred embodiment of the present invention. An all-solid-state lithium ion secondary battery 10 according to the present embodiment includes a negative electrode collector 1, a negative electrode active material layer 2, a solid electrolyte layer 3, a positive electrode active material layer 4, and a positive electrode collector 5 in this order as viewed from the negative electrode side.

At least one layer of the negative electrode active material layer 2, the positive electrode active material layer 4, or the solid electrolyte layer 3 contains the lithium-based solid electrolyte according to the embodiment of the present invention.

The respective layers are in contact with each other to form an adjacent structure. By adopting such a structure, during charging, electrons ($e^-$) are supplied to the negative electrode side, and lithium ions ($Li^+$) are accumulated in the negative electrode. On the other hand, during discharging, lithium ions ($Li^+$) accumulated in the negative electrode are returned to the positive electrode side, and electrons are supplied to an operation portion 6. In the illustrated example, an electric bulb is employed as a model of the operation portion 6, and is lit by the discharging.

The negative electrode active material layer 2 contains the above-described negative electrode active material.

The positive electrode active material layer 4 contains the above-described positive electrode active material.

The positive electrode collector 5 and the negative electrode collector 1 are preferably an electron conductor.

Examples of a material for forming the positive electrode collector include aluminum, an aluminum alloy, stainless steel, nickel, and titanium; and aluminum or an aluminum alloy is preferable. Examples of the positive electrode collector include a collector obtained by subjecting a surface of aluminum or stainless steel to a treatment with carbon, nickel, titanium, or silver (collector on which a thin film is formed).

Examples of a material for forming the negative electrode collector include aluminum, copper, a copper alloy, stainless steel, nickel, and titanium; and aluminum, copper, a copper alloy, or stainless steel is preferable. Examples of the negative electrode collector include a collector obtained by subjecting a surface of aluminum, copper, a copper alloy, or stainless steel to a treatment with carbon, nickel, titanium, or silver.

A shape of the collector is generally a film sheet shape, but another shape may be used.

A thickness of the collector is not particularly limited, but is preferably 1 to 500 μm.

**In** addition, protrusions and recesses are preferably provided on a surface of the collector by performing a surface treatment.

A manufacturing method of the above-described all-solid-state lithium ion secondary battery is not particularly limited, and examples thereof include known methods. Among these, a method using the above-described composition for forming an electrode and/or dispersion liquid for forming a solid electrolyte layer is preferable.

For example, a composition for forming a positive electrode, which contains a positive electrode active material, is applied onto a metal foil which is a positive electrode collector to form a positive electrode active material layer; a dispersion liquid for forming a solid electrolyte layer is subsequently applied onto this positive electrode active material

layer to form a solid electrolyte layer; a composition for forming a negative electrode, which contains a negative electrode active material, is further applied onto the solid electrolyte layer to form a negative electrode active material layer; and a negative electrode collector (metal foil) is superimposed on the negative electrode active material layer to subject the obtained laminate to a pressurization treatment, whereby it is possible to obtain an all-solid-state lithium ion secondary battery having a structure in which the solid electrolyte layer is sandwiched between the positive electrode active material layer and the negative electrode active material layer. The battery can be enclosed in a housing to obtain a desired all-solid-state lithium ion secondary battery.

In addition, the all-solid-state lithium ion secondary battery can also be manufactured by reversing the method of forming each layer, which includes forming the negative electrode active material layer, the solid electrolyte layer, and the positive electrode active material layer on the negative electrode collector, and superimposing the positive electrode collector thereon.

In addition, as another method, the all-solid-state lithium ion secondary battery may be manufactured by separately producing the positive electrode active material layer, the solid electrolyte layer, and the negative electrode active material layer, and forming these layers into a laminate.

It is preferable that the all-solid-state lithium ion secondary battery is initialized after production or before use. The initialization is not particularly limited, and it is possible to initialize the all-solid-state lithium ion secondary battery by, for example, performing initial charging and discharging in a state in which a pressing pressure is increased and then releasing the pressure until the general use pressure of the all-solid-state lithium ion secondary battery.

<Applications of all-solid-state secondary battery>

The all-solid-state secondary battery (particularly, the all-solid-state lithium ion secondary battery) according to the embodiment of the present invention can be applied to various applications. The application aspect is not particularly limited, and in a case of being mounted in an electronic apparatus, examples thereof include a notebook computer, a pen-based input personal computer, a mobile personal computer, an e-book player, a mobile phone, a cordless phone handset, a pager, a handy terminal, a portable fax, a mobile copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, and a backup power supply. Additionally, in a case of being used for consumer applications, examples thereof include an automobile, an electric vehicle, a motor, a lighting instrument, a toy, a game device, a road conditioner, a watch, a strobe, a camera, and a medical device (a pacemaker, a hearing aid, a shoulder massage device, and the like). Furthermore, the secondary battery according to the embodiment of the present invention can be used for various military usages and universe usages. In addition, the secondary battery according to the embodiment of the present invention can also be combined with a solar battery.

Examples

Hereinafter, features of the present invention will be described in more detail with reference to Examples and Comparative Examples. The materials, amounts used, proportions, treatment details, treatment procedure, and the like shown in the following Examples can be appropriately changed without departing from the spirit and scope of the present invention. Accordingly, the scope of the present invention should not be construed as being limited by the specific examples given below.

<Example 1>

Using a ball mill (P-7 manufactured by FRITSCH), $Li_2B_4O_7$ (247) powder (manufactured by RARE METALLIC Co., Ltd.) was subjected to ball milling under the following conditions, pot: stabilized zirconia (YSZ) (45 ml), pulverization ball: stabilized zirconia (YSZ) (average particle diameter: 5 mm, number of balls: 50), rotation speed: 370 revolutions per minute (rpm), amount of LBO powder (powdery $Li_2B_4O_7$ crystal (manufactured by RARE METALLIC Co., Ltd.)): 1 g, atmosphere: air, and treatment time of ball milling: 100 hours, thereby obtaining a lithium compound. A particle size distribution of the obtained lithium compound was approximately several $\mu$m to 10 $\mu$m, and a median diameter (D50) thereof was 1.5 $\mu$m.

0.05 g of $Li(FSO_2)_2N$ (LiFSI) as a Li salt was added to the obtained lithium compound, and the mixture was further subjected to ball milling for 100 hours. The obtained powder was added to water such that a powder concentration was 42% by mass, and the mixture was subjected to an ultrasonic treatment for 30 minutes.

Subsequently, the obtained dispersion liquid was transferred to a glass petri dish, and dried at 120°C for 2 hours in the air to obtain a film of lithium-based solid electrolyte. Subsequently, the obtained film was peeled off to obtain powder. The obtained powder was allowed to stand in the air for a certain period of time, and then the following evaluations were performed.

Using the lithium-based solid electrolyte obtained above, an X-ray total scattering measurement was performed with SPring-8 BL04B2 (acceleration voltage: 61.4 keV, wavelength: 0.2019 Å). The sample was sealed in a Capton capillary of 2 mmφ or 1 mmφ, and the experiment was performed. The obtained data were subjected to Fourier transform as described above to obtain a reduced pair distribution function.

As a result of the analysis, in the reduced pair distribution function G(r) obtained from the X-ray total scattering measurement, it was confirmed that, in a range where r was 1 to 5 Å, a first peak in which G(r) of the peak top was more than 1.0 and the peak top was located at 1.43 Å and a second peak in which G(r) of the peak top was more than 1.0 and the peak top was located at 2.40 Å were observed; and the absolute value of G(r) in a range where r was more than 5 Å and 10 Å or less was less than 1.0 other than a region of 3.50 ± 0.2 Å, 3.99 ± 0.2 Å, 5.85 ± 0.2 Å, 6.20 ± 0.2 Å, 7.25 ± 0.2 Å, 9.50 ± 0.2 Å, and 9.75 ± 0.2 Å.

From the above results, it was found that the lithium-based solid electrolyte obtained by adding LiFSI and performing dispersion in water was amorphous. On the other hand, in the lithium-based solid electrolyte, the peak attributed to the B-O interatomic distance and the B-B interatomic distance, observed in the general lithium tetraborate crystal, was maintained. The general lithium tetraborate crystal has a structure (diborate structure) in which a $BO_4$ tetrahedron and a $BO_3$ triangle are present at a ratio of 1:1, and it is presumed that this structure is maintained in the lithium-based solid electrolyte.

A proportion {(Full-width 2 at half maximum/Full-width 1 at half maximum) × 100} of a full-width at half maximum (full-width 2 at half maximum) of a peak in which a chemical shift appeared in a range of -100 to +100 ppm in a spectrum obtained in a case where the solid $^7$Li-NMR measurement of the lithium-based solid electrolyte obtained above was performed at 120°C with respect to a full-width at half maximum (full-width 1 at half maximum) of a peak in which a chemical shift appeared in a range of -100 to +100 ppm in a spectrum obtained in a case where the solid $^7$Li-NMR measurement of the lithium-based solid electrolyte obtained above was performed at 20°C was 33%.

In a case where the first peak appearing in a range of -100 to +100 ppm in the spectrum obtained in a case where the solid $^7$Li-NMR measurement was performed at 20°C was waveform-separated, a second peak having a full-width at half maximum of 5 ppm or less appeared in a range with a chemical shift of -3 to 3 ppm, and a proportion of an area intensity of the second peak to an area intensity of the first peak was 4%.

Using the lithium-based solid electrolyte obtained above, an infrared absorption spectrum measurement was performed under the conditions described above, and as a result, in the obtained infrared absorption spectrum, a ratio of a maximum absorption intensity in a wave number range of 3,000 to 3,500 $cm^{-1}$ to a maximum absorption intensity in a wave number range of 800 to 1,600 $cm^{-1}$ was 0.72.

In the Raman spectrum of the obtained lithium-based solid electrolyte, the coefficient of determination obtained by performing linear regression analysis according to a least-squares method in a wave number range of 600 to 850 $cm^{-1}$ was 0.9974.

As a result of measuring a mass reduction rate in a case where the obtained lithium-based solid electrolyte was heated from 25°C to 800°C using a TG-DTA device under conditions described later, the obtained mass reduction rate was 29.8%.

Regarding the analysis of each of elements in the obtained lithium-based solid electrolyte, quantitative analysis was performed by ICP-OES for lithium and boron or by combustion ion chromatography (combustion IC) for fluorine and sulfur, estimation was performed for N from the analytical mass of sulfur in consideration of the amount of each of atoms in the Li salt, the analytical masses of elements other than O were added together for O, and calculation was performed in terms of the difference from the total amount of the powder. The results are shown in the tables described later.

<Example 2>

Using a ball mill (P-7 manufactured by FRITSCH), $Li_2B_4O_7$ (247) powder (manufactured by RARE METALLIC Co., Ltd.) was subjected to ball milling under the following conditions, pot: stabilized zirconia (YSZ) (45 ml), pulverization ball: stabilized zirconia (YSZ) (average particle diameter: 5 mm, number of balls: 50), rotation speed: 370 rpm, amount of LBO powder (powdery $Li_2B_4O_7$ crystal (manufactured by RARE METALLIC Co., Ltd.)): 1 g, atmosphere: air, and treatment time of ball milling: 100 hours, thereby obtaining a lithium compound.

The obtained lithium compound was added to water such that a powder concentration was 42% by mass, and the mixture was subjected to an ultrasonic treatment for 30 minutes.

Next, 0.05 g of $Li(FSO_2)_2N$ (LiFSI) was added to the obtained dispersion liquid, and the mixture was further subjected to an ultrasonic treatment for 30 minutes.

Subsequently, the obtained dispersion liquid was transferred to a glass petri dish, and dried at 120°C for 2 hours in the air to obtain a film of lithium-based solid electrolyte. Subsequently, the obtained film was peeled off to obtain powder. The obtained powder was allowed to stand in the air for a certain period of time, and then various evaluations were performed in the same manner as in Example 1. The results are summarized in the tables described later.

<Example 3>

Using a ball mill (P-7 manufactured by FRITSCH), $Li_2B_4O_7$ (247) powder (manufactured by RARE METALLIC Co., Ltd.) was subjected to ball milling under the following conditions, pot: made of stabilized zirconia (YSZ) (45 ml), pulverization ball: made of stabilized zirconia (YSZ) (average particle diameter: 5 mm, weight: 70 g), rotation speed: 530 rpm, amount of LBO powder (powdery $Li_2B_4O_7$ crystal (manufactured by RARE METALLIC Co., Ltd.)): 4.2 g, atmosphere: air, and treatment time of ball milling: 100 hours, thereby obtaining a lithium compound. The obtained lithium compound was added to water such that a powder concentration was 42% by mass, and the mixture was subjected to an ultrasonic treatment for 60 minutes to obtain a dispersion liquid 1.

Next, 2.32 g of $Li(FSO_2)_2N$ (LiFSI) was added to water such that a concentration of powder was 87% by mass, and the mixture subjected to an ultrasonic treatment for 60 minutes to obtain a solution 2.

The obtained dispersion liquid 1 and solution 2 were mixed, and stirred and mixed with a magnetic stirrer for 60 minutes. Subsequently, the obtained dispersion liquid was vacuum-dried at 40°C and 10 Pa for 15 hours to obtain powder (lithium-based solid electrolyte). The obtained powder was allowed to stand in the air for a certain period of time, and then various evaluations were performed in the air in the same manner as in Example 1. The results are summarized in the tables described later.

<Example 4>

Using a ball mill (P-7 manufactured by FRITSCH), $Li_2B_4O_7$ (247) powder (manufactured by RARE METALLIC Co., Ltd.) was subjected to ball milling under the following conditions, pot: made of stabilized zirconia (YSZ) (45 ml), pulverization ball: made of stabilized zirconia (YSZ) (average particle diameter: 5 mm, weight: 70 g), rotation speed: 530 rpm, amount of LBO powder (powdery $Li_2B_4O_7$ crystal (manufactured by RARE METALLIC Co., Ltd.)): 4.2 g, atmosphere: air, and treatment time of ball milling: 100 hours, thereby obtaining a lithium compound. The obtained lithium compound was added to water such that a powder concentration was 42% by mass, and the mixture was subjected to an ultrasonic treatment for 60 minutes to obtain a dispersion liquid 3.

Next, 3.25 g of $Li(FSO_2)_2N$ (LiFSI) was added to water such that a concentration of powder was 87% by mass, and the mixture subjected to an ultrasonic treatment for 60 minutes to obtain a solution 4.

The obtained dispersion liquid 3 and solution 4 were mixed, and stirred and mixed with a magnetic stirrer for 60 minutes. Subsequently, the obtained dispersion liquid was vacuum-dried at 40°C and 10 Pa for 15 hours to obtain powder (lithium-based solid electrolyte). The obtained powder was allowed to stand in the air for a certain period of time, and then various evaluations were performed in the air in the same manner as in Example 1. The results are summarized in the tables described later.

<Example 5>

Using a ball mill (P-7 manufactured by FRITSCH), $Li_2B_4O_7$ (247) powder (manufactured by RARE METALLIC Co., Ltd.) was subjected to ball milling under the following conditions, pot: made of stabilized zirconia (YSZ) (45 ml), pulverization ball: made of stabilized zirconia (YSZ) (average particle diameter: 5 mm, weight: 70 g), rotation speed: 530 rpm, amount of LBO powder (powdery $Li_2B_4O_7$ crystal (manufactured by RARE METALLIC Co., Ltd.)): 4.2 g, atmosphere: air, and treatment time of ball milling: 100 hours, thereby obtaining a lithium compound. The obtained lithium compound was added to water such that a powder concentration was 42% by mass, and the mixture was subjected to an ultrasonic treatment for 60 minutes to obtain a dispersion liquid 5.

Next, 4.65 g of $Li(FSO_2)_2N$ (LiFSI) was added to water such that a concentration of powder was 87% by mass, and the mixture subjected to an ultrasonic treatment for 60 minutes to obtain a solution 6.

The obtained dispersion liquid 5 and solution 6 were mixed, and stirred and mixed with a magnetic stirrer for 60 minutes. Subsequently, the obtained dispersion liquid was vacuum-dried at 40°C and 10 Pa for 15 hours to obtain powder (lithium-based solid electrolyte). After the vacuum drying, various evaluations were performed in the air in the same manner as in Example 1 using the obtained powder. The results are summarized in the tables described later.

<Example 6>

Using a ball mill (P-7 manufactured by FRITSCH), $Li_2B_4O_7$ (247) powder (manufactured by RARE METALLIC Co., Ltd.) was subjected to ball milling under the following conditions, pot: made of stabilized zirconia (YSZ) (45 ml), pulverization ball: made of stabilized zirconia (YSZ) (average particle diameter: 5 mm, weight: 70 g), rotation speed: 530 rpm, amount of LBO powder (powdery $Li_2B_4O_7$ crystal (manufactured by RARE METALLIC Co., Ltd.)): 4.2 g, atmosphere: air, and treatment time of ball milling: 100 hours, thereby obtaining a lithium compound. The obtained lithium compound was added to water such that a powder concentration was 42% by mass, and the mixture was subjected to an ultrasonic

treatment for 60 minutes to obtain a dispersion liquid 7.

Next, 7.13 g of $Li(F_3CSO_2)_2N$ (LiTFSI) was added to water such that a concentration of powder was 87% by mass, and the mixture subjected to an ultrasonic treatment for 60 minutes to obtain a solution 8.

The obtained dispersion liquid 7 and solution 8 were mixed, and stirred and mixed with a magnetic stirrer for 60 minutes. Subsequently, the obtained dispersion liquid was vacuum-dried at 40°C and 10 Pa for 15 hours to obtain powder (lithium-based solid electrolyte). The obtained powder was allowed to stand in the air for a certain period of time, and then various evaluations were performed in the air in the same manner as in Example 1. The results are summarized in the tables described later.

In Example 6, the amount of carbon shown in Table 1 was estimated from the analytical mass of sulfur in consideration of the amount of each of atoms in the Li salt.

<Comparative Example 1>

Powdery $Li_2B_4O_7$ crystals (the LBO powder) (manufactured by RARE METALLIC Co., Ltd.) (crystal powder) was subjected to powder compaction molding at 27°C (room temperature) and an effective pressure of 200 MPa to obtain a compacted powder body for comparison. The ion conductivity of the obtained compacted powder body could not be detected.

<Reference Example 1>

Using a ball mill (P-7 manufactured by FRITSCH), $Li_2B_4O_7$ (LBO) powder (manufactured by RARE METALLIC Co., Ltd.) was subjected to ball milling under the following conditions, pot: stabilized zirconia (YSZ) (45 ml), pulverization ball: stabilized zirconia (YSZ) (average particle diameter: 5 mm, number of balls: 50), rotation speed: 500 rpm, amount of LBO powder (powdery $Li_2B_4O_7$ crystal (manufactured by RARE METALLIC Co., Ltd.)): 2 g, atmosphere: air, and treatment time of ball milling: 100 hours, thereby obtaining a lithium compound. The obtained lithium compound was allowed to stand in the air for a certain period of time, and then various evaluations were performed in the same manner as in Example 1.

A particle size distribution of the obtained lithium compound was approximately several $\mu$m to 10 $\mu$m, and a median diameter (D50) thereof was 1.5 $\mu$m. In addition, a bulk elastic modulus of the obtained lithium compound was 36 GPa. A bulk elastic modulus of the LBO powder before the ball mill treatment was 47 GPa.

The bulk elastic modulus of the lithium compound was measured according to an ultrasonic attenuation method. Specifically, first, a suspension in which the lithium compound was suspended in pure water was produced. A content of the lithium compound in the suspension was set to 1.2% by mass with respect to the total mass of the suspension. Next, the ultrasonic attenuation spectrum of the above-described suspension was measured, and the bulk elastic modulus (GPa) of the lithium compound was determined from the fitting according to the scattering attenuation theoretical expression. At the time of calculating the bulk elastic modulus, the fitting was performed by setting a density of the specific solid electrolyte to 2.3 g/mL and a Poisson's ratio to 0.12. In addition, regarding the fitting according to the above-described scattering attenuation theoretical expression, the bulk elastic modulus was calculated by using the expression (7), expression (12), and expression (13) described in Kohjiro Kubo et al., Ultrasonics 62 (2015), pp. 186 to 194.

<Various evaluations>

(Measurement of ion conductivity (1))

The lithium-based solid electrolyte obtained in each of Examples was subjected to powder compaction molding at room temperature (27°C) and an effective pressure of 200 MPa to obtain a compacted powder body. In foils were respectively installed on a front surface and a back surface of the obtained compacted powder body, and the ion conductivity was estimated from the analysis of the arc diameter of Cole-Cole plot (Nyquist plot) obtained by measuring the alternating current impedance (measurement temperature: 27°C or 60°C, applied voltage: 50 mV, measurement frequency range: 1Hz to 1 MHz) with the two In electrodes being interposed. The obtained values of the ion conductivities at the measurement temperatures of 27°C and 60°C are shown in Table 2.

(Content of water)

The content of water contained in the lithium-based solid electrolyte obtained in each of Examples was determined from the measurement result of the lithium-based solid electrolyte by the element analysis method and the type of the component used.

The content of water with respect to the total mass of the lithium-based solid electrolyte obtained in Examples 1 to 6, which was determined by the above-described method, is summarized in Table 2.

(SEM-EDX analysis)

400 mg of the lithium-based solid electrolyte obtained in Example 5 was subjected to powder compaction molding at 27°C and an effective pressure of 200 MPa using a pressurization molding machine to produce a compacted powder body (pellet) (10 mmφ, thickness: 2 mm). The obtained compacted powder body was sandwiched between battery jigs, and stored in an airtight container containing a silica gel drying agent for 48 hours in a state in which a restraining pressure of 60 MPa was applied, thereby drying the compacted powder body.

The dried compacted powder body was cut, and the exposed rough cross section was polished under the following conditions using a cross section polisher (CCP) device.

· Device: "SM-9020CP" manufactured by JEOL Ltd.
· Processing time: 4.5 hours
· Processing temperature: -120°C
· Processing range: 500 μm (half-width)

Next, a K-line spectrum of each of sulfur, boron, nitrogen, oxygen, and fluorine was detected using the following SEM-EDX apparatus, and a mapping image showing the composition distribution in the exposed cross section was obtained.

· Field emission-electron probe microanalyzer (FE-EPMA): "JXA-8530F" manufactured by JEOL Ltd.
· Acceleration voltage: 10 kV
· Observation magnification: 100 to 1,000 times

From the mapping image obtained by the above-described apparatus, a cross-sectional structure of the compacted powder body was observed and composition analysis was performed.

Fig. 14 shows the mapping image obtained by the above-described SEM-EDX analysis. In the obtained mapping image, a region where a sulfur element was detected by the SEM-EDX analysis is shown as a bright portion, and a network structure in which a particle-shaped dark portion was surrounded by the bright portion forming a continuous phase was formed. In the lithium-based solid electrolyte obtained in Example 5, the sulfur element was contained in the lithium salt, but was not contained in the lithium tetraborate and water. From the above, as a result of the observation by the SEM-EDX analysis, it was confirmed that the network structure was formed by a region where the lithium salt was present in a cross section of a molded body obtained by pressurizing the lithium-based solid electrolyte obtained in Example 5. As shown in Fig. 14, it is presumed that the lithium salt has a wide mesh-like structure and functions as an excellent ion conduction path, thereby obtaining excellent ion conductivity.

In the same manner as in Example 5, a compacted powder body was produced using the lithium-based solid electrolytes obtained in Examples 1 to 4 and 6, and as a result of performing the SEM-EDX analysis on a cross section of the obtained compacted powder body, it was confirmed that a network structure was formed in a region where the lithium salt was present.

(TG-DTA)

The lithium-based solid electrolyte obtained in Example 5 was subjected to powder compaction molding at 27°C and an effective pressure of 200 MPa using a pressurization molding machine to produce a compacted powder body (pellet) (10 mmφ, thickness: 1 mm). The obtained compacted powder body was sandwiched between battery jigs, and subjected to freeze vacuum drying for 18 hours in a state in which a restraining pressure of 60 MPa was applied. The freeze-dried compacted powder body was pulverized, and the obtained 20 mg of powder was subjected to thermogravimetry differential thermal analysis (TG-DTA) under the following conditions.

· Device: "TG-DTA 2000S" manufactured by McScience Inc.
· Temperature program: 25°C (room temperature) to 800°C (slope: 10 °C/min)
· Measurement atmosphere: atmospheric air
· Sample weight: 20 mg
· Measuring container: Pt deep dish

Fig. 17 shows a chart obtained by the above-described TG-DTA measurement. In the obtained chart, a combustion peak appeared at a temperature of near 149°C. It is presumed that the combustion peak was derived from combustion of the Li salt (LiFSI). Since a combustion peak of LiFSI appeared near 120°C in a case where the TG-DTA measurement was performed under the above-described measurement conditions using LiFSI alone, in the compacted

powder body of the lithium-based solid electrolyte of Example 5, it is presumed that, as a result of interaction between the Li salt and BM-LBO247 ($Li_2B_4O_7$ subjected to a ball milling treatment) and/or water, the combustion peak may be shifted to a high temperature.

(TG-MS)

A compacted powder body of the lithium-based solid electrolyte obtained in Example 5 was produced according to the method described in (TG-DTA) above, and the obtained compacted powder body was freeze-dried. The freeze-dried compacted powder body was pulverized, and the obtained powder was subjected to thermogravimetry mass spectrometry (TG-MS) under the following conditions.

· Device: "STA2500" manufactured by NETCH, Ltd. and "JMS-Q1050GC" manufactured by JEOL Ltd.
· Temperature program: 40°C to 500°C (slope: 5 °C/min)
· Measurement atmosphere: He
· Sample weight: 84.46 mg
· Measuring container: Al deep dish
· Mass spectrometer: quadrupole mass spectrometer (QMS)
· Ionization device: EI 70-eV capillary (blank tube with an inner diameter of 0.32 mm)
· Scan range: 10 to 1,000 Da
· Transfer line temperature: 300°C

Fig. 18 shows a chart obtained by the above-described TG-MS measurement. In the obtained chart, a weight reduction was observed between 100°C and 137°C, and a component having a molecular weight of 18 was mainly detected during this period. As described above, since the component having a molecular weight of 18, which is presumed to be the water, was detected in the temperature range of higher than 100°C, it was suggested that the water (particularly, the water in the third state and in the fourth state) was present in the compacted powder body of the lithium-based solid electrolyte obtained in Example 5. In addition, a rapid decrease in weight was observed from 137°C. At the temperature, a component presumed to be derived from the combustion of the Li salt (LiFSI) was mainly detected, but the component having a molecular weight of 18 was also detected. From the above, it is presumed that there was a high possibility that the water bound to the Li salt was vaporized together with the combustion of the Li salt.
As a result of the measurement by the TG-MS, it was suggested that the water (particularly, the water in the third state and in the fourth state) may be constrained in a region where the Li salt was present in the lithium-based solid electrolyte according to the embodiment of the present invention.

($^1$H-NMR)

The powder of the lithium-based solid electrolyte obtained in Example 5 was placed in a sealed test tube in a nitrogen atmosphere, and $^1$H-NMR measurement was performed under the above-described conditions.
Fig. 11 shows a spectrum obtained by the above-described $^1$H-NMR measurement. From the obtained spectrum, a sharp peak and a broad peak were observed. From the above, in the lithium-based solid electrolyte of Example 5, it is presumed that there were hydrogen atoms having relatively high mobility corresponding to the sharp peak and hydrogen atoms having relatively low mobility corresponding to the broad peak.

($^{19}$F-NMR)

The powder of the lithium-based solid electrolyte obtained in Example 5 was placed in a sealed test tube in a nitrogen atmosphere, and solid $^{19F}$-NMR measurement was performed under the above-described conditions.
Fig. 19 shows a spectrum obtained by the above-described $^{19}$F-NMR measurement. As a result of the above-descried measurement, a sharp peak appeared in a range where the chemical shift was -200 to +300 ppm, and it is presumed that the lithium salt or the anion, which had relatively high mobility and contributed to the ion conductivity, was present.

(X-ray total scattering measurement)

Using the lithium-based solid electrolyte of each of Examples, the crystal powder of each of Comparative Examples, and the lithium compound of each of Reference Examples, X-ray total scattering measurement was performed using SPring-8 BL04B2 (acceleration voltage: 61.4 keV, wavelength: 0.2019 Å). The sample was sealed in a Capton capillary of 2 mmφ or 1 mmφ, and the experiment was performed. The obtained data were subjected to Fourier transform

as described above to obtain a reduced pair distribution function.

In the column of "Short distance G(r) in Table 2, as a result of the analysis of the reduced pair distribution function G(r) obtained from the X-ray total scattering measurement, a case where a first peak in which a peak top was located in a range where r is 1.43 ± 0.2 Å and a second peak in which a peak top was located in a range where r is 2.40 ± 0.2 Å were present, and both G(r) of the peak top of the first peak and G(r) of the peak top of the second peak were more than 1.0 is indicated by "A", and other cases are indicated by "B".

In Examples 1 to 6 shown in Table 2 and Examples 9 to 13 shown in Table 6, the value of G(r) at the peak top of the first peak was 1.2 or more.

In addition, in the column of "Long distance G(r) in Table 2, as the above-described reduced pair distribution function G(r), a case where the absolute value of G(r) was less than 1.0 in a range where r was more than 5 Å and 10 Å or less is indicated by "A", and other cases are indicated by "B".

(X-ray diffraction measurement)

X-ray diffraction measurement was performed on the lithium-based solid electrolyte of Examples, the crystal powder of Comparative Examples, and the lithium compound of Reference Examples, using a CuKα ray. The measurement conditions were set to 0.01 °/step and 3 °/min.

From a result of the measurement, in the obtained diffraction pattern, a case where the above-described requirement Y was satisfied is indicated by "A", and a case where the above-described requirement Y was not satisfied is indicated by "B".

In Examples 1 to 6 shown in Table 2 and Examples 7 to 13 shown in Table 6, in the X-ray diffraction pattern, none of the first peak, the second peak, the third peak, and the fourth peak were present, or the intensity ratio of at least one specific peak selected from the group consisting of the first peak, the second peak, the third peak, and the fourth peak was 2.0 or less.

In the column of "Element analysis" in Table 1, the composition of the lithium-based solid electrolyte obtained in each of Examples, which was specified by the above-described element analysis method, is indicated by a molar content amount of each element as a relative value in a case where the content of B is set to "4.00".

In the table, the column of "Water (%)" indicates the content of water (unit: % by mass) contained in the lithium-based solid electrolyte obtained in each of Examples.

The column of "Proportion of full-width at half maximum (%)" in the table indicates a proportion (%) of a full-width at half maximum of a peak in which a chemical shift appeared in a range of -100 to +100 ppm in the spectrum obtained in a case where the solid $^7$Li-NMR measurement of the lithium-based solid electrolyte obtained above was performed at 120°C with respect to a full-width at half maximum of a peak in which a chemical shift appeared in a range of -100 to +100 ppm in a spectrum obtained in a case where the solid $^7$Li-NMR measurement of the lithium-based solid electrolyte obtained above was performed at 20°C.

In the table, the column of "Proportion of area intensity" indicates a proportion of the area intensity of the second peak to the area intensity of the first peak described above. The column of "Numerical value (%)" indicates a specific numerical value, and the column of "Range" indicates which range the numerical value of each of Examples and Comparative Examples belong to according to the following standard (Range of proportion of area intensity). In Examples 3, 5, and 6, the column of "Numerical value (%)" does not indicate a numerical value, and the column of "Range" indicates which range a numerical value belongs to.

(Range of proportion of area intensity)

A: case where the proportion of the area intensity was 15% or more
B: case where the proportion of the area intensity was 0.5% or more and less than 15%
C: case where the proportion of the area intensity was less than 0.5%

In the table, the column of "Maximum absorption intensity ratio" indicates a ratio of the maximum absorption intensity in a wave number range of 3,000 to 3,500 $cm^{-1}$ to the maximum absorption intensity in a wave number range of 800 to 1,600 $cm^{-1}$ in the infrared absorption spectrum of the lithium-based solid electrolyte. The column of "Numerical value" indicates a specific numerical value, and the column of "Range" indicates which range the numerical value of each of Examples and Comparative Examples belong to according to the following standard (Range of maximum absorption intensity ratio). In Examples 3, 5, and 6, the column of "Numerical value" does not indicate a numerical value, and the column of "Range" indicates which range a numerical value belongs to.

(Range of maximum absorption intensity ratio)

A: case where the maximum absorption intensity ratio was 0.20 or more
B: case where the maximum absorption intensity ratio was less than 0.20

In the table, the column of "Maximum absorption intensity ratio (in $N_2$ atmosphere and heating at 90°C)" indicates a ratio of the maximum absorption intensity in a wave number range of 3,000 to 3,500 $cm^{-1}$ to the maximum absorption intensity in a wave number range of 800 to 1,600 $cm^{-1}$ in the infrared absorption spectrum obtained by heating the lithium-based solid electrolyte at 90°C for 5 minutes and then subjecting the lithium-based solid electrolyte after the heating treatment to an infrared absorption spectrum measurement.
In the table, regarding Examples 1 and 2, the column of "Coefficient of determination" indicates a coefficient of determination, which was obtained by performing linear regression analysis according to a least-squares method in a wave number range of 600 to 850 $cm^{-1}$ in a Raman spectrum.
In the column of "Requirement T" in the table, a case where the above-described requirement T was satisfied is indicated by "A", and a case where the above-described requirement T was not satisfied is indicated by "B". In the Raman spectrum of the lithium-based solid electrolyte of Examples 1 to 6, none of the first peak having a peak top at 710 to 730 $cm^{-1}$ and having a full-width at half maximum of 5 $cm^{-1}$ or more, the second peak having a peak top at 770 to 790 $cm^{-1}$ and having a full-width at half maximum of 5 $cm^{-1}$ or more, and the third peak having a peak top at 1,020 to 1,040 $cm^{-1}$ and having a full-width at half maximum of 5 $cm^{-1}$ or more, the peaks being specified in the requirement T, were present.
In the table, the column of "Mass reduction rate (%)" indicates the above-described mass reduction rate in a case where the lithium-based solid electrolyte was heated to 800°C.
In the tables, "-" means that the measured value is not obtained.
In Examples 1 to 6, the lithium compounds obtained by subjecting the $Li_2B_4O_7$ (247) powder (manufactured by RARE METALLIC Co., Ltd.) to a ball milling treatment all satisfied any of the above-described requirement $\alpha$, requirement $\beta$, requirement $\gamma$, and requirement $\delta$.
More specifically, in Examples 1 to 6, none of the first peak to the third peak which are specified in the requirement $\delta$ were present in the Raman spectrum of the lithium compound obtained by subjecting the $Li_2B_4O_7$ (247) powder (manufactured of RARE METALLIC Co., Ltd.) to the ball milling treatment.
In addition, in Examples 1 to 6, in the X-ray diffraction pattern of the lithium compound obtained by subjecting the $Li_2B_4O_7$ (247) powder (manufactured by RARE METALLIC Co., Ltd.) to the ball milling treatment, in which the X-ray diffraction pattern had been obtained from the X-ray diffraction measurement using a CuK$\alpha$ ray, none of the first peak to the fourth peak which are specified in the requirement $\alpha$ were present, or at least one specific peak selected from the group consisting of the first peak, the second peak, the third peak, and the fourth peak was present, and the intensity ratio of the at least one specific peak, which was calculated according to an intensity measuring method, was 2.0 or less.

[Table 1]

| | Element analysis | | | | | | |
|---|---|---|---|---|---|---|---|
| | Li | B | O | F | S | N | C |
| Example 1 | 1.94 | 4.00 | 10.66 | 0.03 | 0.02 | 0.01 | - |
| Example 2 | 2.04 | 4.00 | 11.09 | 0.06 | 0.05 | 0.02 | - |
| Example 3 | 2.50 | 4.00 | 19.90 | 0.95 | 0.98 | 0.49 | - |
| Example 4 | 2.70 | 4.00 | 20.90 | 1.36 | 1.38 | 0.69 | - |
| Example 5 | 3.00 | 4.00 | 17.10 | 1.95 | 1.98 | 0.99 | - |
| Example 6 | 2.90 | 4.00 | 21.45 | 5.00 | 1.90 | 0.95 | 1.90 |
| Reference Example 1 | 1.94 | 4.00 | 6.80 | - | - | - | - |
| Comparative Example 1 | 1.96 | 4.00 | 6.80 | - | - | - | - |

[Table 2]

| | Proportion of full-width at half maximum (%) | Proportion of area intensity | | Maximum absorption intensity ratio | | Maximum absorption intensity ratio (in $N_2$ atmosphere and heating at 90°C) | Coefficient of determination | Requirement T | Mass reduction rate (%) | Short distance G(r) | Long distance G(r) | X-ray diffraction measurement | Water (%) | Ion conductivity | |
|---|---|---|---|---|---|---|---|---|---|---|---|---|---|---|---|
| | | Numerical value (%) | Range | Numerical value | Range | | | | | | | | | 27°C (S/cm) | 60°C (S/cm) |
| Example 1 | 33 | 4 | B | 0.72 | A | - | 0.9974 | A | 29.8 | A | - | A | 29 | $1.5 \times 10^{-4}$ | $4.0 \times 10^{-4}$ |
| Example 2 | - | 15 | A | 0.64 | A | - | 0.9908 | A | 30 | A | - | A | 29 | $1.1 \times 10^{-3}$ | $4.0 \times 10^{-3}$ |
| Example 3 | - | - | A | - | A | - | - | A | - | A | - | A | 43 | $4.1 \times 10^{-3}$ | - |
| Example 4 | - | 29 | A | 0.50 | A | 0.37 | - | A | - | A | - | A | 40 | $4.7 \times 10^{-3}$ | - |
| Example 5 | - | - | A | - | A | - | - | A | - | A | - | A | 24 | $3.0 \times 10^{-3}$ | - |
| Example 6 | - | - | B | - | A | - | - | A | - | - | - | A | 30 | $7.4 \times 10^{-4}$ | - |
| Reference Example 1 | 46 | 0 | C | 0.08 | B | - | 0.9677 | A | - | A | A | A | 0 | $7.5 \times 10^{-9}$ | $7.5 \times 10^{-8}$ |
| Comparative Example 1 | 100 | 0 | C | 0.03 | B | - | 0.1660 | B | 0.2 | A | B | B | 0 | Undetectable | Undetectable |

As shown in the above tables, the lithium-based solid electrolyte according to the embodiment of the present invention exhibited a desired effect. In particular, it was found that the ion conductivity was approximately $10^{-5}$ $S \cdot cm^{-1}$ in the invention disclosed in JP2018-052755A, whereas the ion conductivity was more excellent in the present invention.

As shown in Table 1, it was found that the Li content was higher in Examples 3 to 6. The cause of the increase in the Li content is presumed to be that, in Examples 3 to 6, the method (the method 3 in the step 2B described above) of mixing an aqueous solution containing a lithium compound subjected to a mechanical milling treatment with an aqueous solution containing a lithium salt was performed, and according to this method, the amount of Li incorporated into the lithium-based solid electrolyte was increased since the mixing amount of $Li(FSO_2)_2N$ (LiFSI) could be increased. In addition, as shown in Table 2, it was found that the ion conductivity was further improved in Examples 3 to 6. The reason why the ion conductivity was improved is presumed to be that the Li compositional ratio (content proportion) was increased, and thus Li having high mobility was included in the increased Li, whereby Li having high mobility was increased as a whole.

In addition, as shown in the column of "Maximum absorption intensity ratio" and the column of "Maximum absorption intensity ratio (in $N_2$ atmosphere and heating at 90°C)" of Table 2, in Example 4, the ratio of the maximum absorption intensity in a wave number range of 3,000 to 3,500 $cm^{-1}$ to the maximum absorption intensity in a wave number range of 800 to 1,600 $cm^{-1}$ was decreased due to the heating treatment. This is presumed to be due to vaporization of water (mainly the water in the first state) contained in the lithium-based solid electrolyte.

In the reduced pair distribution function G(r) of the crystal powder of Comparative Example 1 obtained from the X-ray total scattering measurement, a first peak (corresponding to the B-O proximity) in which a peak top was located at 1.40 Å and a second peak (corresponding to the B-B proximity) in which a peak top was located at 2.40 Å were present, and G(r) of the peak top of the first peak and G(r) of the peak top of the second peak were 1.0 or more (see Fig. 20). In addition, other peaks in which peak tops were located at 3.65 Å, 5.22 Å, 5.51 Å, and 8.54 Å were present, and G(r) of the peak top of each of the peaks was 1.0 or more (see Fig. 20).

Meanwhile, in the reduced pair distribution function G(r) of the lithium compound of Reference Example 1 obtained from the X-ray total scattering measurement, a first peak (corresponding to the B-O proximity) in which a peak top was located at 1.40 Å and a second peak (corresponding to the B-B proximity) in which a peak top was located at 2.40 Å were present, and G(r) of the peak top of the first peak and G(r) of the peak top of the second peak were more than 1.0 or more. On the other hand, the absolute value of G(r) in a range where r was more than 5 Å and 10 Å or less was less than 1.0.

From these results, it was found that the peak of the long-distance ordered structure was reduced in a range where r was more than 5 Å and 10 Å or less due to the mechanical milling treatment. On the other hand, the peaks attributed to the interatomic distance of B-O and the interatomic distance of B-B, which were observed in the general lithium tetraborate crystal, were maintained even after the mechanical milling treatment. From the result, it is considered that, in the mechanical milling treatment, a structure (diborate structure), in which a $BO_4$ tetrahedron and a $BO_3$ triangle were present at a ratio of 1: 1, was maintained, where the structure (diborate structure) was included in the general lithium tetraborate crystal.

Fig. 21 shows the X-ray diffraction pattern of the crystal powder of Comparative Example 1. As shown in Fig. 21, in Comparative Example 1, the above-described requirement Y was not satisfied, and a plurality of peaks having a small width were observed. More specifically, the strongest peak corresponding to (1,1,2) plane was observed at a position of 21.78° in terms of the 2θ value. Other major diffraction peaks observed were a peak corresponding to (2,0,2) plane at a position of 25.54°, a peak corresponding to (2,1,3) plane at a position of 33.58°, and a peak corresponding to (3,1,2) plane at a position of 34.62°; and intensities of these three peaks were substantially the same. These peaks were derived from the crystalline component.

On the other hand, Fig. 22 shows the X-ray diffraction pattern of the lithium-based solid electrolyte of Example 4. As shown in Fig. 22, in Example 4, the requirement was satisfied even in a case where the intensity ratio of 5.0 specified in the requirement Y described above was set to 2.0. In Fig. 21, it can be seen that the existing crystalline component was non-crystalized due to the mechanical milling treatment, and the sharp peak derived from the lithium tetraborate crystal disappeared or was broadened.

(Measurement of ion conductivity (2))

The compacted powder body (pellet) (10 mmφ, thickness: 0.9 mm) of the lithium-based solid electrolyte obtained in Example 4 was vacuum-dried at 27°C under a restraint of 60 MPa, and a pressure change and an ion conductivity with respect to a vacuum drying time were evaluated.

The method of producing the compacted powder body and the evaluation of the ion conductivity were performed by the same methods as described in (Measurement of ion conductivity (1)) above, except that the In electrode was changed to a Ti electrode. The results are shown in Table 3.

[Table 3]

| Vacuum drying time (min) | Pressure (Pa) | Ion conductivity (27°C) (S/cm) |
|---|---|---|
| 0 | 101325 | $4.8 \times 10^{-3}$ |
| 5 | 200 | $3.8 \times 10^{-3}$ |
| 20 | 20 | $3.3 \times 10^{-3}$ |
| 50 | 10 | $2.6 \times 10^{-3}$ |
| 1080 | 15 | $5.7 \times 10^{-4}$ |

In the lithium-based solid electrolyte of Example 4, the OH stretching peak increased at 3,000 to 3,500 $cm^{-1}$ in the infrared absorption spectrum, and thus it is considered that a large number of OH groups and water were present. In addition, regarding the water, it is presumed that there was the water in the first state to the fourth state described above.

In the above-described evaluation, in order to confirm the presence of a substance having favorable ion conductivity in addition to the water in the first state and the second state, the pellets were first dried by vacuum drying under conditions in which the water in the first state was mainly vaporized, and then the pellets were dried under conditions in which the strength was increased, and the ion conductivity in each stage was evaluated.

As shown in Table 3, at a drying time of 5 minutes, the pressure was 200 Pa, and it is considered that the water in the first state was mainly in a vaporized state, but the ion conductivity was $3.8 \times 10^{-3}$ S/cm. Next, it was found that, even in a state in which the water in the first state and the second state was considered to be vaporized after vacuum drying under the conditions of a drying time of 1,080 minutes and a pressure of 15 Pa, the ion conductivity was $5.7 \times 10^{-4}$ S/cm, and it was found that a substance having favorable ion conductivity was present in addition to the water in the first state and the second state. Although the substance is not clear, it is presumed to be water (particularly, the water in the third state and the fourth state).

In addition, although the phenomenon that occurs in the drying process is not clear, as shown in Table 3, the pressure was 10 Pa in a drying time of 50 minutes, and water (particularly, the water in the third state and the fourth state) remained under this condition, and it is presumed that this water was gradually eliminated. Furthermore, the pressure was 15 Pa in a drying time of 1,080 minutes, and it is presumed that water (particularly, the water in the fourth state) having a property of being more difficult to vaporize remained.

From the above results, it is suggested that the water having favorable ion conductivity (particularly, the water in the third state and the fourth state) was present in the lithium-based solid electrolyte, from the viewpoint of exhibiting excellent ion conductivity even after the drying time was lengthened.

Furthermore, in a case where the temperature was increased to 100°C while maintaining the pressure, and the ion conductivity was measured, the ion conductivity was $1.2 \times 10^{-5}$ S/cm. As described above, even in a case where it is presumed that only water in the fourth state was present in the lithium-based solid electrolyte, the ion conductivity was exhibited.

(Measurement of ion conductivity (3))

The lithium-based solid electrolyte obtained in Example 5 was subjected to powder compaction molding at 27°C and an effective pressure of 200 MPa using a pressurization molding machine to produce a compacted powder body (pellet) (10 mmφ, thickness: 0.8 mm). The obtained compacted powder body was sandwiched between battery jigs, and subjected to vacuum drying at a temperature of 40°C and a pressure of 20 Pa for 15 hours in a state in which a restraining pressure of 60 MPa was applied, and then the ion conductivity was measured under temperature conditions shown in the table below. The ion conductivity of the compacted powder body was measured according to the method described in (Measurement of ion conductivity (1)) above, except that the In electrode was changed to the Al electrode of the above-described battery jig.

The obtained values of the ion conductivities at each temperature are shown in Table 4.

[Table 4]

| Measurement temperature (°C) | Ion conductivity (S/cm) |
|---|---|
| 0 | $1.1 \times 10^{-3}$ |
| -10 | $6.7 \times 10^{-4}$ |

As shown in Table 4, from the fact that, at a temperature condition of lower than 0°C, at least the water in the first

state contained in the compacted powder body was frozen, and at a temperature condition of -10°C, the water in the second state was further frozen, and from the fact that an ion conductivity of $6.7 \times 10^{-4}$ S/cm was measured at the temperature condition of -10°C, it is suggested that a substance having favorable ion conductivity was present in addition to the water in the first state and the water in the second state. Although the substance is not clear, it is presumed to be water (particularly, the water in the third state and the fourth state).

From the above results, it is suggested that the water having favorable ion conductivity (particularly, the water in the third state and the fourth state) was present in the lithium-based solid electrolyte, from the viewpoint of exhibiting excellent ion conductivity even under the temperature condition of -10°C.

(Karl Fischer measurement)

200 mg of each powder of the lithium-based solid electrolyte obtained in Example 5 was pressurized with a uniaxial press machine (200 MPa, 2 minutes) to obtain a compacted powder body. The obtained compacted powder body was put into a sealed cell and dried under atmospheric pressure for 1 month using silica gel enclosed in the cell in a state in which a pressure of 60 MPa was applied. The cell was opened in an argon atmosphere, approximately 5 to 10 mg of the dried sample was placed in a vial for measurement, and the vial was sealed. In addition, a vial bottle sealed under an environment in which the above-described sample was collected and sealed as a blank was also prepared. The vial bottle was set in a moisture vaporization device provided in a Karl Fischer measuring apparatus, and the moisture was vaporized by heating from room temperature (27°C) to 300°C. Thereafter, the amount of vaporized water was measured by a Karl Fischer titration method using an electrochemical titration-type moisture content measurement device.

As a result of the measurement, since the amount of water vaporized from the lithium-based solid electrolyte during the heating from room temperature to 200°C (the amount B of water vaporized) was larger than the amount of water vaporized from the lithium-based solid electrolyte during the heating from room temperature to 100°C (the amount A of water vaporized), it is suggested that the lithium-based solid electrolyte was strongly bound to the surroundings as compared with the water in the first state.

<Example 7>

Using a ball mill (P-7 manufactured by FRITSCH), $Li_2B_4O_7$ (247) powder (manufactured by RARE METALLIC Co., Ltd.) was subjected to ball milling under the following conditions, pot: made of stabilized zirconia (YSZ) (45 ml), pulverization ball: made of stabilized zirconia (YSZ) (average particle diameter: 5 mm, weight: 70 g), rotation speed: 530 rpm, amount of LBO powder (powdery $Li_2B_4O_7$ crystal (manufactured by RARE METALLIC Co., Ltd.)): 4.2 g, atmosphere: air, and treatment time of ball milling: 100 hours, thereby obtaining a lithium compound. The obtained lithium compound was added to water such that a powder concentration was 42% by mass, and the mixture was subjected to an ultrasonic treatment for 60 minutes to obtain a dispersion liquid 9.

Next, 7.12 g of $Li(F_3CSO_2)_2N$ (LiTFSI) was added to water such that a concentration of powder was 87% by mass, and the mixture subjected to an ultrasonic treatment for 60 minutes to obtain a solution 10.

The obtained dispersion liquid 9 and solution 10 were mixed, and stirred and mixed with a magnetic stirrer for 60 minutes. Subsequently, the obtained dispersion liquid was vacuum-dried at 40°C and 10 Pa for 15 hours to obtain powder of a lithium-based solid electrolyte. The obtained powder was allowed to stand in the air for a certain period of time, and then various evaluations were performed in the air in the same manner as in Example 1.

<Example 8>

Powder of a lithium-based solid electrolyte was obtained by the same method as in Example 7, except that the contents of water and $Li(F_3CSO_2)_2N$ (LiTFSI) in the obtained lithium-based solid electrolyte were changed to amounts described in the table later. The obtained powder was allowed to stand in the air for a certain period of time, and then various evaluations were performed in the air in the same manner as in Example 1.

<Examples 9 to 13>

Powder of a lithium-based solid electrolyte was obtained by the same method as in Example 7, except that $Li(F_3CSO_2)_2N$ (LiTFSI) was changed to $Li(FSO_2)_2N$ (LiFSI), and the contents of water and $Li(FSO_2)_2N$ (LiFSI) in the obtained lithium-based solid electrolyte were changed to amounts described in the table later. The obtained powder was allowed to stand in the air for a certain period of time, and then various evaluations were performed in the air in the same manner as in Example 1. The powder of the lithium-based solid electrolyte obtained in Example 13 was quickly subjected to various evaluations in the air after the vacuum drying treatment.

In Table 5, the column of "BM-LBO247", the column of "Li salt", and the column of "Water" indicate each

component in the powder obtained in each of Examples and Reference Example 1. Specifically, "BM-LBO247" represents $Li_2B_4O_7$ subjected to a ball milling treatment, and "Li salt" represents a lithium salt ($Li(F_3CSO_2)_2N$ (LiTFSI) or $Li(FSO_2)_2N$ (LiFSI)) used in each of Examples. The column of "Molar ratio" in the table indicates a relative molar ratio of each component in a case where the molar amount of BM-LBO247 is set to 1. For example, in the powder obtained in Example 7, the molar ratio of the Li salt to BM-LBO247 is 1, and the molar ratio of the water to BM-LBO247 is 12. In addition, the column of "Mass ratio" in the table indicates a relative mass ratio of each component in a case where the total mass of BM-LBO247, the Li salt, and water is set to 100. For example, the mass ratio of BM-LBO247, Li salt, and water contained in the powder obtained in Example 7 is 26:44:30.

The above-described molar ratio and mass ratio were calculated by the following method.

Regarding the analysis of each element in the obtained powder, quantitative analysis was performed by ICP-OES for lithium and boron or by combustion ion chromatography (combustion IC) for fluorine and sulfur, estimation was performed for N from the analytical mass of sulfur in consideration of the amount of each of atoms in the Li salt, the analytical masses of elements other than O were added together for O, and calculation was performed in terms of the difference from the total amount of the powder. In Examples 7 and 8, the amount of carbon was estimated from the analytical mass of sulfur in consideration of the amount of each of atoms in the Li salt.

The molar ratio of BM-LBO247 to the Li salt in the powder was calculated from a molar ratio of an element (for example, B) present only in BM-LBO247 and a molar ratio of an element (for example, a specific element) present only in the Li salt. In addition, the molar ratio of O contained in BM-LBO247 and the Li salt was subtracted from the molar ratio of O in the powder to calculate the molar amount of O derived from water; and the molar ratio of BM-LBO247 to water was calculated using the obtained molar amount of O derived from water and the molar amount of BM-LBO247.

The mass ratio of each component was calculated based on the calculated molar amount and molecular weight of each component.

In Examples 7 to 13, the lithium compounds obtained by subjecting the $Li_2B_4O_7$ (247) powder (manufactured by RARE METALLIC Co., Ltd.) to a ball milling treatment all satisfied the above-described requirement $\alpha$, requirement $\beta$, requirement $\gamma$, and requirement $\delta$.

More specifically, in Examples 7 to 13, none of the first peak to the third peak which are specified in the requirement $\delta$ were present in the Raman spectrum of the lithium compound obtained by subjecting the $Li_2B_4O_7$ (247) powder (manufactured of RARE METALLIC Co., Ltd.) to the ball milling treatment.

In addition, in Examples 7 to 13, in the X-ray diffraction pattern of the lithium compound obtained by subjecting the $Li_2B_4O_7$ (247) powder (manufactured by RARE METALLIC Co., Ltd.) to the ball milling treatment, in which the X-ray diffraction pattern had been obtained from the X-ray diffraction measurement using a CuK$\alpha$ ray, none of the first peak to the fourth peak which are specified in the requirement $\alpha$ were present, or at least one specific peak selected from the group consisting of the first peak, the second peak, the third peak, and the fourth peak was present, and the intensity ratio of the at least one specific peak, which was calculated according to an intensity measuring method, was 2.0 or less.

In addition, the lithium-based solid electrolytes obtained in Examples 7 to 13 satisfied the above-described requirement T, requirement X, and requirement Y.

[Table 5]

| | Molar amount | | | Mass ratio | | |
|---|---|---|---|---|---|---|
| | BM-LBO247 | Li salt | Water | BM-LBO247 | Li salt | Water |
| Reference Example 1 | 1 | 0 | 0 | 100 | 0 | 0 |
| Example 7 | 1 | 1 | 11 | 26 | 44 | 30 |
| Example 8 | 1 | 1.2 | 11 | 24 | 48 | 28 |
| Example 9 | 1 | 0.01 | 4 | 70 | 1 | 29 |
| Example 10 | 1 | 0.03 | 4 | 69 | 2 | 29 |
| Example 11 | 1 | 0.5 | 11 | 37 | 20 | 43 |
| Example 12 | 1 | 0.7 | 11 | 34 | 26 | 40 |
| Example 13 | 1 | 1 | 6 | 36 | 40 | 24 |

[Table 6]

| | Proportion of full-width at half maximum (%) | Proportion of area intensity | | Maximum absorption intensity ratio | | Maximum absorption intensity ratio (in $N_2$ atmosphere and heating at 90°C) | Coefficient of determination | Requirement T | Mass reduction rate (%) | Short distance G(r) | Long distance G(r) | X-ray diffraction measurement | Water (%) | Ion conductivity | |
|---|---|---|---|---|---|---|---|---|---|---|---|---|---|---|---|
| | | Numerical value (%) | Range | Numerical value | Range | | | | | | | | | 27°C (S/cm) | 60°C (S/cm) |
| Reference Example 1 | 46 | 0 | C | 0.08 | B | | 0.9677 | A | - | A | A | A | 0 | $7.5 \times 10^{-9}$ | $7.5 \times 10^{-8}$ |
| Example 7 | - | - | B | - | A | - | - | A | - | - | - | A | 30 | $7.4 \times 10^{-4}$ | - |
| Example 8 | - | - | B | - | A | - | - | A | - | - | - | A | 28 | $7.2 \times 10^{-4}$ | - |
| Example 9 | 33 | 4 | B | 0.72 | A | - | 0.9974 | A | 29.8 | A | - | A | 29 | $1.5 \times 10^{-4}$ | $4.0 \times 10^{-4}$ |
| Example 10 | - | 15 | A | 0.64 | A | - | 0.9908 | A | 30 | A | - | A | 29 | $1.1 \times 10^{-3}$ | $40 \times 10^{-3}$ |
| Example 11 | - | - | A | - | A | - | - | A | - | A | - | A | 43 | $4.1 \times 10^{-3}$ | - |
| Example 12 | - | 29 | A | 0.50 | A | 0.37 | - | A | - | A | - | A | 40 | $4.7 \times 10^{-3}$ | - |
| Example 13 | - | - | A | - | A | - | - | A | - | A | - | A | 24 | $3.0 \times 10^{-3}$ | - |

As shown in the above tables, the lithium-based solid electrolyte according to the embodiment of the present invention exhibited a desired effect.

<Example 21>

Using a ball mill (P-7 manufactured by FRITSCH), $Li_2B_4O_7$ (247) powder (manufactured by RARE METALLIC Co., Ltd.) was subjected to ball milling under the following conditions, pot: made of stabilized zirconia (YSZ) (45 ml), pulverization ball: made of stabilized zirconia (YSZ) (average particle diameter: 5 mm, weight: 70 g), rotation speed: 530 rpm, amount of LBO powder (powdery $Li_2B_4O_7$ crystal (manufactured by RARE METALLIC Co., Ltd.)): 4.2 g, atmosphere: air, and treatment time of ball milling: 100 hours, thereby obtaining a lithium compound. The lithium compounds obtained from a plurality of pots were recovered, and 5 g of the recovered lithium compound was added to water at a powder concentration of 42% by mass and subjected to an ultrasonic treatment for 60 minutes to obtain a dispersion liquid A1.

Next, 2.5 g of LiCl was added to water at a powder concentration of 40% by mass, and subjected to an ultrasonic treatment for 60 minutes to obtain a solution A2.

The obtained dispersion liquid A1 and solution A2 were mixed, and stirred and mixed with a magnetic stirrer for 60 minutes. Subsequently, the obtained dispersion liquid was vacuum-dried at 40°C and 10 Pa for 3.5 hours to obtain powder (lithium-based solid electrolyte). The obtained powder was allowed to stand in the air for a certain period of time, and then the following evaluations were performed in the air in the same manner as in Example 1.

<Examples 22 to 27>

Powder of a lithium-based solid electrolyte was obtained by the same method as in Example 21, except that LiCl was changed to the Li salt described in the table later, and the contents of water and the Li salt in the obtained lithium-based solid electrolyte were changed to amounts described in the table later. The obtained powder was allowed to stand in the air for a certain period of time, and then the following evaluations were performed in the air in the same manner as in Example 1.

In Table 7, the column of "BM-LBO247", the column of "Li salt", and the column of "Water" indicate each component in the powder obtained in each of Examples. Specifically, "BM-LBO247" represents $Li_2B_4O_7$ subjected to a ball milling treatment, and "Li salt" represents a lithium salt (LiCl, LiI, $Li_2SO_4$, or LiFSI) used in each of Examples. The column of "Molar ratio" in the table indicates a relative molar ratio of each component in a case where the molar amount of BM-LBO247 is set to 1.

Table 7 shows the value of the ion conductivity of the compacted powder body at a measurement temperature of 27°C, which was obtained by subjecting the lithium-based solid electrolyte obtained in each of Examples to powder compaction molding at an effective pressure of 200 MPa, 27°C (room temperature). The ion conductivity of each compacted powder body was measured according to the method described in (Measurement of ion conductivity (1)) above.

As a result of measuring the content of water contained in the lithium-based solid electrolytes obtained in Examples 21 to 27 in the same manner as in Examples 1 to 6, the content of water was 20% to 40% by mass with respect to the total mass of the lithium-based solid electrolyte in all cases.

In addition, in the same manner as in Example 5, a compacted powder body was produced using the lithium-based solid electrolytes obtained in Examples 21 to 27, and as a result of performing the SEM-EDX analysis on a cross section of the obtained compacted powder body, it was confirmed that a network structure was formed in a region where the lithium salt was present.

In Examples 21 to 27, the lithium compounds obtained by subjecting the $Li_2B_4O_7$ (247) powder (manufactured by RARE METALLIC Co., Ltd.) to a ball milling treatment all satisfied the above-described requirement $\alpha$, requirement $\beta$, requirement $\gamma$, and requirement $\delta$.

More specifically, in Examples 21 to 27, none of the first peak to the third peak which are specified in the requirement $\delta$ were present in the Raman spectrum of the lithium compound obtained by subjecting the $Li_2B_4O_7$ (247) powder (manufactured of RARE METALLIC Co., Ltd.) to the ball milling treatment.

In addition, in Examples 21 to 27, in the X-ray diffraction pattern of the lithium compound obtained by subjecting the $Li_2B_4O_7$ (247) powder (manufactured by RARE METALLIC Co., Ltd.) to the ball milling treatment, in which the X-ray diffraction pattern had been obtained from the X-ray diffraction measurement using a CuK$\alpha$ ray, none of the first peak to the fourth peak which are specified in the requirement $\alpha$ were present, or at least one specific peak selected from the group consisting of the first peak, the second peak, the third peak, and the fourth peak was present, and the intensity ratio of the at least one specific peak, which was calculated according to an intensity measuring method, was 2.0 or less.

In addition, the lithium-based solid electrolytes obtained in Examples 21 to 27 satisfied the above-described requirement T, requirement X, and requirement Y.

[Table 7]

| | Molar ratio | | | | | Ion conductivity |
|---|---|---|---|---|---|---|
| | BM-LBO247 | Li salt | | | | 27°C (S/cm) |
| | | LiCl | LiI | $Li_2SO_4$ | LiFSI | |
| Example 21 | 1 | 2 | - | - | - | $2.0 \times 10^{-3}$ |
| Example 22 | 1 | 2 | - | - | 0.1 | $2.5 \times 10^{-3}$ |
| Example 23 | 1 | - | 1 | - | - | $8.4 \times 10^{-4}$ |
| Example 24 | 1 | - | 1 | - | 0.1 | $5.5 \times 10^{-4}$ |
| Example 25 | 1 | - | - | 1 | - | $2.7 \times 10^{-4}$ |
| Example 26 | 1 | - | - | 0.2 | 0.8 | $1.0 \times 10^{-3}$ |
| Example 27 | 1 | - | - | 0.8 | 0.2 | $3.3 \times 10^{-4}$ |

As shown in the above table, the lithium-based solid electrolyte according to the embodiment of the present invention exhibited a desired effect.

Explanation of References

1: negative electrode collector
2: negative electrode active material layer
3: solid electrolyte layer
4: positive electrode active material layer
5: positive electrode collector
6: operation portion
10: all-solid-state lithium ion secondary battery

## Claims

**1.** A lithium-based solid electrolyte comprising:

amorphous lithium tetraborate;
water; and
a lithium salt,
wherein a content of the water is 45% by mass or less with respect to a total mass of the lithium-based solid electrolyte.

**2.** The lithium-based solid electrolyte according to claim 1,
wherein the lithium tetraborate has an O-H structure.

**3.** The lithium-based solid electrolyte according to claim 1,

wherein a molar ratio of a content of the lithium salt to a content of the lithium tetraborate is 0.001 to 1.5, and a molar ratio of the content of the water to the content of the lithium tetraborate is 1 to 12.

**4.** The lithium-based solid electrolyte according to claim 2,

wherein the lithium salt is a compound represented by Formula (1),

Formula (1) $$LiN(R_{f1}SO_2)(R_{f2}SO_2)$$

$R_{f1}$ and $R_{f2}$ each independently represent a fluorine atom or a perfluoroalkyl group.

**5.** The lithium-based solid electrolyte according to claim 1, wherein, in a case where a cross section of a molded body obtained by pressurizing the lithium-based solid electrolyte is observed with a scanning electron microscope, a region where the lithium salt is present is in a mesh shape.

**6.** A lithium-based solid electrolyte comprising:

amorphous lithium tetraborate; and
a lithium salt,
wherein, in a case where a cross section of a molded body obtained by pressurizing the lithium-based solid electrolyte is observed with a scanning electron microscope, a region where the lithium salt is present is in a mesh shape.

**7.** The lithium-based solid electrolyte according to claim 6, wherein the lithium tetraborate has a hydroxyl group.

**8.** The lithium-based solid electrolyte according to claim 6,

wherein the lithium salt is a compound represented by Formula (1),

Formula (1) $LiN(R_{f1}SO_2)(R_{f2}SO_2)$

$R_{f1}$ and $R_{f2}$ each independently represent a fluorine atom or a perfluoroalkyl group.

**9.** A method for producing the lithium-based solid electrolyte according to any one of claims 1 to 8, the method comprising:

a step 1 of subjecting a lithium-based oxide containing Li and B to a mechanical milling treatment;
a step 2 of mixing the product obtained in the step 1 with water; and
a step 3 of removing water from the dispersion liquid obtained in the step 2 to obtain the lithium-based solid electrolyte,
wherein any one of the following requirements 1 to 3 is satisfied,
the requirement 1: the mechanical milling treatment of the step 1 is performed in a presence of a lithium salt containing one or more lithium salts selected from the group consisting of F, Cl, Br, I, S, P, Si, Se, Te, C, Sb, As, Sc, Y, Zr, Ti, Hf, and N,
the requirement 2: in the step 2, the product, the water, and the lithium salt are mixed with each other, and
the requirement 3: in the step 3, a product obtained by removing water from the dispersion liquid obtained in the step 2 is mixed with the lithium salt to obtain the lithium-based solid electrolyte.

**10.** The method for producing the lithium-based solid electrolyte according to claim 9, wherein, in the step 3, the dispersion liquid obtained in the step 2 is dried under a condition of 20 Pa or less and 40°C or lower to obtain the lithium-based solid electrolyte.

**11.** The method for producing the lithium-based solid electrolyte according to claim 9,

wherein the requirement 1 is satisfied, and
the method further includes, before the step 1, a step 0 of subjecting a lithium-based oxide containing Li and B to a mechanical milling treatment in an environment in which the lithium salt is not present.

**12.** A modified positive electrode active material comprising:

a positive electrode active material; and
a coating layer disposed on the positive electrode active material,
wherein the coating layer contains the lithium-based solid electrolyte according to any one of claims 1 to 8.

**13.** A modified negative electrode active material comprising:

a negative electrode active material; and
a coating layer disposed on the negative electrode active material,

wherein the coating layer contains the lithium-based solid electrolyte according to any one of claims 1 to 8.

**14.** An all-solid-state secondary battery comprising, in the following order:

a positive electrode active material layer;
a solid electrolyte layer; and
a negative electrode active material layer,
wherein at least one of the positive electrode active material layer, the solid electrolyte layer, or the negative electrode active material layer contains the lithium-based solid electrolyte according to any one of claims 1 to 8.

**15.** An electrode sheet for an all-solid-state secondary battery, comprising:
the lithium-based solid electrolyte according to any one of claims 1 to 8.

**16.** A solid electrolyte sheet comprising:
the lithium-based solid electrolyte according to any one of claims 1 to 8.

**17.** An electrode for an all-solid-state secondary battery, comprising:

an active material layer containing an active material and the lithium-based solid electrolyte according to any one of claims 1 to 8; and
a collector.

FIG. 1

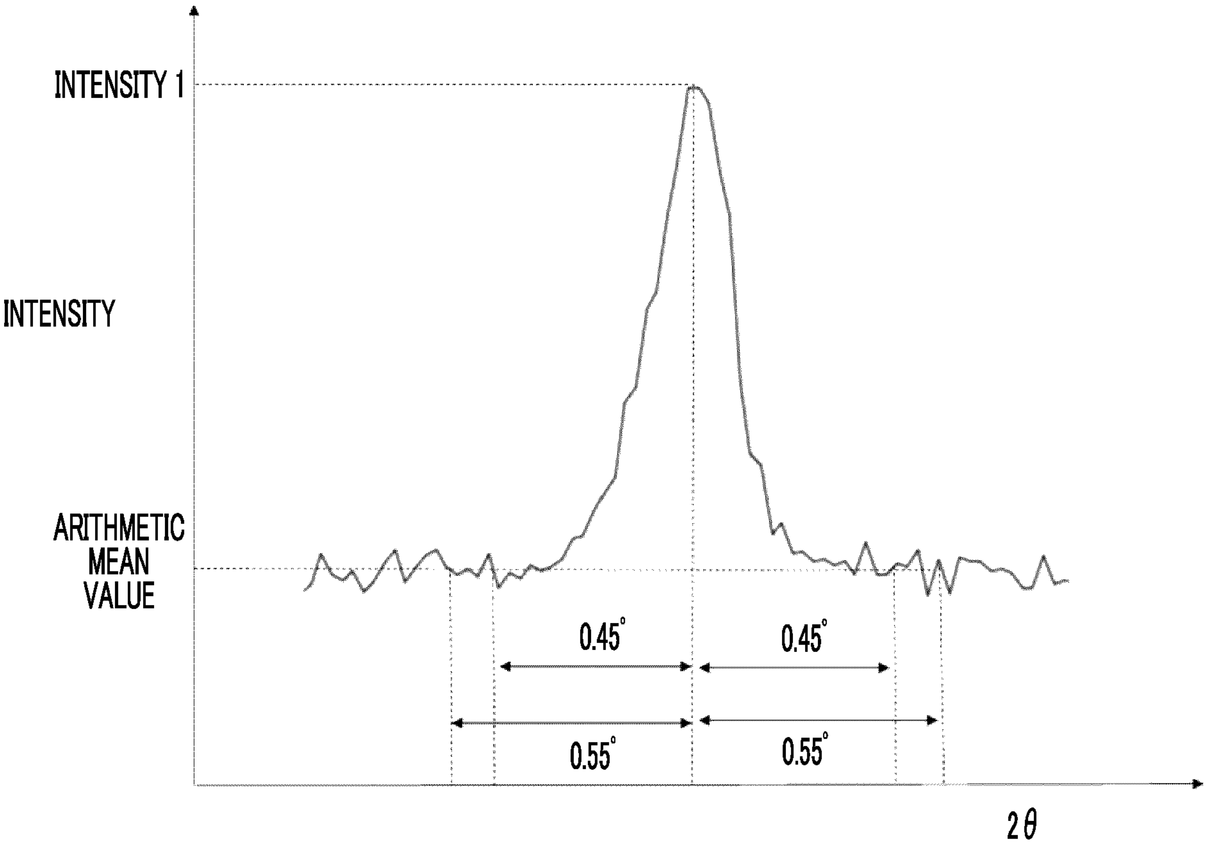
INTENSITY 1
INTENSITY
ARITHMETIC MEAN VALUE
0.45°
0.45°
0.55°
0.55°
2θ

FIG. 2

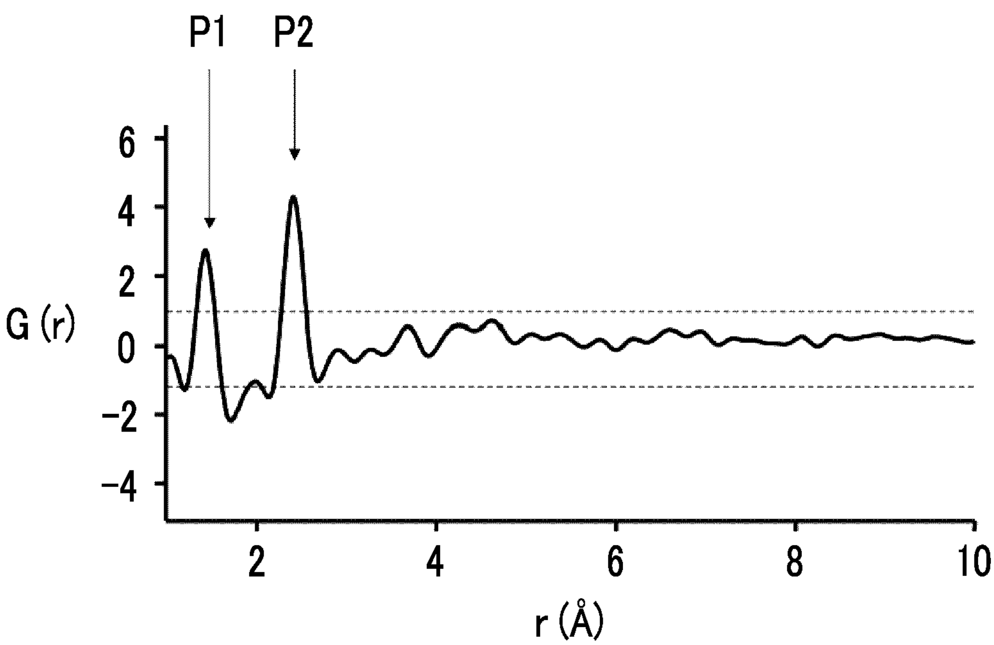
P1
P2
6
4
2
0
−2
−4
G (r)
2
4
6
8
10
r (Å)

FIG. 3

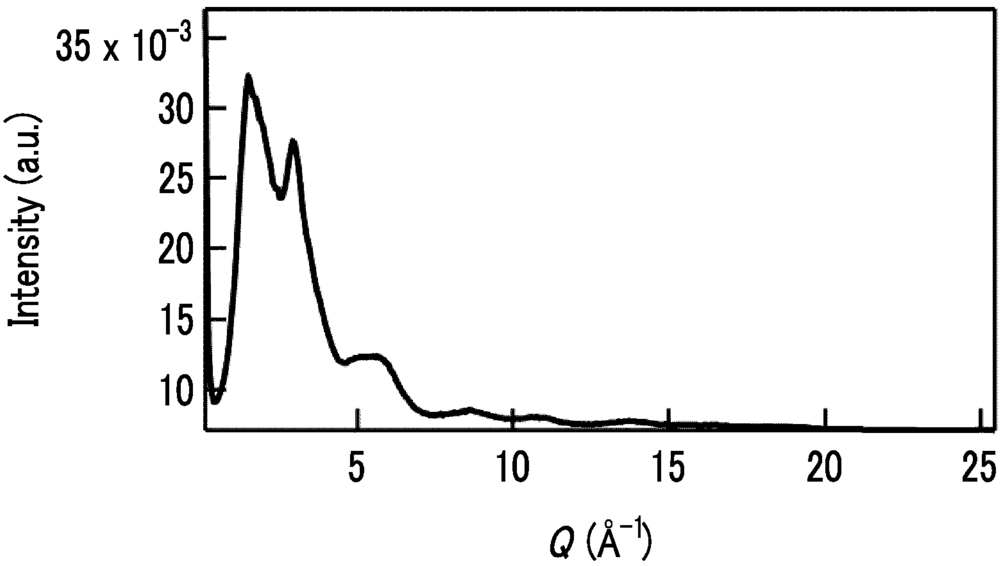
35 x 10$^{-3}$
30
25
20
15
10
Intensity (a.u.)
5
10
15
20
25
Q (Å$^{-1}$)

FIG. 4

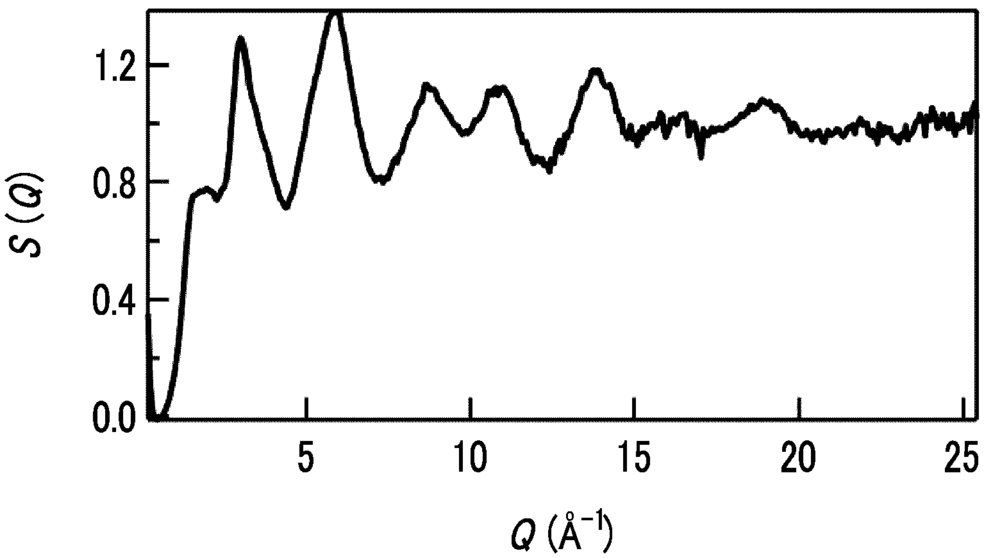
1.2
0.8
0.4
0.0
S (Q)
5
10
15
20
25
Q (Å$^{-1}$)

FIG. 5

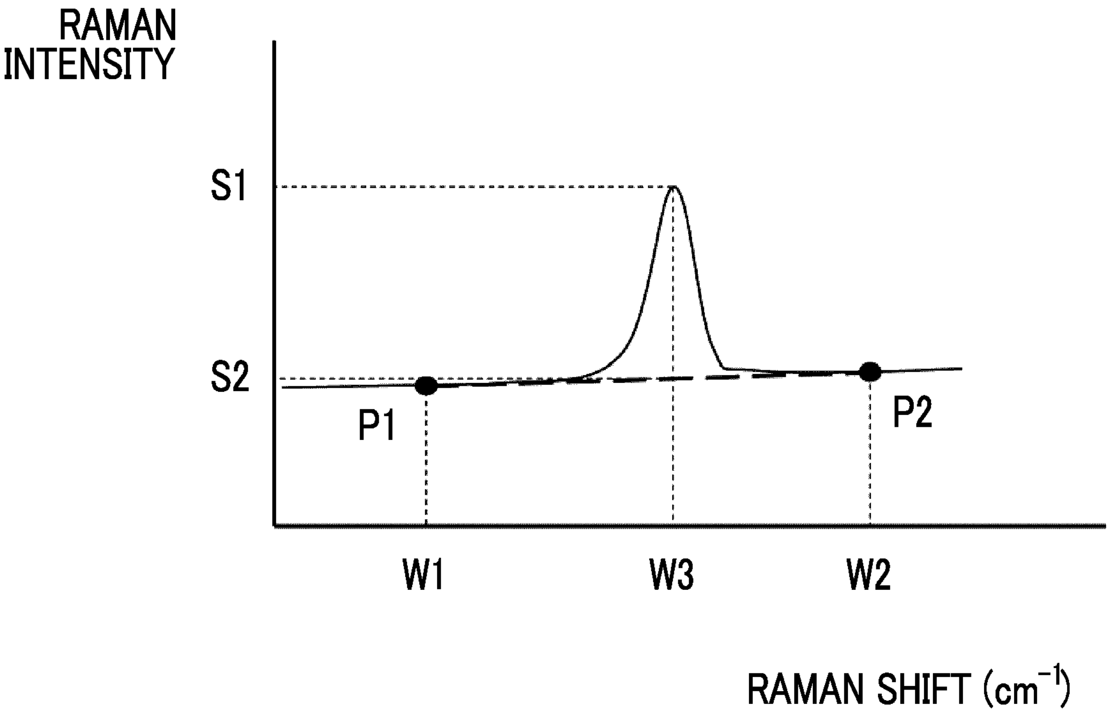
RAMAN
INTENSITY
S1
S2
P1
P2
W1
W3
W2
RAMAN SHIFT (cm⁻¹)

FIG. 6

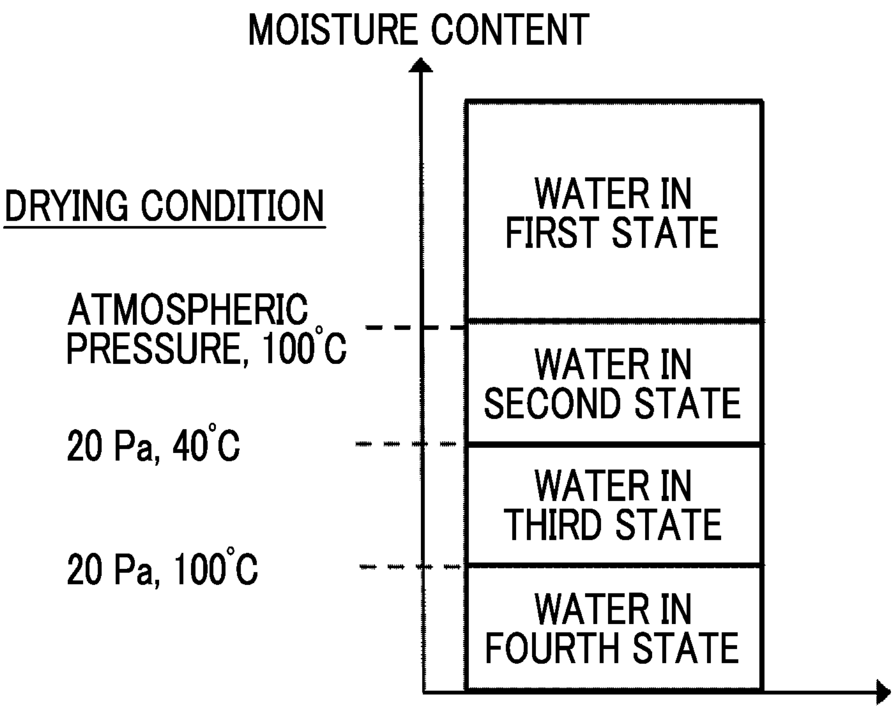
MOISTURE CONTENT
DRYING CONDITION
ATMOSPHERIC PRESSURE, 100°C
20 Pa, 40°C
20 Pa, 100°C
WATER IN FIRST STATE
WATER IN SECOND STATE
WATER IN THIRD STATE
WATER IN FOURTH STATE

FIG. 7

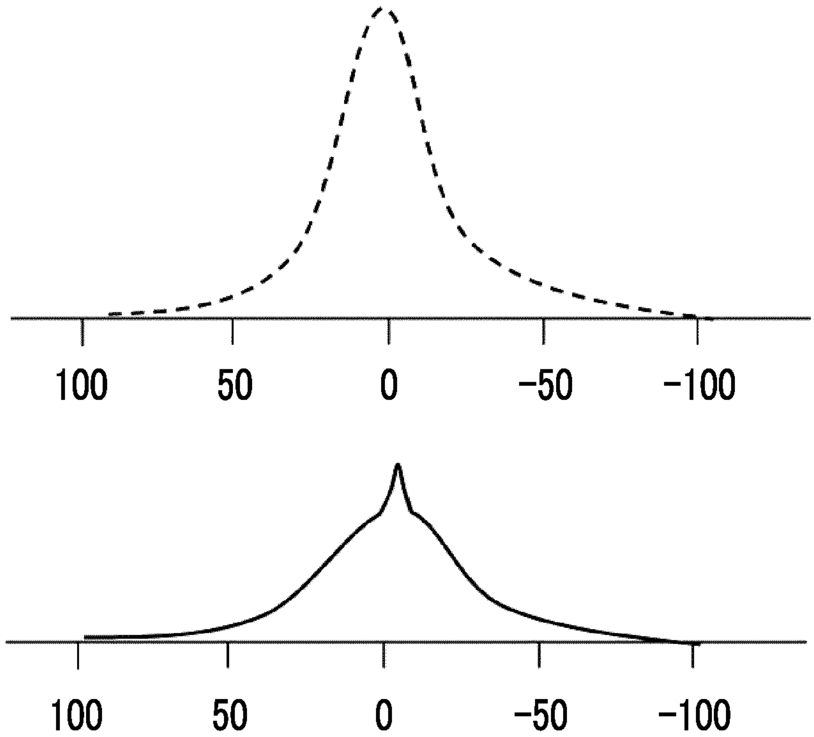


FIG. 8

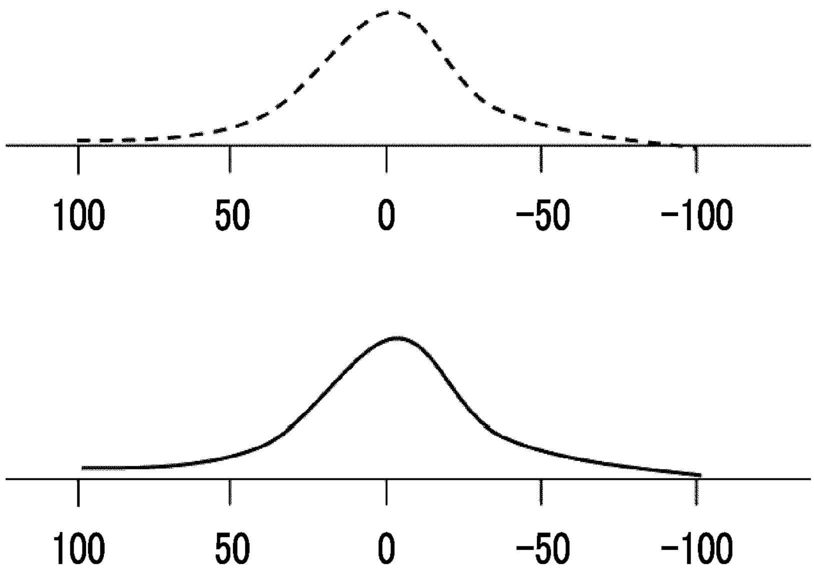

FIG. 9

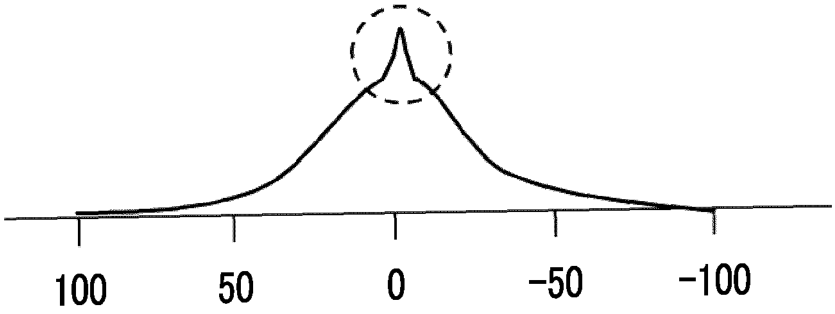


FIG. 10

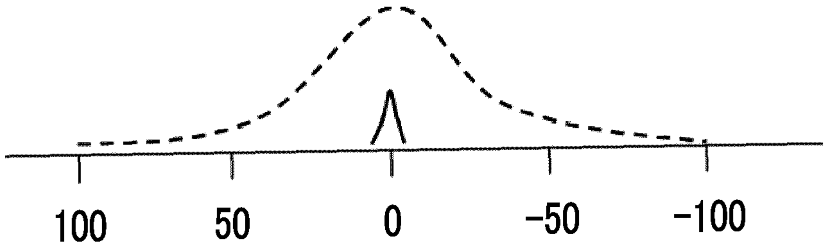


FIG. 11

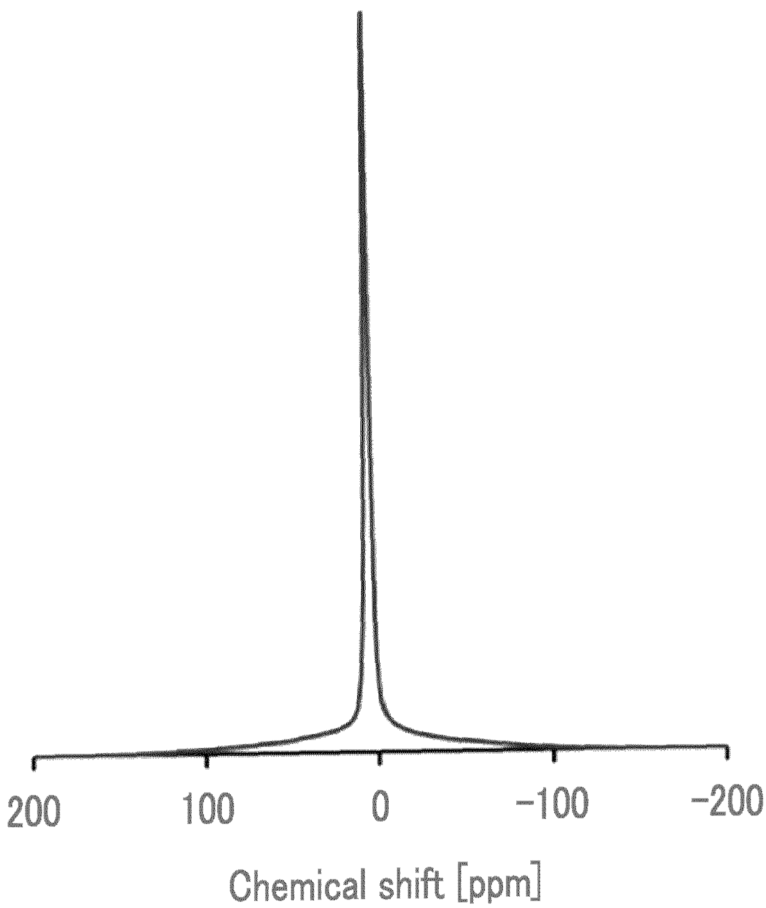

FIG. 12

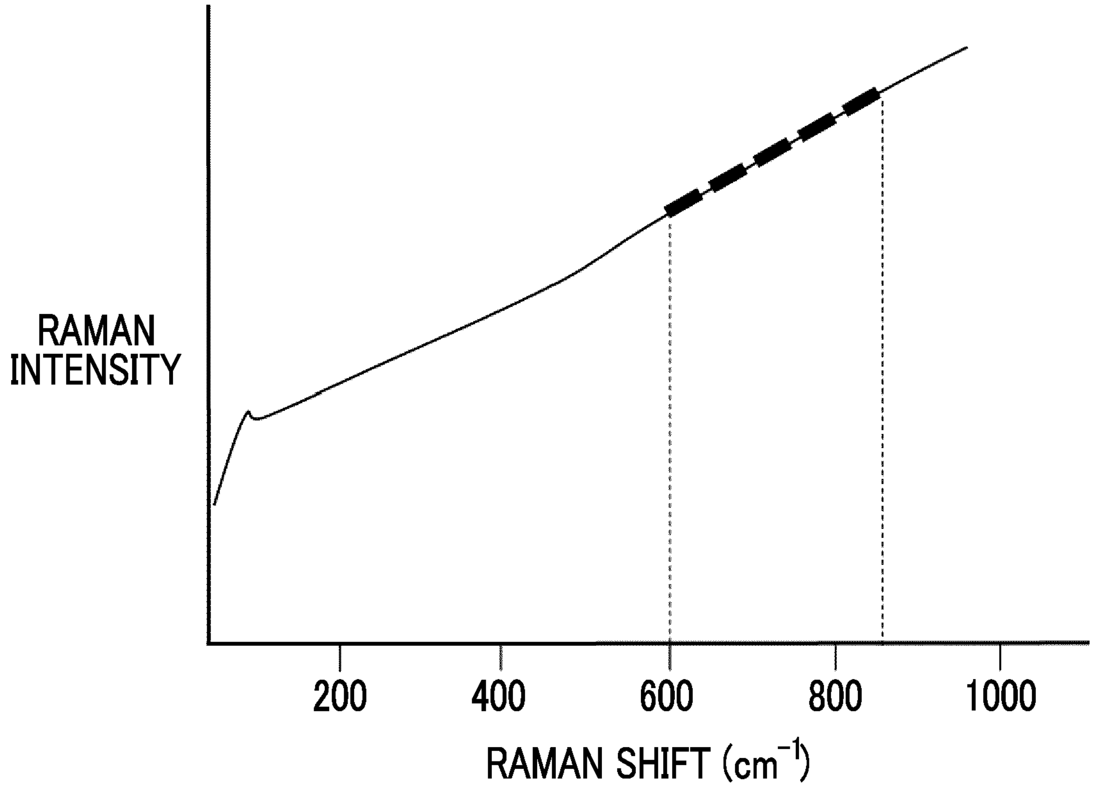
RAMAN INTENSITY
200
400
600
800
1000
RAMAN SHIFT (cm-1)

FIG. 13

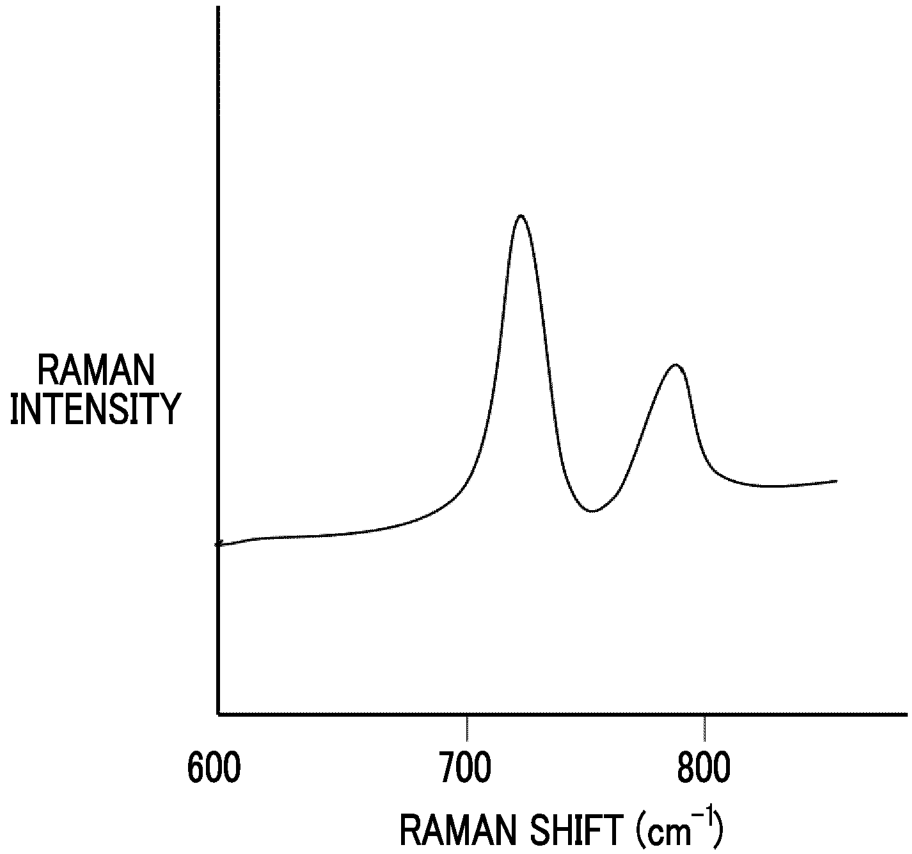
RAMAN INTENSITY
600
700
800
RAMAN SHIFT (cm-1)

FIG. 14

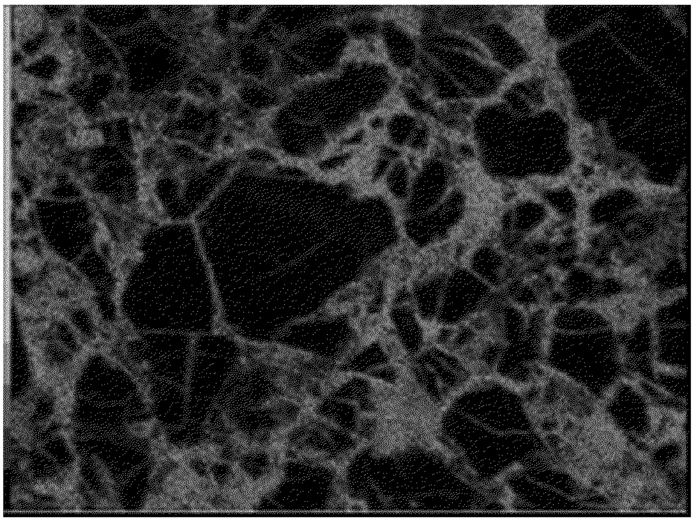

FIG. 15

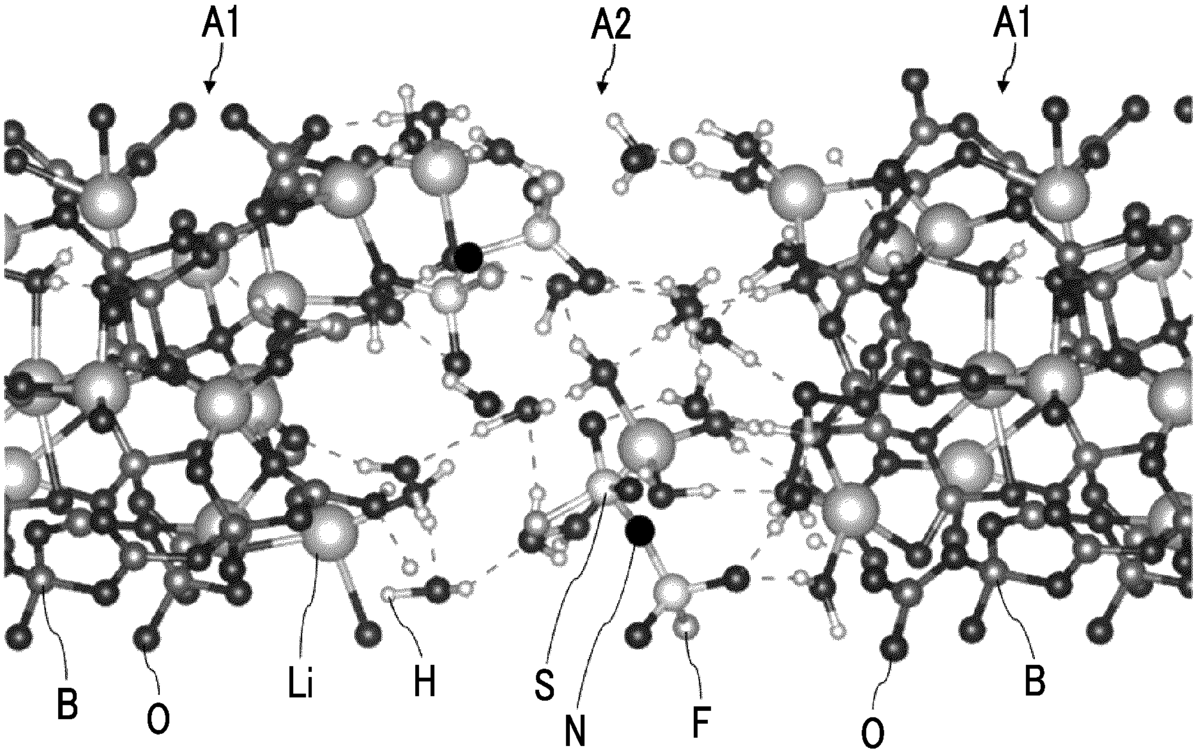

FIG. 16

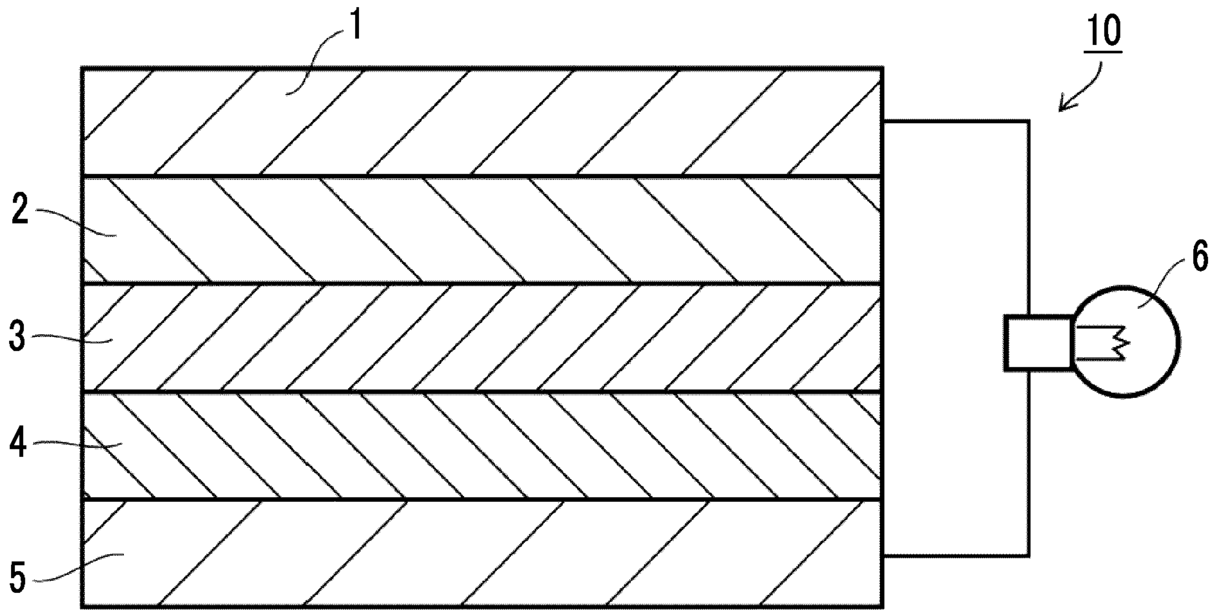
1
2
3
4
5
6
10

FIG. 17

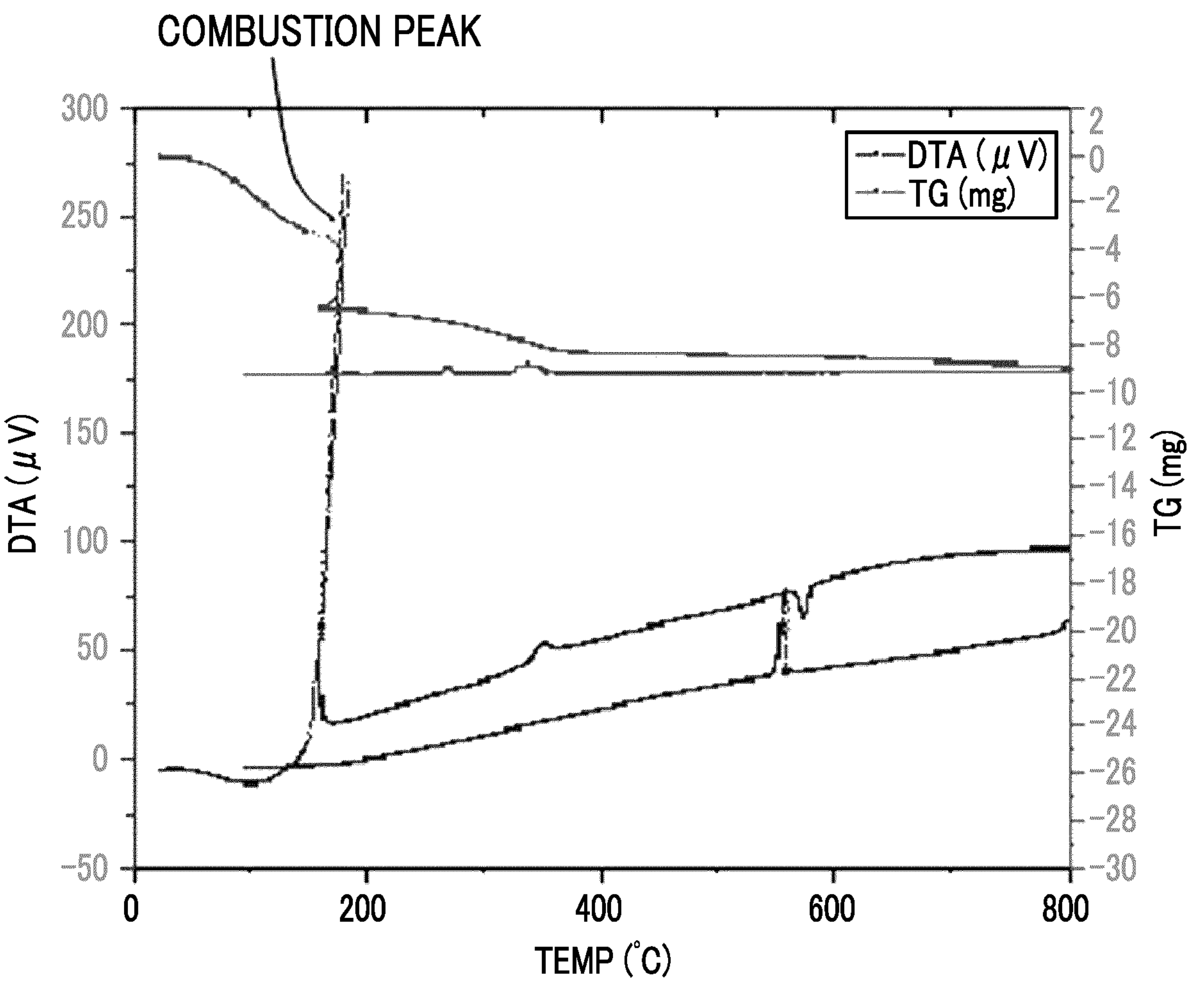
COMBUSTION PEAK
DTA (μV)
TG (mg)
TEMP (°C)
300
250
200
150
100
50
0
−50
2
0
−2
−4
−6
−8
−10
−12
−14
−16
−18
−20
−22
−24
−26
−28
−30
0
200
400
600
800

FIG. 18

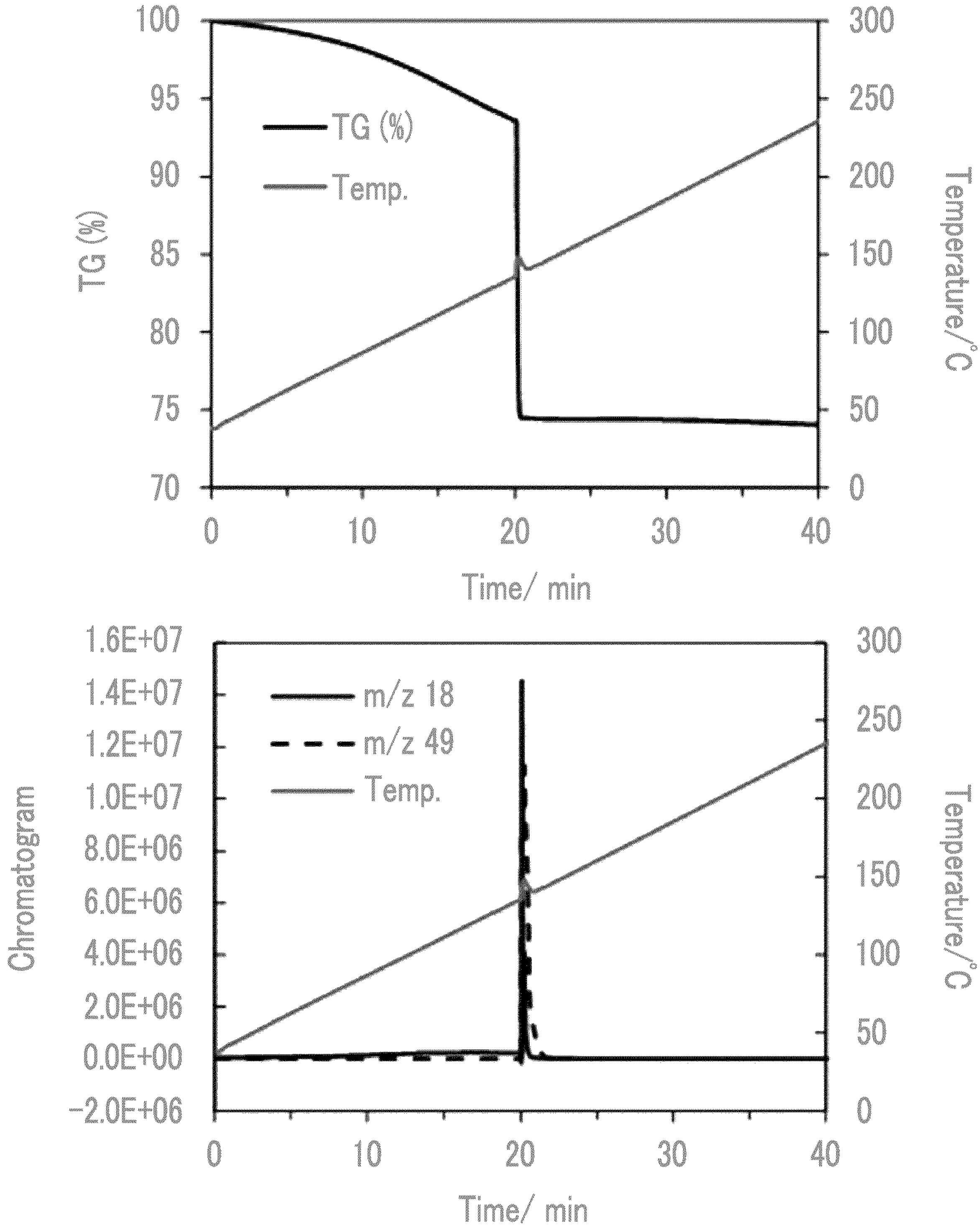
100
95
90
85
80
75
70
300
250
200
150
100
50
0
TG (%)
Temp.
TG (%)
Temperature/°C
0
10
20
30
40
Time/ min
1.6E+07
1.4E+07
1.2E+07
1.0E+07
8.0E+06
6.0E+06
4.0E+06
2.0E+06
0.0E+00
−2.0E+06
m/z 18
m/z 49
Temp.
Chromatogram
Temperature/°C
Time/ min

FIG. 19

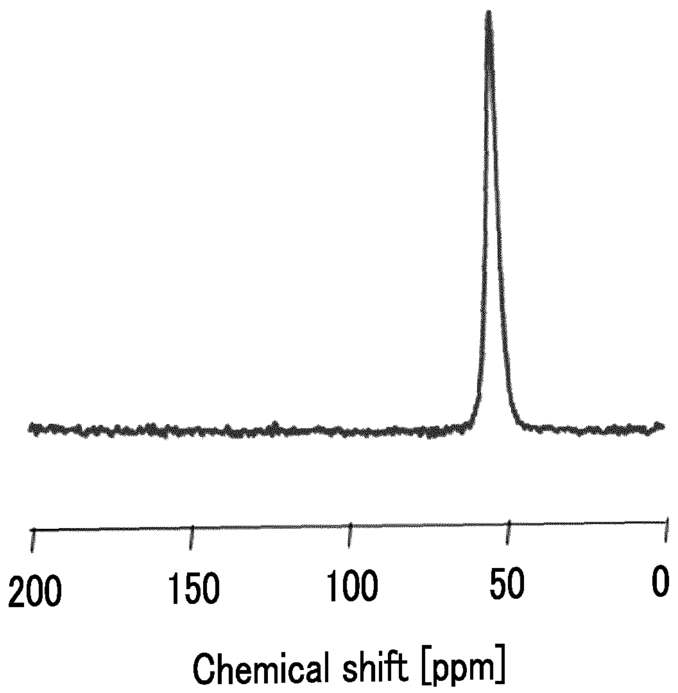
200
150
100
50
0
Chemical shift [ppm]

FIG. 20

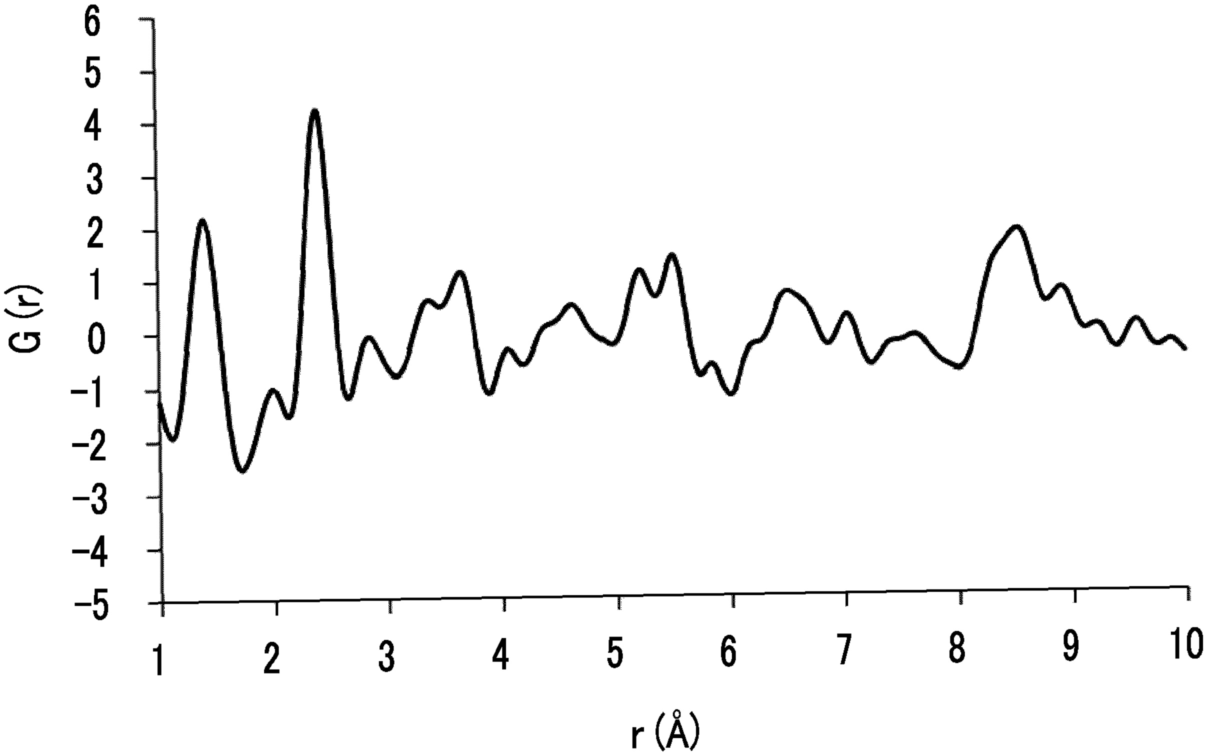
6
5
4
3
2
1
0
−1
−2
−3
−4
−5
G (r)
1
2
3
4
5
6
7
8
9
10
r (Å)

FIG. 21

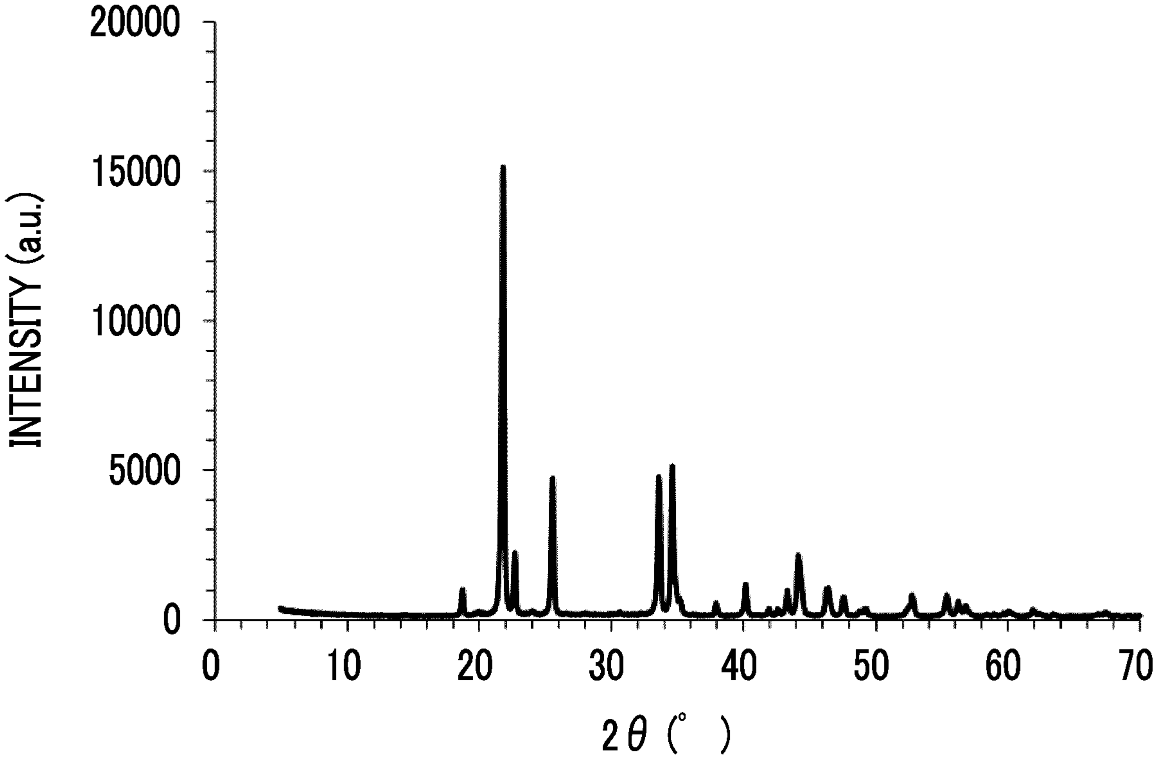
20000
15000
10000
5000
0
INTENSITY (a.u.)
0
10
20
30
40
50
60
70
2θ (° )

FIG. 22

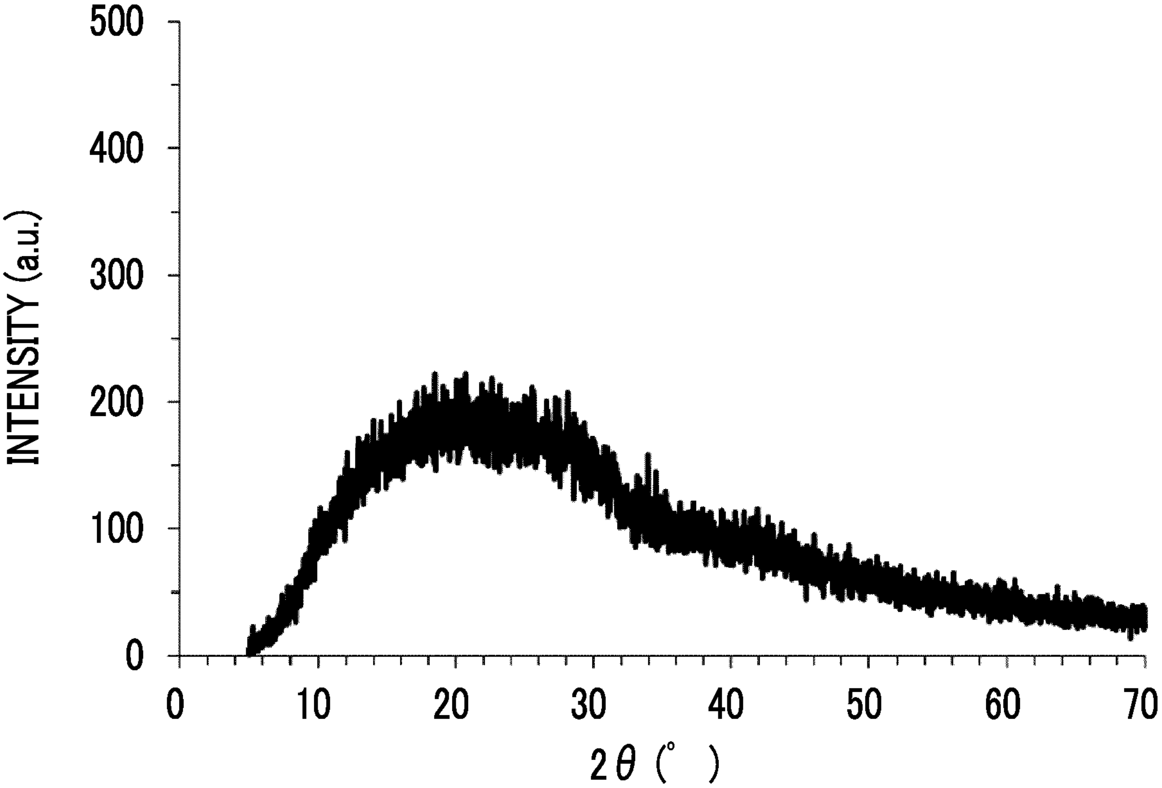
500
400
300
200
100
0
INTENSITY (a.u.)
0
10
20
30
40
50
60
70
2θ (° )

**INTERNATIONAL SEARCH REPORT**

International application No.
**PCT/JP2023/019713**

**A. CLASSIFICATION OF SUBJECT MATTER**

***H01M 10/0562***(2010.01)i; ***C01B 35/12***(2006.01)i; ***H01B 1/06***(2006.01)i; ***H01B 13/00***(2006.01)i; ***H01M 4/13***(2010.01)i; ***H01M 4/36***(2006.01)i; ***H01M 4/62***(2006.01)i; ***H01M 10/052***(2010.01)i
FI: H01M10/0562; C01B35/12 A; H01B1/06 A; H01B13/00 Z; H01M4/13; H01M4/36 C; H01M4/62 Z; H01M10/052

According to International Patent Classification (IPC) or to both national classification and IPC

**B. FIELDS SEARCHED**

Minimum documentation searched (classification system followed by classification symbols)

H01M10/0562; C01B35/12; H01B1/06; H01B13/00; H01M4/13; H01M4/36; H01M4/62; H01M10/052

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/193204 A1 (FUJIFILM CORP.) 30 September 2021 (2021-09-30) paragraphs [0068], [0080], [0135] | 1-17 |
| P, X | WO 2022/118870 A2 (FUJIFILM CORP.) 09 June 2022 (2022-06-09) claims 1-26, examples 3, 9, table 5 | 1-17 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 July 2023** | **25 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/019713**

| Patent document cited in search report | Publication date (day/month/year) | Patent family member(s) | Publication date (day/month/year) |
|---|---|---|---|
| WO 2021/193204 A1 | 30 September 2021 | US 2023/0018477 A1<br>paragraphs [0165]-[0173], [0204], [0343], [0344]<br>CN 115335923 A | |
| WO 2022/118870 A2 | 09 June 2022 | TW 202232818 A<br>KR 2023-0097134 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018052755 A
- JP 62022066 A
- JP S62022066 A
- JP 2006856 A
- JP H2006856 A
- JP 3045473 A
- JP H3045473 A
- JP 5090844 A
- JP H5090844 A
- JP 6004516 A
- JP H6004516 A


### Non-patent literature cited in the description


- **KOHJIRO KUBO et al.** *Ultrasonics*, 2015, vol. 62, 186-194
- Particle Diameter Analysis-Dynamic Light Scattering. *JIS Z8828*, 2013
- **KOHJIRO KUBO et al.** *Ultrasonics*, 2015, vol. 62, 168-194